# EUROPEAN PATENT APPLICATION

(11) **EP 4 831 918 A2**
(43) Date of publication of application: **28.10.2026**
(21) Application number: 26189776.3
(22) Date of filing: 07.10.2014
(51) Int. Cl.: G06T 7/277

(54) **METHODS AND SYSTEMS FOR DIGITALLY COUNTING FEATURES ON ARRAYS**

(30) Priority: 07.10.2013 US 201361887853 P
(62) Document number(s) of the earlier application(s) in accordance with Art. 76 EPC: 14786757.6 / 3 055 676
(71) Applicant: Augusta SpinCo Corporation, Milford, MA 01757 (US)
(72) Inventor: FU, Glenn, Dublin, 94568 (US); RUDOFF, Roger, Cupertino, 95014 (US); STERN, David, Mountain View, 94043 (US); WU, George, T., Belmont, 94002 (US); FODOR, Stephen, P.A., Palo Alto, 94301 (US); FACER, Geoff, Redwood City, 94061 (US)
(74) Representative: Carpmaels & Ransford LLP

(57) **Abstract**

Methods, systems and platforms for digital imaging of multiple regions of an array, and detection and counting of the labeled features thereon, are described.

## Description

### CROSS-REFERENCE

This application claims the benefit of U.S. Provisional Application No. 61/887,853, filed October 7, 2013, which application is incorporated herein by reference.

### BACKGROUND OF THE INVENTION

Array technologies have been widely used in biomedical studies for the detection of biomolecules and profiling of gene expression levels, etc. Arrays are typically comprised of immobilized probes which can bind to or hybridize with target molecules in a sample. Detection of binding or hybridization events is often achieved through the use of optical labels (e.g. fluorophores) and scanning or imaging techniques (e.g. fluorescence scanning or imaging). A feature on an array is a small region of immobilized probes that are specific for a given target molecule, e.g. probes that hybridize to specific DNA or RNA sequences. Identifying the pattern of labeled features on a hybridized array thus provides information about specific molecules, e.g. DNA or RNA molecules in the sample, which in turn can provide valuable data in biomedical studies. Two important engineering requirements for providing high quality, quantitative data for biomedical investigations are (i) to correctly image the hybridized arrays, and (ii) to correctly analyze the images to extract quantitative data. Existing optical imaging systems typically image one region of an array at a time, which can be a slow process if a number of different regions need to be imaged. In addition, current methods of image analysis typically determine a signal intensity level (i.e. an analog quantity) for each array feature. Intensity level measurements are often subject to a variety of instrumental drift and analysis errors, therefore improved methods for determining whether or not target molecules are bound to a given array feature, and improved methods for transforming that data into quantitative measures of the number of target molecules present in a sample, are of great importance to expanding the use of array technologies in biomedical applications.

### SUMMARY OF THE INVENTION

The methods, systems, and platforms of the present disclosure provide means for digital counting of labeled features on arrays, and thereby enable quantitative determination of the number of target molecules present in a sample through the use of stochastic labeling techniques.

Disclosed herein is an imaging platform comprising: (a) an optical instrument configured to generate an image of one or more regions of an array, wherein the array comprises a plurality of features, and wherein the plurality of features comprise a set of oligonucleotide probes, and wherein the oligonucleotide probes are complementary to a set of labels; and (b) a processor configured to perform image analysis, wherein the image analysis comprises: (i) reading the image generated by the optical instrument; (ii) locating the features of the array within the image; (iii) measuring a signal intensity for each feature; (iv) measuring a local background intensity for each feature; (v) calculating a local background corrected signal intensity for each feature using the signal intensity and local background intensities; (vi) analyzing the local background corrected signal intensities for the complete set of features to determine a dynamic signal intensity threshold for discriminating between labeled and non-labeled features; and (vii) calculating a number of target molecules present in a sample based on the number of labeled and non-labeled features detected and the predictions of the Poisson distribution. In some embodiments, the image generated by the optical instrument is a fluorescence image. In some embodiments, the image generated by the optical instrument is a phosphorescence image. In some embodiments, the image generated by the optical instrument is a transmitted light, reflected light, or scattered light image. In some embodiments, the image analysis further comprises reading an image that has been previously acquired and stored in a memory device. In some embodiments, locating the features of the array within the image comprises identifying predefined fiducial features on the array. In some embodiments, the calculation of a local background corrected signal intensity is performed by (i) centering a predefined analysis window on each feature within the image, (ii) calculating an intensity value statistic for signal and background pixels according to a predefined pattern of pixels within the feature, and (iii) utilizing the signal and background intensity value statistics to calculate a local background corrected signal intensity for each feature. In some embodiments, the intensity value statistic used for calculating a local background corrected signal intensity for each feature is selected from the list including, but not limited to, the mean, the median, or the ratio of signal to background intensities. In some embodiments, the analyzing of local background corrected signal intensities for the complete set of features to determine a dynamic signal intensity threshold comprises performing one or more statistical analyses selected from the list including, but not limited to, k-means clustering, k-medoids clustering, mixture model statistical analysis, or an empirical analysis. In some embodiments, the analyzing of local background corrected signal intensities for the complete set of features to determine a dynamic signal intensity threshold comprises fitting a model function to the intensity data by varying model parameters. In some embodiments, the analyzing of local background corrected signal intensities for the complete set of features to determine a dynamic signal intensity threshold comprises maximizing a quality metric relating to a statistical difference between intensities above the threshold and below the threshold.

In some embodiments, an array reader system comprising an output unit for calculating an absolute number of target molecules in a sample is described, wherein the array reader system is configured to read an array comprising a plurality of labeled and non-labeled features. In some embodiments, the array reader system may further comprise an optical imaging system. In some embodiments, the calculation of absolute number of target molecules in a sample is based on transforming optical image data produced by the optical imaging system into a count of the number of labeled and non-labeled features on an array. In some embodiments, the output unit comprises a digital processor and executable software, wherein the executable software comprises computer code for transforming optical image data into a count of the number of labeled and non-labeled features. In some embodiments, the array comprises a microarray, microscope slide, or microwell plate.

In some embodiments of the disclosed array reader system, the optical imaging system has a magnification of less than 1, equal to 1, or greater than 1. In some embodiments, the optical imaging system comprises a fluorescence imaging system. In some embodiments, the optical imaging system comprises a phosphorescence imaging system. In some embodiments, the optical imaging system comprises an imaging system that operates in a transmitted light, reflected light, or scattered light imaging mode, or combinations thereof. In some embodiments, the optical imaging system comprises one or more image sensors, wherein the one or more image sensors have a resolution of at least 320 x 240 pixels. In some embodiments, the one or more image sensors comprise CCD image sensors. In some embodiments the one or more image sensors comprise CMOS image sensors. In some embodiments, the one or more image sensors comprise one or more circuit boards. In some embodiments, the optical imaging system further comprises one or more components selected from the group including, but not limited to, a microscope objective, a camera lens, a finite-conjugate lens, an infinite-conjugate lens, a plano-convex lens, a double convex lens, a plano-concave lens, a double concave lens, an achromatic cemented doublet, or a bandpass filter. In some embodiments, the optical imaging system comprises a fluorescence imaging system that is designed for use with fluorescein, Cy3, Cy5, or phycoerythrin fluorophores. In some embodiments, the optical imaging system further comprises an illumination system including at least one light source, wherein the at least one light source is an LED or LED assembly. In some embodiments, the at least one light source is electronically synchronized with the image sensor, the at least one light source being turned on when the image sensor is acquiring an image and turned off when the image sensor is not acquiring an image.

In some embodiments of the disclosed array reader system, the illumination system is an off-axis illumination system that satisfies the Scheimpflug condition. In some embodiments, the illumination system is an off-axis illumination system does not satisfy the Scheimpflug condition. In some embodiments, the illumination system is an off-axis illumination subsystem comprising a Kohler illumination system. In some embodiments, the illumination system is an off-axis illumination system comprising an Abbe illumination system. In some embodiments, the illumination system is an epi-illumination system comprising a Kohler illumination system. In some embodiments, the illumination system is an epi-illumination system comprising an Abbe illumination system. In some embodiments, the illumination system is a trans-illumination system comprising a Kohler illumination system. In some embodiments, the illumination system is a trans-illumination system comprising an Abbe illumination system.

In some embodiments of the disclosed array reader system, the optical imaging system further comprises a translation stage, wherein the translation stage is a single-axis translation stage, a dual-axis translation stage, or a multi-axis translation stage.

In some embodiments of the disclosed array reader system, the optical imaging system and output unit are combined within a single, stand-alone instrument. In some embodiments, the optical imaging system and output unit are configured as separate instrument modules.

In some embodiments of the disclosed array reader system, executable software automatically locates features of the array within the acquired image. In some embodiments, the executable software also performs local background correction by (i) centering a predefined analysis window on each array feature within an image, (ii) calculating an intensity value statistic for signal and background pixels according to a predefined pattern of pixels within the feature, and (iii) utilizing the signal and background intensity value statistics to calculate a background corrected signal intensity value for each feature.

In some embodiments of the disclosed array reader system, executable software performs a k-means clustering analysis of the background corrected signal intensity values for the complete set of array features, thereby determining a dynamic signal intensity threshold for discrimination between labeled and non-labeled features of the array. In some embodiments, the executable software also performs a k-medoids clustering analysis of the background corrected signal intensity values for the complete set of array features, thereby determining a dynamic signal intensity threshold for discrimination between labeled and non-labeled features of the array.

In some embodiments, executable software performs a mixture model statistical analysis of the background corrected signal intensity values for the complete set of array features, thereby determining a dynamic signal intensity threshold for discrimination between labeled and non-labeled features of the array. In some embodiments, executable software also performs an empirical analysis based on sorting of background corrected signal intensity values for the complete set of array features, thereby determining a dynamic signal intensity threshold for discrimination between labeled and non-labeled features of the array. In some embodiments executable software performs an empirical analysis based on sorting of pairwise differences in background corrected signal intensity values for the complete set of array features, thereby determining a dynamic signal intensity threshold for discrimination between labeled and non-labeled features of the array. In some embodiments, an executable software module performs one or more statistical analyses of the background corrected signal intensity values for the complete set of array features, thereby determining a dynamic signal intensity threshold for discrimination between labeled and non-labeled features of the array, and wherein the one or more statistical analyses are selected from the list including, but not limited to, k-means clustering, k-medoids clustering, mixture model statistical analysis, or an empirical analysis.

In some embodiments of the disclosed array reader system, executable software calculates the absolute number of target molecules in a sample based on the number of labeled and non-labeled features detected and the predictions of the Poisson distribution. In some embodiments, executable software also calculates a confidence interval for the number of target molecules.

Also disclosed herein is a digital imaging platform comprising: (a) an optical instrument configured to generate an image of one or more regions of an array, wherein the array comprises a plurality of features comprising oligonucleotide probes, and wherein the oligonucleotide probes are complementary to a set of labels; and (b) a digital processor, wherein the digital processor is configured to perform image analysis comprising: (i) transforming background corrected signal intensities for a plurality of features to produce binary output data that determines the number of labeled and non-labeled features in the one or more regions of the array; and (ii) calculating a number of target molecules present in a sample based on the number of labeled and non-labeled features detected within the one or more regions of the array. In some embodiments, the image analysis further comprises automatically locating the features of the array within the image. In some embodiments, the image analysis further comprises correcting a signal intensity for each feature for a local background intensity. In some embodiments, the image analysis further comprises performing one or more statistical analyses of the corrected signal intensities for a plurality of features to define one or more dynamic signal intensity thresholds for the one or more regions of the array, where the statistical analyses are selected from the list including, but not limited to, k-means clustering, k-medoids clustering, mixture model statistical analysis, or an empirical analysis. In some embodiments, the calculation of the number of target molecules present in a sample is based on both the number of labeled and non-labeled features detected within the one or more regions of the array and on the predictions of the Poisson distribution.

Also disclosed herein is a non-transitory computer readable medium storing a program that calculates a number of labeled features on an array, wherein the array comprises a plurality of feature sets, and wherein individual features of a feature set comprise a set of oligonucleotide probes that are capable of hybridizing to a set of labels, the non-transitory computer readable medium comprising: (a) computer code that locates individual features of the array within a digital image of the array; (b) computer code that performs a local background correction of a signal intensity for one or more features; (c) computer code that analyzes the corrected signal intensity data for the complete set of features and determines a corrected signal intensity threshold; and (d) computer code that transforms the corrected signal intensity for the features into binary output data, thereby providing a count of the number of labeled features on the array. In some embodiments, the computer code for locating individual features of the array within the digital image comprises identifying predefined fiducial features on the array. In some embodiments, the computer code for performing a local background correction of signal intensity for each feature comprises a calculation utilizing a statistic for signal and background intensities selected from the list including, but not limited to, the mean, the median, or the ratio of signal to background intensities. In some embodiments, the computer code for analyzing corrected signal intensities for the complete set of features to determine a corrected signal intensity threshold comprises performing one or more statistical analyses selected from the list including, but not limited to, k-means clustering, k-medoids clustering, mixture model statistical analysis, or an empirical analysis.

Also disclosed herein is a computer implemented method for performing local background correction of array signal intensity data, the method comprising: (a) centering a predefined data analysis window on a feature within a digital image of the array; (b) calculating an intensity value statistic for signal and background pixels according to a predefined pattern of pixels within or around the array feature ; and (c) utilizing the signal and background intensity value statistics to calculate a background corrected signal intensity for the array feature. In some embodiments, the computer implemented method further comprises automatically locating the array feature using, e.g., a predefined set of fiducial features on the array. In some embodiments, the intensity value statistic used for calculation of a background corrected signal intensity is selected from the list including, but not limited to, the mean, the median, or the ratio of signal to background intensities.

Disclosed herein is a computer implemented method for determining a dynamic image intensity threshold for use in discriminating between labeled and non-labeled features on an array comprising a plurality of labeled and non-labeled features, the computer implemented method comprising: (a) measuring image intensity data for each feature of the array; (b) performing a local background correction on the image intensity data for each feature on the array; and (c) performing one or more statistical analyses of the background corrected image intensity data for the complete set of array features, thereby determining a dynamic image intensity threshold for discrimination between labeled and non-labeled features of the array, and wherein the one or more statistical analyses are selected from the list including, but not limited to, k-means clustering, k-medoids clustering, mixture model statistical analysis, or an empirical analysis.

Also disclosed is a mechanism comprising: (a) a closure; (b) a housing which magnetically holds the closure in a first position; and (c) a translation stage which magnetically holds the closure in a second position. In some embodiments, the mechanism further comprising a gasket positioned between the closure and the housing. In some embodiments, the gasket is attached to the closure. In some embodiments, the gasket is attached to the housing. In some embodiments, the closure and housing are substantially opaque, and the gasket creates a substantially light-tight seal between the closure and the housing in the first position. In some embodiments, one or more magnets are positioned to hold the closure onto the housing in the first position. In some embodiments, one or more magnets are positioned to hold the closure onto a first surface of the translation stage in the second position. In some embodiments, two or more pairs of mating locating features to align the closure with the translation stage in the second position. In some embodiments, two or more pairs of mating locating features to align the closure with the housing in the first position. In some embodiments, the pairs of mating locating features comprise conical pins and conical holes. In some embodiments, the housing comprises an optical instrument. In some embodiments, the translation stage includes a sample holder. In some embodiments, the sample holder is designed to hold a microscope slide, a microarray, or a microwell plate. In some embodiments, the closure is not hinged. In some embodiments, the closure is not attached to either the housing or the translation stage through the use of fasteners such as screws or clips. In some embodiments, the closure is not attached to either the housing or the translation stage through the use of an adhesive. In some embodiments, the closure does not use a latch or mechanical lock.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**Figures 1A-1G** show one example of an optical system, and components thereof. Figure 1A depicts an isometric projection of the exemplary optical system. Figure 1B depicts a top view of the optical system. Figure 1C depicts a dimetric view of the optical system. Figure 1D depicts a front view of the optical system. Figure 1E depicts a side view of the exemplary optical system comprising a single axis stage, an imaging system, and an illumination system. Figure 1F depicts a back view of the optical system. Figure 1G depicts components that control the operation of the optical system.
**Figure 2** shows an exemplary layout of lenses in an imaging system.
**Figure 3** shows an exemplary layout of lenses in an illumination system.
**Figure 4** shows a non-limiting example of the image data; in this case, **Figure 4A** shows an array image acquired from the optical instrument, and **Figure 4B** shows a histogram of intensities for individual features..
**Figure 5** shows a feature intensity distribution observed for hybridization of array probes with labeled target molecules in atitration experiment.
**Figure 6A** shows a noisy array image. **Figure 6B** shows the intensity distribution before background adjustment. **Figure 6C** shows the intensity distribution after background adjustment.

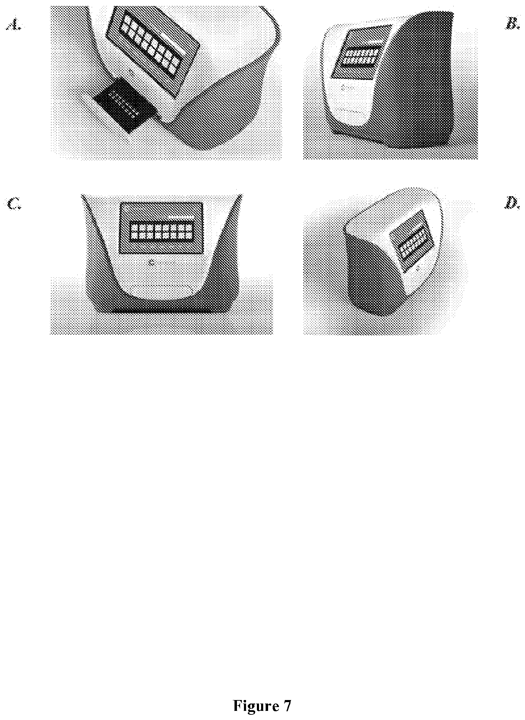

**Figures 7A-7D** show external views of instrument designed for digital counting of features on arrays.

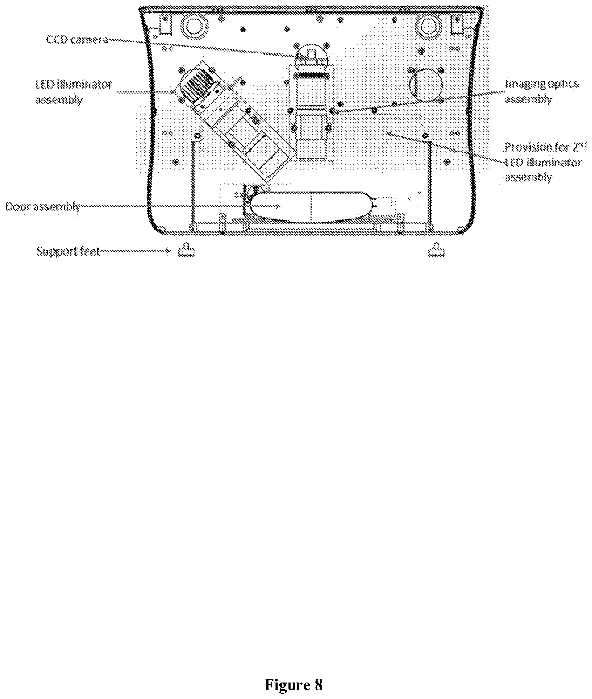

**Figure** 8 shows an internal view (front view; 3D CAD model) of an instrument designed for digital counting of features on arrays.

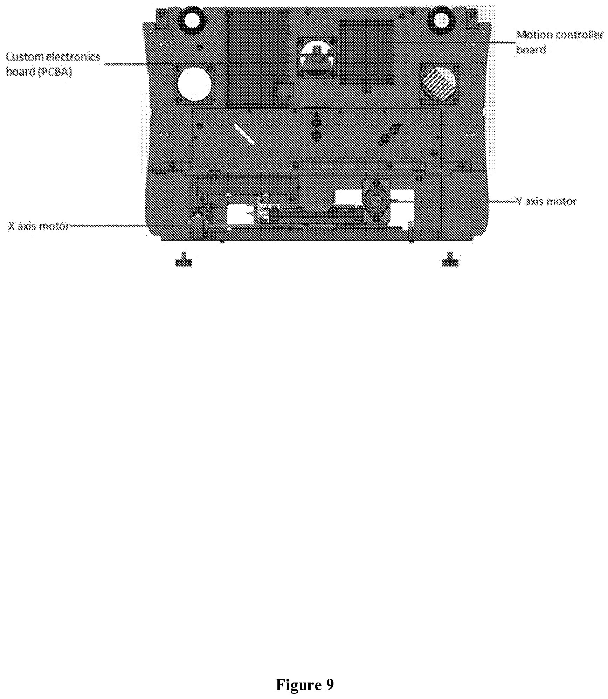

**Figure 9** depicts an internal view (rear view; 3D CAD model) of an instrument designed for digital counting of features on arrays.
**Figure 10** shows a photograph of a system with the sample loading stage in the extended (loading) position, having pulled the door away from the front panel. A Pixel16 array assembly is shown in the loading tray.
**Figure 11A** shows an exploded view of a door assembly that utilizes a magnetic mechanism for positioning a door on a sample compartment stage. Figure 11B shows another exploded view of the door assembly that illustrates conical locator features for ensuring proper alignment of the door with the stage.
**Figure 12** depicts an exploded view of an upper stage assembly with magnets which mate with a corresponding pair of magnets on the door.
**Figure 13** shows an exploded view of a front panel assembly with magnets which mate with a corresponding pair of magnets on the door.
**Figure 14** shows the viewing reference orientation for array production and analysis in one embodiment of an array, showing the 16 array locations on a glass substrate. Nominal dimensions are shown (in millimetres).
**Figure 15** shows the layout of features on one embodiment of an array. Nominal dimensions are shown (in millimetres).
**Figure 16** shows the layout of an array designed for digital counting of target molecules in a sample, including the positions of positive controls (fiducials), negative controls, and index spots.

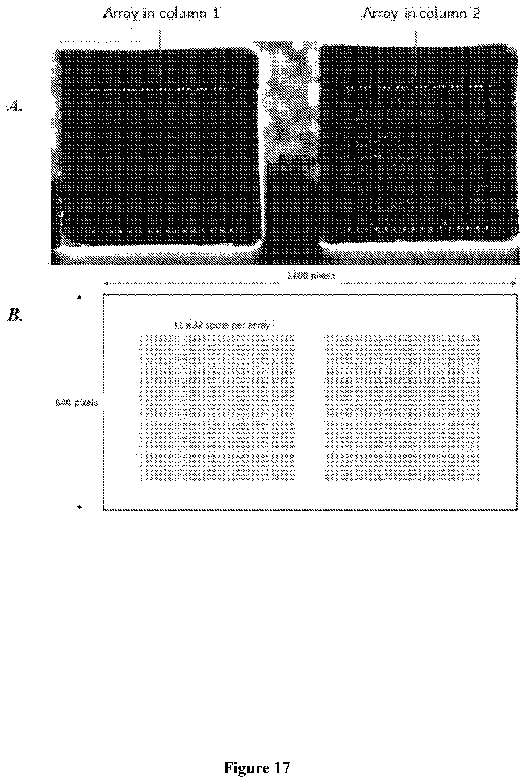

**Figures 17A-B** show (A) an example of an array image after transformation to the reference orientation and (B) the image size (in pixels) and a schematic of feature positions for the two-array image.

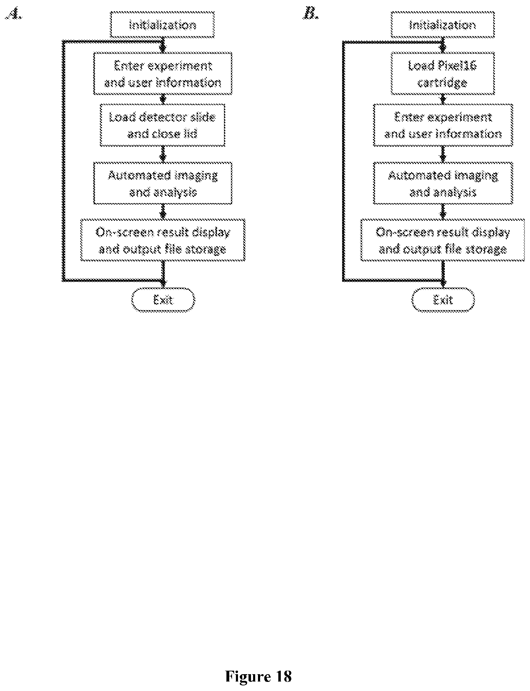

**Figures 18A-B** depict software workflows for performing an experiment on an instrument designed for digital counting of features on arrays. (A) Workflow for a single-axis system with manual sample loading, and (B) workflow for a dual-axis system with automatic sample tray loading.
**Figure 19** depicts an analysis window comprising a 12x12 pixel area associated with each feature in the array.
**Figure 20** depicts a map of the pixel designations within the analysis window for each feature in the array.
**Figure 21** depicts a scatter plot (upper) of intensity data obtained from an image of an array that illustrates the different categories of features identified by the analysis software, and a histogram (lower) of the feature intensity data. Dashed lines indicate examples of intensity thresholds determined by the software that are used to discriminate between labeled ("on") and non-labeled ("off") features.
**Figure 22** depicts a scatter plot (upper) and histogram (middle) of array feature intensity data that illustrate the use of an intensity threshold (dashed lines) that discriminate between labeled ("on") and non-labeled ("off") features of an array. In one embodiment of the presently described analysis methods, the threshold is determined from the maximum slope of a plot of sorted intensity data (lower).
**Figure 23** depicts the results of fitting a 3-component distribution model used to determine an intensity threshold in one embodiment to a 128-bin feature intensity histogram.
**Figure 24** illustrates deviance calculations for fitting one (left) or two (right) normal distributions to histograms of array feature instensity data. In some embodiments, deviance measurement may be used as a quality metric.
**Figure 25** depicts the uncertainties calculated for various methods of combining output data from replicate experiments.
**Figure 26** shows dilution series data for using digital counting of labeled features on an array to measure the number of target RNA molecules in a sample.
**Figure 27** shows a screenshot of the output data provided by the system software for a dilution series experiment. For each array used in the dilution series experiment, the software displays a histogram of feature intensity data with a blue line indicating the value of the threshold used for counting, overlaid on a digital representation of the array.

### DETAILED DESCRIPTION OF THE INVENTION

Array technologies have been widely used in biomedical studies for the detection of biomolecules and profiling of gene expression levels, etc. Arrays are typically comprised of immobilized probes which can bind to or hybridize with target molecules in a sample. Detection of binding or hybridization events is often achieved through the use of optical labels (e.g. fluorophores) and scanning or imaging techniques (e.g. fluorescence scanning or imaging). A feature on an array is a small region of immobilized probes that are specific for a given target molecule, e.g. probes that hybridize to specific DNA or RNA sequences. Identifying the pattern of labeled features on a hybridized array thus provides information about the presence of specific molecules, e.g. DNA or RNA molecules in the sample, which in turn can provide valuable data in biomedical studies. Two important engineering requirements for providing high quality, quantitative data for biomedical investigations are (i) to correctly image the hybridized arrays, and (ii) to correctly analyze the images to extract quantitative data. Existing optical imaging systems typically image one region of an array at a time, which can be a slow process if a number of different regions need to be imaged. In addition, current methods of image analysis typically determine an analog signal intensity level (i.e. a signal that can have any value between some minimum and maximum values that are determined by various instrumental and experimental parameters) for each array feature. Analog intensity level measurements are often subject to a variety of instrumental drift and analysis errors, therefore improved methods for determining whether or not target molecules are bound to a given array feature, and improved methods for transforming that data into quantitative measures of the number of target molecules present in a sample, are of great importance to expanding the use of array technologies in biomedical applications.

The advantages of the methods, systems, and platforms disclosed herein include: (i) simultaneous imaging of multiple regions of an array for higher throughput image acquisition, and (ii) improved methods for reduction of image data to a digital determination of the presence or absence of bound target molecules (or target molecule labels) for each feature of an array, thereby providing for improved quantitation in some types of array experiments, for example, those utilizing a set of stochastic labels for quantifying the number of target molecules present in a sample. The use of stochastic labeling techniques is described in U.S. patent 8,835,358 and PCT application US2011/065291, which are incorporated in their entirety herein by reference. In addition to providing a means for more quantitative detection of target molecules, the use of stochastic labeling techniques allows for mitigation of amplification bias in assays involving nucleic acid amplification.

Accordingly, disclosed herein are methods, devices, systems, and platforms for digital counting of labeled features on arrays comprising: (i) optical instruments configured to form images of one or more regions of an array, (ii) arrays comprising a plurality of features further comprising a plurality of probes, and wherein one or more regions of an array may comprise one or more sub-arrays, and wherein the arrays or sub-arrays are designed for use with sets of stochastic labels, and (iii) computer implemented methods for receiving input image data; locating array features within array images; correcting the signal intensity values associated with each feature for local background intensity values; determining dynamic signal intensity thresholds for the one or more array regions by performing statistical analyses of the corrected signal intensity data for a plurality of features; counting the number of labeled and non-labeled features on the one or more regions of the array by comparing corrected signal intensity data for the features to signal intensity thresholds; and calculating the number of target molecules in a sample, for one or more target molecule species, from the number of labeled and non-labeled features detected on the one or more regions of the array.

In some embodiments, systems are described which comprise: (i) an optical instrument (or reader) configured to form images of one or more regions of an array, (ii) a digital processor configured to perform executable instructions and store data in memory devices, and (iii) computer code for performing image analysis in order to transform image data into a digital count of the number of labeled and non-labeled features on the one or more regions of the array. In some embodiments, the computer code further comprises performing a calculation of the number of target molecules in a sample, for one or more target molecule species, from the number of labeled and non-labeled features detected on the one or more regions of the array.

In some embodiments, platforms are described which comprise: (i) arrays designed for use in stochastic labeling experiments, wherein the arrays comprise a plurality of features further comprising a plurality of probes, and wherein one or more regions of an array may comprise one or more sub-arrays, and wherein the arrays or sub-arrays are designed for use with sets of stochastic labels, (ii) an optical instrument (or reader) configured to form images of one or more regions of an array, (iii) a digital processor configured to perform executable instructions and store data in memory devices, and (iv) computer code for performing image analysis in order to transform image data into a digital count of the number of labeled and non-labeled features on the one or more regions of the array. In some embodiments, the computer code further comprises performing a calculation of the number of target molecules in a sample, for one or more target molecule species, from the number of labeled and non-labeled features detected on the one or more regions of the array.

In some embodiments, software applications (or computer code products) are described that determine the number of labeled features on an array, wherein the software application includes code for performing one or more of the following computer implemented methods: (i) receiving input image data, (ii) locating array features within array images, (iii) correcting the signal intensity values associated with each feature for local background intensity values, (iv) determining dynamic signal intensity thresholds for the one or more array regions by performing statistical analyses of the corrected signal intensity data for a plurality of features, (v) counting the number of labeled and non-labeled features on the one or more regions of the array by comparing corrected signal intensity data for the features to signal intensity thresholds, and (vi) calculating the number of target molecules in a sample, for one or more target molecule species, from the number of labeled and non-labeled features detected on the one or more regions of the array.

In some embodiments, computer implemented methods are described for performing local background correction of array signal intensity data, the methods comprising: (i) centering a predefined data analysis window on each array feature within a digital image of the array, (ii) calculating mean or median intensity values for signal and background pixels according to a predefined pattern of pixels within or around each array feature, and (iii) subtracting the mean or median background intensity from the mean or median signal intensity to determine a background corrected signal intensity value for each array feature.

In some embodiments, computer implemented methods are described for determining dynamic image intensity thresholds from the corrected image intensity data for a plurality of features on an array, the methods comprising: (i) collecting image intensity data for each feature of the array, (ii) optionally performing a local background correction on the image intensity data for each feature on the array; and (iii) performing one or more statistical analyses of the background corrected image intensity data for the complete set of array features, thereby determining a dynamic image intensity threshold for discrimination between labeled and non-labeled features of the array. In some embodiments, the one or more statistical analyses are selected from the list including, but not limited to, k-means clustering, k-medoids clustering, mixture model statistical analysis, or empirical analyses based on sorting of image intensity values or pairwise differences in image intensity values. As used herein, the term "dynamic intensity threshold" refers to a parameter that is determined based on an analysis of data derived from the experiment in progress. The use of a dynamic image intensity threshold for discrimination between labeled and non-labeled features of an array helps to minimize or eliminate errors in data processing that may arise from instrumental drift or experimental procedure.

### Definitions

Unless otherwise defined, all technical terms used herein have the same meaning as commonly understood by one of ordinary skill in the art in the field to which this disclosure belongs. As used in this specification and the appended claims, the singular forms "a," "an," and "the" include plural references unless the context clearly dictates otherwise. Any reference to "or" herein is intended to encompass "and/or" unless otherwise stated.

As used herein, the terms "system" and "platform" are used interchangeably. Similarly, the terms "image sensor", "imaging sensor", "sensor chip", and "camera" are used interchangeably to describe two dimensional photosensors used for imaging purposes, and the use of the terms "image intensity" and "signal intensity" are also used interchangeably in describing data analysis methods. Finally, unless otherwise stated, the terms "software", "software application", "software module", "computer program", and "computer code" are also used interchangeably.

### Stochastic Labeling Methods

The use of stochastic labeling techniques is described in U.S. patent 8,835,358 and PCT application US2011/065291, which are incorporated in their entirety herein by reference.

Briefly, high-sensitivity single molecule digital counting may be achieved through the stochastic labeling of a collection of identical target molecules. Each copy of a target molecule is randomly labeled using a large, non-depleting reservoir of unique labels. The uniqueness of each labeled target molecule is determined by the statistics of random choice, and depends on the number of copies of identical target molecules in the collection compared to the diversity of labels. The size of the resulting set of labeled target molecules is determined by the stochastic nature of the labeling process, and analysis of the number of labels detected then allows calculation of the number of target molecules present in the original collection or sample. When the ratio of the number of copies of a target molecule present to the number of unique labels is low, the labeled target molecules are highly unique (i.e. there is a very low probability that more than one target molecule will have been labeled with a given label), and the digital counting efficiency is high. This stochastic metholodology transforms the problem of counting molecules from one of locating and identifying identical molecules to a series of yes/no digital questions regarding detection of a set of predefined labels. In some embodiments, the labeled products are detected by means of DNA sequencing. In other embodiments, the labeled products for one or more target molecules of choice are detected with high specificity using the array readout systems described herein.

### Arrays and Features

Disclosed herein are arrays designed for use in stochastic counting of one or more target molecules in a sample. Arrays provide a means of detecting the presence of labeled target molecules, wherein the labels comprise a large and diverse set of unique labels.

In many embodiments, arrays comprise a plurality of features (or spots) on the surface of a substrate, wherein each feature further comprises a plurality of attached probes. In some embodiments, the array may comprise one or more regions, each of which may comprise a plurality of features or sub-arrays. For example, an array may comprise 2, 3, 4, 5, 6, 7, 8, 9, 10 or more regions, or alternatively, an array may comprise 15, 20, 25, 30, 35, 40, 45, 50 or more regions. In some embodiments, an array may comprise 60, 70, 80, 90, 100 or more regions. In other embodiments, an array may comprise hundreds, thousands, or tens of thousands of regions.

Non-limiting examples of arrays include microtiter plates, microwell plates, 16-well microscope slides, spotted microarrays, or microarrays fabricated by in situ solid-phase synthesis. A region of an array may comprise one well of a 16-well microscope slide, one well of a glass-bottomed 96-well plate, or one well of a glass-bottomed 384-well plate. Alternatively, a region of an array may comprise more than one well, for example, in some embodiments, a region may comprise 2 adjacent wells, 4 adjacent wells; or a larger number of wells positioned in close proximity to each other. In some embodiments, the arrays may comprise high-density oligonucleotide arrays with more than 1,000 features per square millimeter, and a region on the array may comprise a selected area of the array substrate surface, for example, an area of approximately 1 mm × 1 mm.

As indicated previously, in many embodiments, the set of probes attached to a set of features of an array are selected for detection of a specific set of unique labels designed for use in stochastic labeling studies. The attachment of the probes to the array substrate may be covalent or non-covalent, and permanent or temporary. A probe may be a sequence of monomers including, but not limited to, for example, deoxy-ribonucleotides, ribonucleotides, amino acids, or synthetic monomers, or they may be a sequence of oligomers, including, but not limited to, for example, oligonucleotides (e.g. DNA or RNA sequences) or peptide sequences. In some cases, a probe may be a macromolecule, including but not limited to, for example, antibodies or antibody fragments. Each feature on an array corresponds to a small area of the array substrate comprising immobilized probes having the same molecular sequence that bind to or hybridize with the same target molecule. Two or more features on the array may be identical, similar, or different. In many embodiments, arrays will include one or more fiducial marks used for alignment or orientation purposes, as well as positive and negative control features in addition to feature sets used for detection of a stochastic label set. Positive control features may comprise probes that bind to or hybridize with molecules known to be always present in a sample, or probes that bind to or hybridize with molecules spiked into a sample in a controlled fashion. Negative control features may comprise probes that are specific for molecules that are known to be absent from a sample, or they may comrpise features having no probes attached to the substrate surface at all.

In many embodiments, the array substrate, also called a support, may be fabricated from a number of materials. The materials may be solid. The materials may be semi-solid. Examples of materials that may be used to fabricate array substrates include, but are not limited to, glass, fused silica, silicon, polymer, or paper.

In some embodiments, the present disclosure also describes arrays for use in stochastic labeling studies. In particular, arrays are described wherein the arrays comprise a plurality of features having immobilized probes thereon that are complementary to a set of labels designed for use in stochastic labeling experiments, and wherein there is at least one feature on the array for every label in the label set. Some embodiments include an array comprising: (a) a plurality of features, optionally organized into a plurality of sub-arrays, wherein the plurality of features comprise: (i) one or more fiducial features comprising oligonucleotide probes of a defined fiducial sequence; (ii) one or more positive control features comprising oligonucleotide probes of one or more defined positive control sequences; (iii) one or more negative control features having no oligonucleotide probes; and (iv) a plurality of label set features comprising oligonucleotide probes, wherein each individual feature comprises a unique sequence selected from a set of label sequences designed for stochastic labeling of one or more target molecules. In some embodiments, the arrays described in the present disclosure comprise oligonucleotide probe sequences comprising 25-mers, wherein the 5' terminus may optionally be labeled with a 6 carbon atom amino-modifier. In some embodiments, the arrays described in the present disclosure further comprise oligonucleotide probes comprising the set of 960 unique oligonucleotide sequences listed in Table 1. In some embodiments, the arrays described in the present disclosure comprise a set of olignucleotide probes that are 70% homologous, 80% homologous, 85% homologous, 90% homologous, or 95% homologous with the set of sequences listed in Table 1. In some embodiments, the array described in the present disclosure comprise a set of oligonucleotide probes that includes 10%, 20%, 30%, 40%, 50%, 60%, 70%, 80%, or 90% or more of the sequences listed in Table 1.

### Hybridization and Detection

In many embodiments of the disclosed methods, systems, and platforms, samples may be processed prior to placing them in contact with the immobilized probes on arrays. For example, target molecules in the samples may be labeled with fluorescent dye molecules and/or stochastic labels during the sample preparation step. Prior to hybridization with oligonucleotide probes, for example, target DNA or RNA molecules may be covalently linked to fluorescent dye molecules including, but not limited to, fluorescein, Cy3, or Cy5. Alternatively, target molecules may be labeled after binding or hybridizing to probes on the array. For example, target molecules may be covalently linked to biotin prior to binding or hybridization with probes on the array. Following the binding or hybridization step, the immobilized target molecules may then be labeled with streptavidin conjugated to optical tags including, but not limited to, phycoerythrin, quantum dot nanoparticles, gold nanoparticles, or blue latex beads. There are many methods for labeling target molecules, either before or after binding or hybridization to the array, and many possible choices for suitable optical labels or tags.

Once a sample has been contacted with an array, the array (or one or more regions of the array) may comprise one or more labeled features. Each region of an array that has been contacted with a sample comprising labeled target molecules (where the target molecules are labeled either before or after contact with the array) may, for example, comprise zero, one, two, or more labeled features. Alternatively, a region of an array that has been contacted with a sample may comprise 2, 3, 4, 5, 6, 7, 8, 9, 10 or more labeled features. In some embodiments, a region of an array that has been contacted with a sample may comprise 15, 20, 25, 30, 35, 40, 45, 50, or more labeled features. In high-density arrays, a region of an array that has been contacted with a sample may comprise more than 100 labeled features, more than 1,000 labeled features, more than 10,000 labeled features, more 100,000 labeled features, or more than 1,000,000 labeled features.

### Optical Instruments

The methods, systems, and platforms described herein may comprise an optical instrument used for finite-conjugate digital imaging of one or more regions of an array, wherein the instrument typically includes an illumination system, an imaging system, and a translation stage. In some embodiments, the instrument operates as a "macroscope" having a magnification of less than one. In other embodiments, the instrument operates as a "microscope" having a magnification of greater than one. In still other embodiments, the instrument operates as a "contact imager" having a magnification equal to one. The choice of magnification will typically depend on the field of view required to image the region of interest, and on the size of the image sensor.

By way of non-limiting example, if a region of an array comprises a single well of a 16-well microscope slide, or a single well of a glass-bottomed 96-well plate, the dimensions of the region to be imaged may be approximately 7 mm × 7 mm, and the pitch (center-to-center distance between two adjacent regions of the array may be approximately 9 mm. In some embodiments, the optical instrument may be used to take an image of one well at a time, or an image of 2 adjacent wells simultaneously, or an image of 4 (2×2) adjacent wells simultaneously, and the required field of view, or region to be imaged, may be adjusted accordingly. Similarly, the optical instrument may form an image of 6 (3×2 or 2×3), 8 (4×2 or 2×4), 9 (3×3), 10 (5×2 or 5×2), or 12 (6×2, 4×3, 3×4, or 2×6) adjacent wells simultaneously.

By way of another non-limiting example, if a region of an array is a single well of a glass-bottomed 384-well plate, the dimensions of the region to be imaged may be approximately 3 mm × 3 mm, and the pitch between two adjacent regions of the array may be approximately 4.5 mm. Again, in some embodiments, the optical instrument may be used to take an image of one well at a time, or an image of 2 adjacent wells simultaneously, or an image of 4 (2×2), 6 (3 x 2 or 2 x 3), 8 (4 x 2 or 2 x 4), 12 (4 x 3 or 3 x 4), or 16 (4 x 4) adjacent wells simultaneously.

In another non-limiting example, the optical instrument may be used to image high-density oligonucleotide arrays, for example arrays having more than 1,000 features per square millimeter, and a region on the array may be approximately 1 mm × 1 mm in area, for example.

### Imaging System

One main component of the optical instrument is an imaging system. The imaging system may include one or more lenses in addition to a CCD or CMOS camera. Typically the CCD or CMOS camera will have a resolution between a few hundred thousand and a few million pixels. A high resolution camera may have tens of millions of pixels, or more.

The imaging system may be configured to magnify the image of the array. The required magnification of the imaging system can be determined by the required field of view and by the size of the CCD or CMOS sensor. By way of a non-limiting example, if the optical instrument is used to take an image of 2 adjacent wells of a 16-well microscope slide simultaneously, the required field of view is approximately 16 mm × 8 mm. If the light-sensitive area of the CCD or CMOS sensor is about 4.8 mm × 3.6 mm, the instrument is a macroscope and a magnification of about 0.3 is required. In this case, only data from the central 4.8 mm × 2.4 mm of the sensor would be used.

By way of non-limiting example, an appropriate imaging system with a magnification of 0.3 may be constructed using an achromatic cemented doublet lens with a focal length of 85 mm and an infinite-conjugate camera lens with a focal length of 25 mm. If a spectrally selective emission filter is used (for example, a single-band interference filter, multi-band interference filter, longpass interference filter, or longpass colored glass filter), and this filter is typically located between the achromatic cemented doublet lens and the camera lens. Additional configurations of an imaging system with a magnification of 0.3 are possible. For example, the achromatic cemented doublet lens can be omitted, and a finite-conjugate camera lens can be used instead of an infinite-conjugate camera lens. In this case, the spectrally selective emission filter is preferably located on the long-conjugate side of the camera lens.

A sensor with a light-sensitive area of 4.8 mm × 3.6 mm is known as a 1/3-inch format sensor. If a sensor of different size is used, the required magnification will be different. By way of a non-limiting example, if the required field of view is 16 mm × 8 mm and a sensor having a light-sensitive area of 6.4 mm × 4.8 mm (known as a 1/2-inch format sensor) is used, then the required magnification is 0.4. An appropriate imaging system with a magnification of 0.4 can be constructed using, for example, an achromatic cemented doublet lens with a focal length of 85 mm and an infinite-conjugate camera lens with a focal length of 35 mm.

As another non-limiting example, if the dimensions of a region are about 0.66 mm × 0.66 mm and a sensor with a light-sensitive area of 8.8 mm × 6.6 mm (known as a 2/3-inch format sensor) is used, then the instrument is a microscope and the required magnification is about 10. In this case, only data from the central 6.6 mm × 6.6 mm of the sensor will be used. An appropriate imaging system with a magnification of 10 can be constructed using, for example, an infinite-conjugate microscope objective with a focal length of 20 mm and a microscope tube lens with a focal length of 200 mm, with a spectrally selective emission filter typically located between the microscope objective and the tube lens. Alternatively a finite-conjugate 10x microscope objective can be used and the microscope tube lens can be omitted. In this case the spectrally selective emission filter can be located on the long-conjugate side of the microscope objective.

An imaging system of any required magnification can be constructed using a combination of off-the-shelf and custom optical elements that does not necessarily include either a camera lens or a microscope objective. The optical elements may have various combinations of spherical, flat, aspheric, or diffractive surfaces.

### Illumination System

Another main component of the optical instrument is an illumination system. The purpose of the illumination system is to illuminate the array within the field of view of the CCD or CMOS camera. To reduce sensitivity to edge effects and to misalignment, it may be desirable for the illuminated area to be slightly larger than the camera's field of view. By way of a non-limiting example, if the field of view is about 16 mm × 8 mm, a reasonable illuminated area may be about 18 mm × 10 mm. The types of illumination may be Abbe, Kohler, or neither Abbe nor Kohler illumination. Abbe illumination and Kohler illumination are well known and are described in, for example, Chapter 14 of Optical System Design, Second Edition by Robert E. Fischer et al., SPIE Press, McGraw-Hill, NY, 2008.

In some embodiments, the illumination system may be used for off-axis illumination. In other embodiments, the illumination system may be used for trans-illumination or epi-illumination. If the illumination system is used for off-axis illumination or trans-illumination, then the illumination system and the imaging system are separate from each other, with no shared optical components. If the illumination system is used for epi-illumination, then the illumination system and the imaging system may share a beamsplitter and possibly one or more lenses. The beamsplitter may be a plate beamsplitter or a cube beamsplitter. If the optical instrument is used for fluorescence imaging, the beamsplitter is typically a single-edge or multi-edge longpass dichroic beamsplitter.

Often the illumination system may contain a square or rectangular aperture so that the illuminated area has the same shape as the region that is imaged by the CCD or CMOS camera. In embodiments where off-axis illumination is used, the aperture may be trapezoidal in shape instead of square or rectangular. An off-axis illumination system may or may not satisfy the Scheimpflug condition. The Scheimpflug condition is is described in, for example, Modern Optical Engineering, Second Edition by Warren J. Smith, McGraw-Hill, NY, 1990.

In some embodiments, the illumination system may contain one or more of the following: spherical lenses, aspheric lenses, a solid homogenizing rod with a rectangular or trapezoidal cross section, a hollow homogenizing light tunnel with a rectangular or trapezoidal cross section, a microlens array or a pair of microlens arrays, a stationary or rotating diffuser, a compound parabolic concentrator, a non-imaging optical element other than a compound parabolic concentrator (e.g., a free-form catadioptric element), an optical fiber, a fiber bundle, or a liquid light guide.

The illumination system may contain one or more light sources, selected from the group including, but not limited to, one or more LEDs, one or more lasers, a xenon arc lamp, a metal halide lamp, or an incandescent lamp, or a combination thereof. The illumination system may also contain a spectrally selective excitation filter selected from the list including, but not limited to, a single-band interference filter, a multi-band interference filter, or a shortpass interference filter. If the illumination system contains two or more light sources, they may be the same (by way of non-limiting example, two or more LEDs with peak emission wavelengths of about 525 nm for excitation of Cy3 dye, mounted as close together as possible on a circuit board) or different (by way of non-limiting example, an LED with a peak excitation wavelength of about 525 nm for excitation of Cy3 dye, and an LED with a peak excitation wavelength of about 625 nm for excitation of Cy5 dye, mounted as close together as possible on a circuit board). Two-color or multicolor LED assemblies are available from, for example, LED Engin, Inc. (San Jose, CA) and Innovations in Optics, Inc. (Woburn, MA).

In some embodiments, a light source in the illumination system may be controlled electronically. By way of a non-limiting example, a light source may be synchronized with the CCD or CMOS camera so that the light source turns on when the CCD or CMOS camera begins an exposure and turns off when the camera finishes an exposure. If the illumination system contains two or more light sources, they may optionally be controlled together or independently of each other.

In some embodiments, a light source may be left on continuously. In this case, the illumination system may contain an electronically controlled shutter, and the shutter may be synchronized with the CCD or CMOS camera so that the shutter opens when the CCD or CMOS camera begins an exposure and closes when the camera finishes an exposure.

In some embodiments, the optical instrument may contain a single illumination system. In other embodiments, the instrument may contain two or more illumination systems that are identical. In yet other embodiments, the instrument may contain two or more illumination systems that are different. By way of non-limiting examples, an optical instrument for detecting fluorescence from Cy3 and Cy5 may contain one illumination system for Cy3 excitation and another illumination system for Cy5 excitation, or it may contain a single illumination system that is used for both Cy3 and Cy5 excitation.

### Translation Stage

Yet another main component of the optical instrument may be one or more translation stages. One purpose of the translation stage may be to move sample holders in and out of the field view of the imaging system. Another purpose of the translation stage system may be to move the imaging system, components of the imaging system, the illumination system, or components of the illumination system relative to the sample or relative to one another, for obtaining the best possible image.

In many embodiments of the presently disclosed systems, the translation stage may further comprise a sample holder. By way of non-limiting examples, if the optical instrument is used to take images of 16-well microscope slides, the translation stage contains a slide holder. If the optical instrument is used to take images of 96-well plates or 384-well plates, and it contains a plate holder. The slide holder, plate holder, or other array support holder may be mounted on the translation stage system in any of a variety of ways known to those skilled in the art.

The translation stage may have one or more axes of motion. By way of a non-limiting example, if the support is a 16-well microscope slide and the instrument takes images of 2 adjacent wells simultaneously, a single axis of motion may be sufficient. By way of another non-limiting example, if the support is a 96-well plate and the instrument takes images of 2 adjacent wells simultaneously, then at least 2 axes of motion would be required. Additional axes of motion for adjustment of focus and tilt may also be added. If the instrument can take an image of all of the regions on the support in a single exposure, then the translation stage may be omitted in some emodiments of the optical instrument.

### Housing

The systems and devices described herein can include features for insuring that the sensors of the device detect appropriate signal. For example the systems and devices can include light excluding features. The light excluding features generally reduce unintended signal from reaching light sensitive sensors. In many embodiments, one or more of the imaging system, illumination system, translation stage, and other components of the instrument are surrounded by a housing. The housing can be opaque. The housing can, in some instances, act as a faraday cage. In some instances a single housing is sufficient to exclude light from systems. The single housing can also provide external protection of the system. Alternatively, multiple housings may individually contain one or more components of the instrument. In some instances the housings are nested housings. In various embodiments, the housing can be gas and/or liquid tight.

The housing may have an access point which can exclude light from the interior of the housing. The access point may comprise materials that absorb light in the spectrum relevant to the sensors within the housing, e.g. vantablack in the visible spectrum. The access point may comprise a closure device. The closure device may be opaque. The closure device may be, e.g., a door. The closure device may be substantially light-tight in a closed position. The closure may be light-tight in a closed position.

The closure device can be opened, e.g., for insertion and removal of a 16-well slide, 96-well plate, 384-well plate, or other array support. A sensor (for example, a photointerrupter) may be used to determine whether the closure device is open or closed. The instrument's software or electronic hardware may prevent the light source in the illumination system from turning on when the closure device is open, may prevent power from being applied to the image sensor, and/or may prevent the translation stage from moving when the closure device is open.

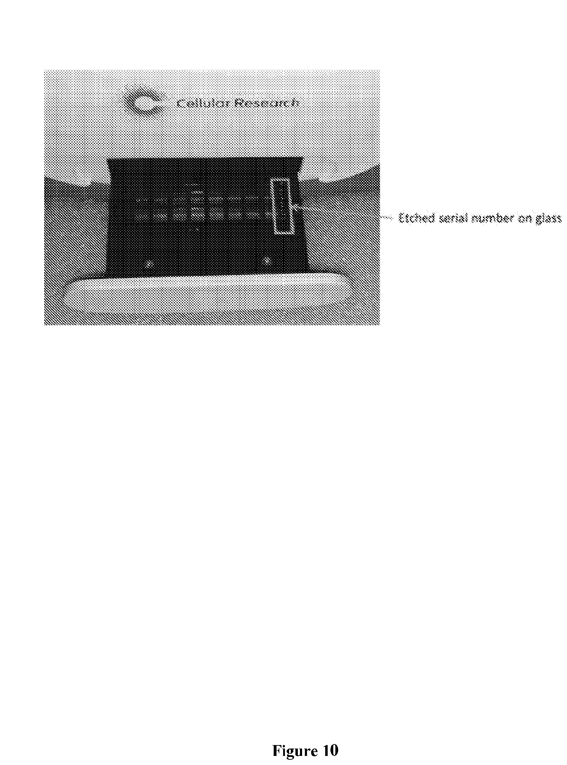

In some embodiments, the housing may further comprise a mechanism for automated opening and closing of the closure device, as illustrated in Figures 10 - 13. The closure device can provide access to the interior of the housing. The closure device can provide access for the array to be loaded in and out of the instrument. This operation can be performed automatically. In some instances, the closure device can exclude ambient light during imaging, while opening reliably to permit loading.

In some instances the closure device does not comprise pivoting parts. In some instances the closure device does not interact with pivoting parts or latches. In some embodiments of the disclosed systems and platforms, the closure device is held by magnets to the housing. Magnets can hold the closure device to the housing in a closed position. Magnets can hold the closure device to a loading device, e.g. a tray, in an open position. During a transition from an open to closed position the closure device can transition from being primarily magnetically attached to a loading device to being primarily magnetically attached to the housing. During a transition from a closed to open position the closure device can transition from being primarily magnetically attached to the housing to being primarily magnetically attached to the loading device. In some instances the transition between the open and closed state is magnetically unstable, such instability causing the closure device to move from the transition state to either the more stable open or closed position.

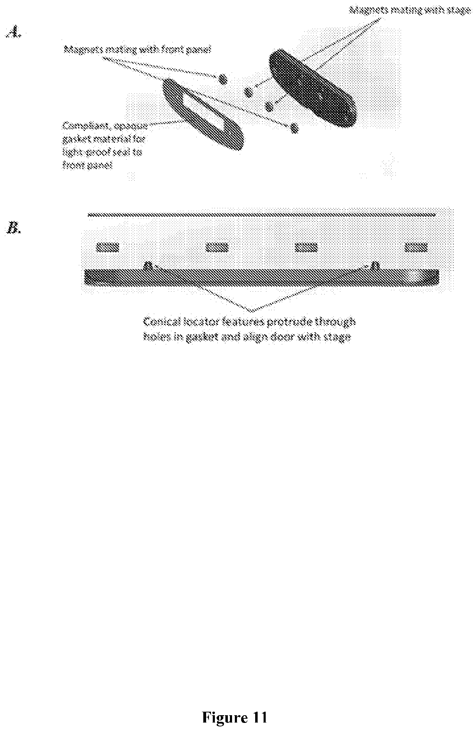

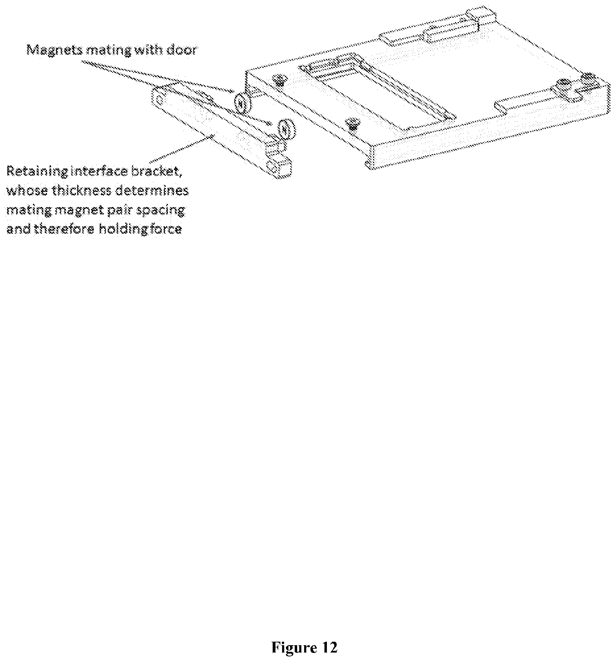

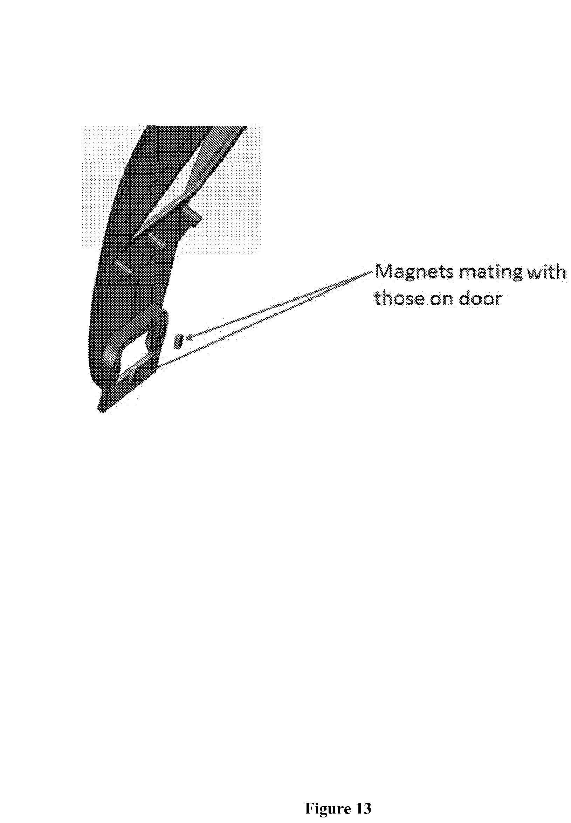

The closure device can comprise a self-locating function provided by conical features on the door. The thicknesses of the parts which support the magnets on each side of a mating pair, and the depth of retaining pockets within those parts, defines the spacing between magnets in each mating pair, and thus the holding forces. The design geometry is matched to the power of the motors to provide enough retaining force, without requiring high motor torque. The system is further designed such that the motor current and speed (and hence torque) can be controlled to improve the performance, and avoid creating a safety hazard. Two of the four magnet pairs are used to temporarily hold the door to the front of the sample tray, when the tray moves outward for loading an array assembly, as depicted in Figure 10. The other two magnet pairs are used to hold the door closed against the front panel, after the tray has moved inwards (and separated the other two magnet pairs in the process). The respective allocation of magnets is shown in Figure 11A. The mating magnets on the front of the stage are shown in Figure 12. The locations of the mating magnets in the front panel are shown in Figure 13. To provide for secure grip (and therefore reliable operation), rare earth magnets provide high strength (e.g. neodymium magnets). Some embodiments of the design call for disc magnets approximately 8 mm in diameter and 3 mm thick, with the magnetic field parallel to the axis. In some embodiments, it is sufficient to replace one magnet from each pair with a weaker magnet, or with a piece of magnetic material such as iron or mild steel.

In some embodiments of the systems and platforms disclosed herein, a mechanism for providing for automated door or lid closure on one or more instrument compartments is provided, wherein the mechanism comprises: (a) a closure; (b) a housing which magnetically holds the closure in a first position; and (c) a translation stage which magnetically holds the closure in a second position. In some embodiment, the mechanism further comprises a gasket positioned between the closure and the housing. In some embodiments of the mechanism, the gasket is attached to the closure. In other embodiments, the gasket is attached to the housing. In some embodiments, the closure and housing are substantially opaque, and the gasket creates a substantially light-tight seal between the closure and the housing in the first position. In some embodiments of the mechanism, one or more magnets are positioned to hold the closure onto the housing in the first position. In some embodiments of the mechanism, one or more magnets are positioned to hold the closure onto a first surface of the translation stage in the second position. In some embodiments, the mechanism further comprises two or more pairs of mating locating features to align the closure with the translation stage in the second position. In some embodiments, the mechanism further comprises two or more pairs of mating locating features to align the closure with the housing in the first position. In some embodiments of the mechanism, the pairs of mating locating features comprise conical pins and conical holes. In some embodiments, the housing comprises an optical instrument. In some embodiments, the translation stage includes a sample holder. In some embodiments, the sample holder is designed to hold a microscope slide, a microarray, or a microwell plate. In some embodiments, the closure is not hinged. In some embodiments, the closure is not attached to either the housing or the translation stage through the use of fasteners such as screws or clips. In some embodiments, the closure is not attached to either the housing or the translation stage through the use of an adhesive.

### Image Data

The methods, systems, and platforms described herein for counting one or more labeled features on an array may comprise data input, or use of the same. The data input may comprise imaging information and/or images of one or more regions of arrays. The images comprise pixel data, wherein each unit of pixel data may be encoded in, by way of non-limiting examples, 4, 8, 12, 14, 16, 32, 64, 128, 256, or more bits. An image may encompass one or more regions of an array. The spatial resolution of an image may be determined by the spatial resolution of the optical instrument, but in some embodiments of the disclosed methods and systems, spatial resolution may be enhanced by digital image processing schemes based on, by way of non-limiting examples, interpolations, extrapolations, modeling, and/or transforms.

The methods, systems, and platforms described herein for counting one or more labeled features on an array may comprise acquisition and analysis of images of one, two, or more distinct regions on an array. In some embodiments, two or more regions to be imaged may overlap, partially overlap, or not overlap at all. Furthermore, two or more regions to be imaged may be adjacent, or non-adjacent.

The methods, software, systems, and platforms described herein for counting one or more labeled features on an array may comprise acquisiton and analysis of images of all or a portion of an array. In some embodiments, the region of an array that is imaged may comprise at least about 1% of the total area of the array. In some embodiments, the region of the array that is imaged image may comprise at least about 2%, 3%, 4%, 5%, 6%, 7%, 8%, 9%, 10% or more of the total area of the array. In other embodiments, the region of the array to be imaged may comprise at least about 11%, 12%, 13%, 14%, 15%, 16%, 17%, 18%, 19%, 20%, 21%, 22%, 23%, 24%, 25% or more of the total area of the array. In still other embodiments, the region of the array to be imaged may comprise at least about 30%, 35%, 40%, 45%, 50%, 55%, 60%, 65%, 70% or more of the total area of the array. In some embodiments, the region of the array to be imaged may comprise at least about 75%, 80%, 85%, 90%, 92%, 95%, 97% or more of the total area of the array.

The methods, software, systems, and platforms described herein for counting one or more labeled features on an array may comprise acquisiton and analysis of images of all or a portion of the features of an array. In some embodiments, the image may encompass between 10 % and 100% of the total number of features on the array. In some embodiments, the image may encompass at least 5%, at least 10%, at least 20%, at least 30%, at least 40%, at least 50%, at least 60%, at least 70%, at least 80%, at least 90%, or at least 95% of the total number of features on the array. In some embodiments, the image may encompass at most 95%, at most 90%, at most, 80%, at most 70%, at most 60%, at most 50%, at most 40%, at most 30%, at most 20%, at more 10%, or at most 5% of the total number of features on the array. The number of features encompassed by the image may fall within any range bounded by any of these values (e.g. from about 15% to about 90% of the total number of features of the array).

### Image Acquisition

The methods, systems, and platforms described herein comprise software for acquiring images from an optical instrument. In some embodiments, e.g. for optical instruments comprising two or more image sensors, the image acquisition may operate in a parallel mode, i.e. where two or more images are acquired simultaneously. Alternatively, the image acquisition may operate in a serial mode, where two or more images are acquired sequentially. In general, image acquisition may be performed in a continuous fashion (i.e., wherein the image is acquired within a single exposure time period) or intermittently (i.e., wherein the image is acquired in a discontinuous fashion, e.g. using two or more separate exposure time periods, wherein in some embodiments two more more images are combined for signal averaging purposes).

In a non-limiting example, an array may comprise 16 wells where an image is formed for each well. The image acquisition module may sequentially read the 16 images. Reading the 16 images can be completed in a continuous time period; or, the system may read a first image followed by analyzing the first image, and then the procedure of image reading and image analysis repeats till the 16th image is analyzed. Alternatively, the image acquisition module may read a pair of images at once, and repeat the reading till all the 16 images are acquired. The 16 images may be read sequentially in a single time period. In some applications, a pair of images may be read, followed by immediate image analyses.

### Image Analysis

In general, one of the objectives in performing image processing and analysis is to improve signal-to-noise ratios and quantitation. In an ideal array experiment, labeled features comprising bound target molecules and/or labels would produce a uniform, non-saturated signal level when imaged and non-labeled features would appear uniformly dark, with a signal level of close to zero. In reality, a variety of artifacts due to instrumental and/or assay procedural issues including, but not limited to, stray light, background fluorescence (in the case of fluorescence-based imaging), particulate contaminants, and non-specific binding of assay components, can produce images that hinder one's ability to extract quantitative signal intensity data and make definitive calls as to which features of the array are labeled. Accordingly, the methods, systems, and platforms disclosed herein may comprise software for performing a variety of image processing tasks including, but not limited to, feature location, image orientation correction, background correction, intensity measurement, data scaling, data thresholding, and data analysis functions.

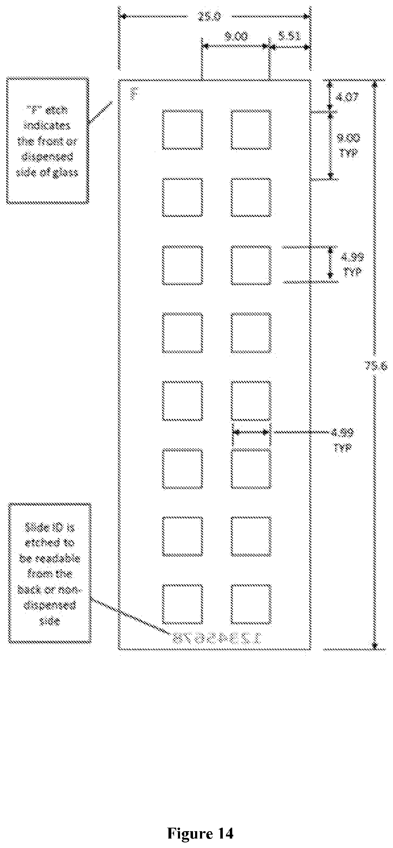

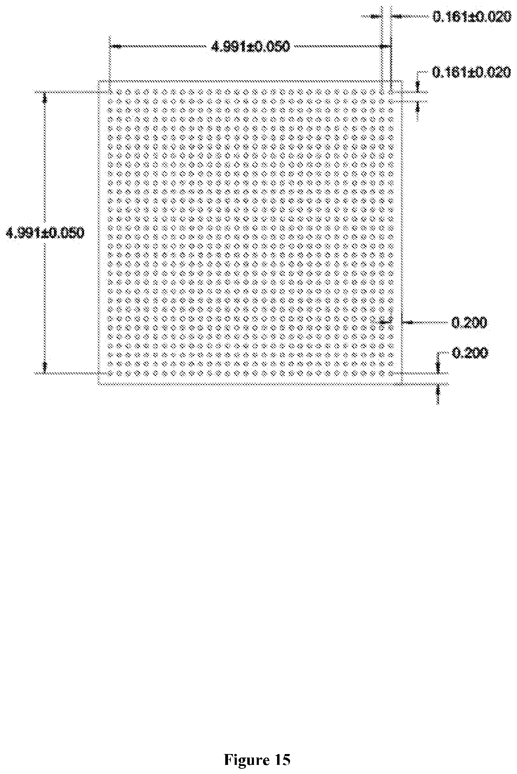

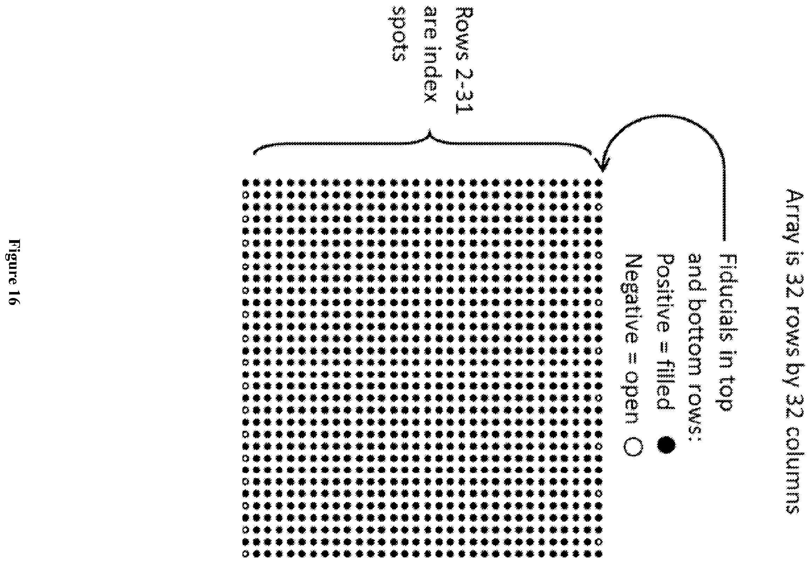

Image orientation and location of features. In some embodiments, fiducial features incorporated into the design of an array are used to orient the image and locate features in an automated fashion using custom image analysis software. By way of non-limiting example, the microarray pattern shown in Figures 15 and 16 consists of a 32 x 32 array of features, where fiducial features in the top and bottom rows permit location of the array in the digital images. The fiducial features are typically arranged in an asymmetric pattern whose orientation is readily identifiable, e.g. fiducial features located in the top row of features in an array such as that depicted in Figure 16 may comprise a distinctive pattern for which the left and right ends of the row are asymmetric, while the pattern of fiducial features in the bottom row is typically different from that in the top row. This permits easy manual and automatic identification of incorrect placement of the array, and also facilitated detection of imaging problems. In some embodiments, the image may be transformed also transformed so that the apparent orientation of the images corresponds to the orientation as viewed by a user, often referred to as the viewing reference orientation, as shown in Figure 14 for a specific embodiment of an array designed for use with the methods, systems, and platforms disclosed herein.

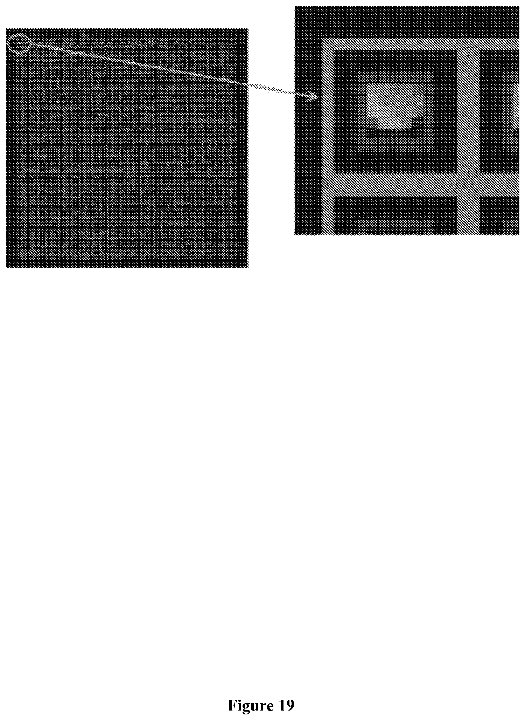

Refinement of feature locations. In some embodiments, the measured location of each feature is refined so as to account for array fabrication errors, which can produce offsets of several image pixels. The locations of features obtained during the initial image orientation and feature location step may be used to subdivide the array or array region into analysis windows, for example an array may be divided into 32 x 32 analysis windows, wherein each analysis window comprises an image area of 12 x 12 pixels centered on each feature, as shown in Figure 19. The size of the analysis window used is dependent on the size of the features on the array, and may be any size that is necessary to correctly locate and distinguish between features and background regions on the array. By way of non-limiting examples, the analysis window may be defined as a 5×5, 7×7, 9×9, 15×15, 51×51, or 101×101 pixel area that is centered on the array feature. The position of the feature within the window may be determined on the basis of the signal intensity distribution and clustering of the pixels within the analysis window. The refined location of the feature is calculated as an offset in coordinates X and Y from the site predicted by a perfect rectilinear grid. In some embodiments, distortion of the feature location results due to defects such as dust is avoided by making use of the correlation between printing artifacts between different arrays on the same substrate. Since the printing artifacts are typically consistent, the correction relative to a hypothetical rectilinear grid is also consistent. The feature location optimization results for a given feature are combined across all of the arrays being analyzed, and the median offset is used for subsequent analysis, which greatly decreases noise in the final experimental results.

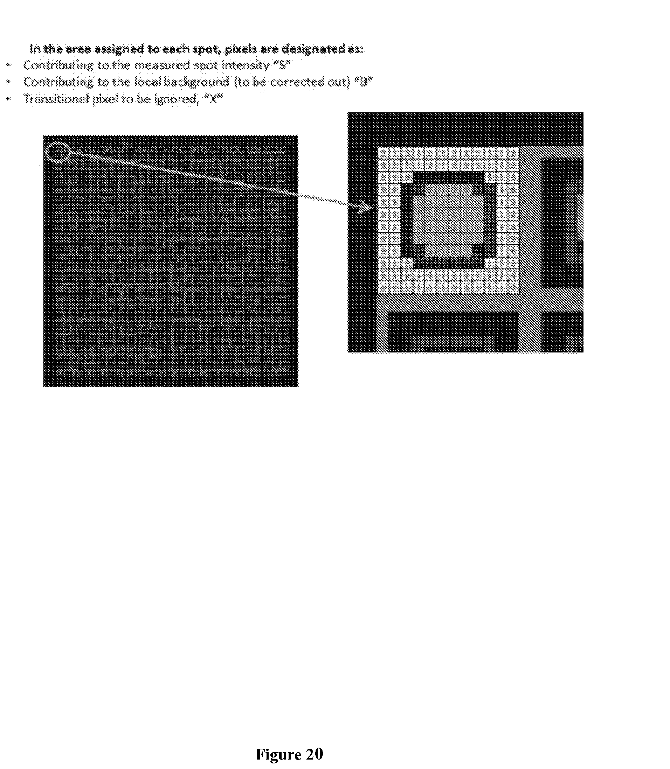

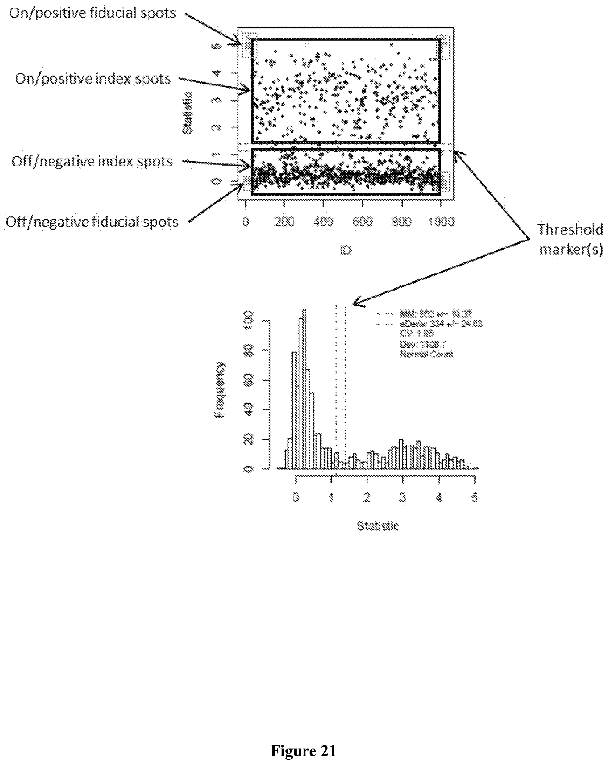

Local background correction. Once the feature pixel set "S" and background pixel set "B" have been defined for each location in the array (for example, see Figure 20), the local background is removed via a calculation involving signal intensity and background intensity statistics. Examples of suitable signal and background intensity statistics for use in local background correction calculations include, but are not limited to, the mean, the median, or a ratio of signal-to-background. In some embodiments, following feature location refinement performed as described above, the pixels within the analysis window are assigned to be signal pixels, background prixels, or transitional pixels, i.e. pixels to be disregarded, in subsequent calculations of signal and background intensity statistics (see Figure 20). In some embodiments of the disclosed methods, local background correction is performed via subtraction in logarithm space, i.e. a calculation that is closely related to a signal-to-background ratio calculation, as illustrated in a non-limiting example below:
Given the 16-bit pixel data measurements for a defined feature and background area, on next calculates a single value *S̅* for the signal pixels and a value *B̅* for the background pixels respectively. One useful statistic is the median value for each set of pixels, i.e.
*S̅* = the median of the pixel values for the set of pixels "S"
*B̅* = the median of the pixel values for the set of pixels "B"
Various other statistics could be used in this situation, such as the mean of the set of values, or a nominated percentile within the set. It is not necessary, and may not be optimal, to use the same statistic for both *S̅* and *B̅.* For example, low data noise and strong separation between "on" and "off" data points can be obtained by using:
*S̅* = the median of the pixel values for the set of pixels "S", and
*B̅* = the 25^{th} percentile of the pixel values for the set of pixels "B".
As a further enhancement, the particular percentile used can be a pre-stored and reconfigurable parameter stored in a settings file.
The background-corrected intensity statistic for each spot is: $I = {log}_{2} \left(16\overline{S}\right) - {log}_{2} \left(16\overline{B}\right)$ An example of a scatter plot (intensity statistic vs feature number) and histogram of intensity data are shown in Figure 21. In this example, the background is corrected for by performing a subtraction of logarithms, such that the intensity metric is related to a *ratio* of *S̅* and *B̅.* In some situations, a linear subtraction (e.g. *I* = *S̅ - B̅*) is preferable. Once the background-corrected intensity statistics have been calculated for the compete set of features, the next task is to determine which of the features are labeled (i.e. "on", or "positive") and which are non-labeled (i.e. "off' or "negative"). This is accomplished by determining a signal intensity threshold value based on a statistical analysis of the local background-corrected feature intensities, and subsequently counting how many features, k, have background-corrected signal intensities that are larger than this threshold level. The signal intensity threshold may be considered a "dynamic" signal intensity threshold in that the threshold is determined through analysis of the data from the current experiment, and thereby eliminates potential errors due to such factors as instrumental drift and variations in assay procedure.

Determination of dynamic signal intensity thresholds. In many embodiments of the methods, systems, and platforms disclosed herein, a dynamic signal intensity threshold is determined for one or more regions of an array by performing one or more statistical analyses of the background corrected signal intensity data for the complete set of features. Any of a variety of statistical (or empirical) analysis techniques may be used, including but not limited to, k-means clustering, k-medoids clustering, mixture model statistical analysis, probe reference distribution methods, or empirical analysis based on sorting of background corrected signal intensity values, sorting of pairwise differences in background corrected signal intensity values, etc. In some embodiments, analyses may utilize spatial and/or temporal information collected across multiple analysis windows, across multiple array regions, or over specified periods of time, or combinations thereof, to improve the quality of the analysis and thereby improve the quantitative aspects of the disclosed methods. In some embodiments, other sources of information, including, but not limited to, for example, locations of probes, frequently occuring artifact patterns, previously derived results, literature reports, array manufacturers' suggestions, human knowledge, and/or human guidance may also be integrated into the analysis.

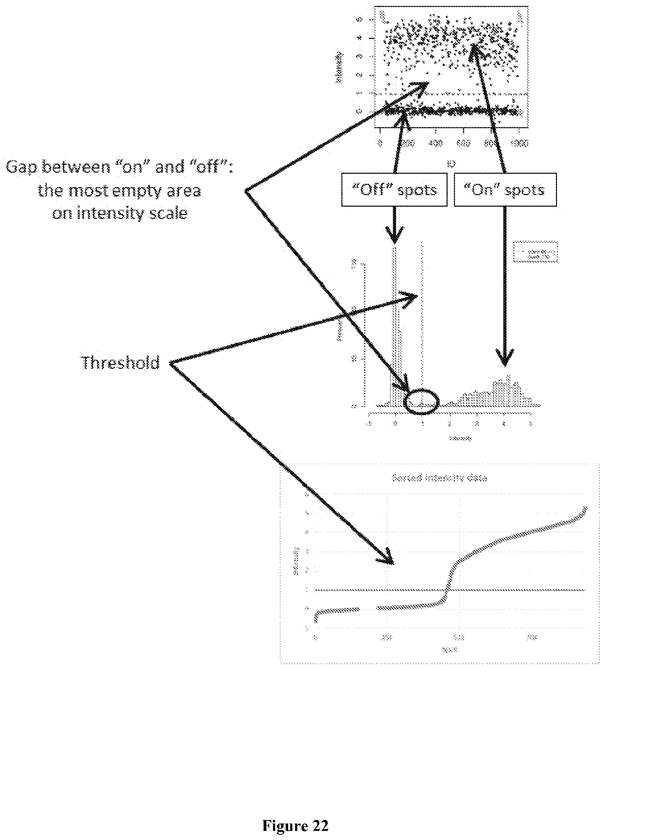

By way of a non-limiting example of threshold determination, in some embodiments of the disclosed methods, the background corrected signal intensity threshold may be determined using an empirical approach (e.g. the "E-Derivative" approach; see Figure 22) wherein the background corrected signal intensity data for the complete set of array features constitutes a set *I = {Iᵢ}.* The set I is sorted in increasing order to obtain a set of ordered corrected signal intensity values *z* = *{zᵢ}* = *{*Sort[*yᵢ*]*}*. Next, the differences between each sorted array value are calculated to obtain d = {d₁, d₂, dᵢ, ..., dₘ} , where dᵢ = zᵢ₊₁ - zᵢ. The intensity differences are then smoothed using a "window" whose width is w, to produce a smoothed, sorted array s: ${s}_{j} = \frac{{\sum }_{i = j - w}^{j + w} {d}_{i}}{2 w + 1}$ The threshold is *T*, the point for which the slope of the smoothed, sorted data is steepest (see Figure 21): $T = max \left({s}_{j}\right)$ The number of features, k, which are "on" (or labeled) is: $k = {\sum }_{i = 1}^{m} I \left[{I}_{i}>T\right] .$

By way of another non-limiting example of threshold determination, in some embodiments the background corrected signal intensity threshold may be determined by fitting the background corrected feature intensity data to two more more assumed distributions (i.e. a "Mixture Model" approach), wherein the assumed distributions comprise normal distributions, uniform distributions, etc. The mixture model approach essentially models the underlying process that generated the data, by assuming that the positive feature intensities are generated from a positive feature distribution with higher average signal intensity, and the negative feature intensities are generated from a negative feature distribution with lower average signal intensity. This approach additionally models the variability in the feature intensities generated by each distribution, which can be useful in cases where the negative feature intensities tend to be much less variable, while the positive feature intensities tends to be much more variable. The choice of the distributions is determined by the shape of the data curve in a background corrected feature intensity histogram. The parameters of the model, e.g. the estimated average intensities for "on" and "off" features and their corresponding variance, are estimated from the data using a method such as the Expectation Maximization algorithm.

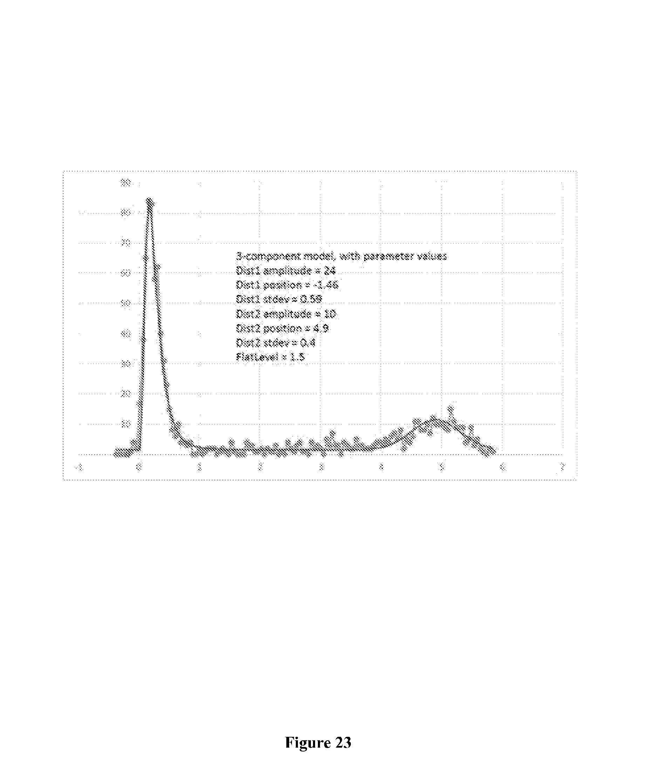

By way of another non-limiting example of threshold determination, in some embodiments the background corrected signal intensity threshold may be determined by fitting the background corrected feature intensity data to a model function comprising three assumed distributions (i.e. a "3-Component Model" approach), wherein the assumed distributions comprise a log-normal distribution, *Dist1,* for the "off" spots, a normal distribution, *Dist2,* for the "on" spots, and a flat offset *FlatLevel.* Adjustable parameters for the model include: (i) the number of bins in the starting histogram, (ii) Dist1 amplitude, (iii) Dist1 position, (iv) Dist1 standard deviation, (v) Dist2 amplitude, (vi) Dist2 position, (vii) Dist2 standard deviation, and (viii) FlatLevel. An example fit to histogram data is shown in Figure 23. One non-limiting example of a method to determine the threshold after fitting feature intensity data to such a distribution is as follows: (i) fit the 3-component distribution to the histogram data, and (ii) set the threshold *T* by calculating the following values: (1) the intensity t_{low} where the high-intensity side of the fitted log-normal distribution component drops below 1 (or a defined parameter for comparison), (2) the intensity t_{subflat} where the high-intensity side of the fitted log-normal distribution component drops below the fitted FlatLevel result, (3) the intensity t_{subnorm} where the high-intensity side of the fitted log-normal distribution component drops below the value of the fitted normal distribution at that histogram bin, and (4) choosing *T* = min[t_{low}, t_{subflat}, t_{subnorm}]. Alternative approaches for determining a threshold using a 3-component model approach will be apparent to those of skill in the art. It can be beneficial to calculate starting values of model parameters, to improve the speed and reliability of the modelling process, which can be achieved using methods such as a coarse search to identify the dominant peaks in the histogram, or based on assumptions derived from typical historical data sets.

By way of another non-limiting example of threshold determination, in some embodiments the background corrected signal intensity threshold may be determined using a "Peak Split Fiducials" approach. This approach, which copes well with low-quality data, is described as follows. An initial split of the feature intensity data into high and low intensity groups is made using the scale defined naturally by the spread between "on" (label present) and "off" (label absent) features in the fiducial rows. Then, the histogram peak (after optionally smoothing the data using standard methods such as a moving average filter) is found for each group. The threshold is then determined by examining the spread in the intensity data around the low-intensity group peak. Define upper and lower bounds of fiducial intensity: (i) F_{off} = [median of OFF fiducials], (ii) Fₒₙ = [median of ON fiducials], and (iii) F_{range} = Fₒₙ - F_{off}. Perform an initial split of the data based on the fiducial scale, at the level Splitvalue = F_{off} + PeakSplit × F_{range}, where the parameter PeakSplit is a percentage of F_{range}. Find 2 peaks: (i) Peak1 = the intensity peak for which the histogram is a maximum, for all features of intensity less than Splitvalue, (ii) Peak2 = the intensity peak for which the histogram is a maximum, for all feartures of intensity greater than Splitvalue. Calculate the standard deviation, Stdev1, of all the features in the neighbourhood of Peak1, defined as all index features from the lowest intensity up to Peak1 + PeakOffsetFraction × (Peak2 - Peak1), where PeakOffsetFraction is an adjustable parameter. Set the threshold to the lesser of T_{psf} and T_{LocMin}, which are calculated as follows: (i) T_{psf} = Peak1 + StdevMultiple × Stdev1 , where StdevMultiple is a parameter, OR T_{LocMin} = the intensity corresponding to the minimum of a smoothed histogram curve between Peak1 and T_{psf}. Similar approaches using different methods for determining the spread around either peak can also be used.

The methods and systems disclosed herein may comprise detecting one or more labeled features within one or more regions on an array. In some embodiments, detecting a labeled feature within a region may comprise comparing the background corrected signal intensity for a feature with a dynamic signal intensity threshold derived through statistical analysis of the background corrected signal intensities for the complete set of features. When the background corrected signal intensity for a given feature is above the threshold, the feature may be classified as a labeled feature. Alternatively, if the background corrected signal intensity for a given feature is below the threshold, the feature may be classified as non-labeled. Application of a background corrected signal intensity threshold to the corrected signal intensity data for the complete set of features thus constitutes a binary transformation of the data to a digital output wherein features are classified as either labeled ("on") or non-labeled ("off"). Those of skill in the art will recognize that there are many possible variations in the type and order of analysis steps that may be applied to achieve this binary transformation.

Calculation of the absolute number of target molecules in a sample. The absolute number of target molecules in a sample, wherein the target molecules have been labeled in a stochastic fashion as described previously, may be determined using arrays comprising feature sets comprising probes that are specific for the labels in the stochastic label set. Following hybridization or binding of the target molecules or labeled target molecules to the array, the array is imaged and processed as described above, and the number of target molecules, *N,* in the sample is determined from the number, *k,* of labeled features based on Poisson distribution statistics: $N = - m ∗ log \left(1-\frac{k}{m}\right)$ where m is the total number of features (i.e. the total number of unique labels in the set of stochastic labels).

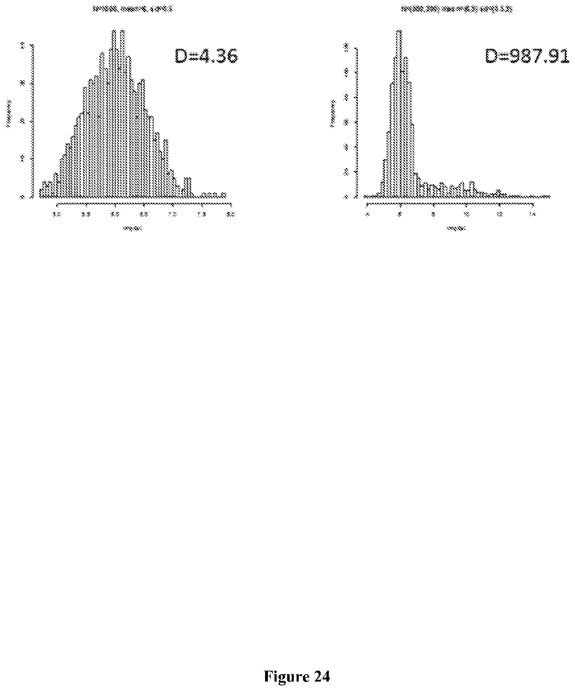

Quality metrics. In some embodiments, it is beneficial to include a numerical measure of the quality of the data, to help to gauge the success of an experiment. In some embodiment, this quality measurement may be based on statistics from the feature-by-feature intensity data. One simple quality measurement Q_{Sep1} is simply the difference between the means of the positive and negative features intensities, after background correction and scaling, i.e. Q_{Sep1} = (mean intensity of features having an intensity above the signal intensity threshold) - (mean intensity of features having an intensity below the threshold). In some embodiments, this metric may also incorporate the spread in the intensities of the feature distribution(s) by scaling the difference between means by the standard deviation of each distribution, e.g. Q_{Sep2} = Q_{Sep1} / (standard deviation of intensities for feature having intensities below the threshold intensity). Other quality measurements can be constructed based on the separation and breadth of modelled distributions which are fitted to the experimental data. In some embodiments, deviance measurement may be used for a quality metric (Figure 24); this is a calculation based on the degree of separation between two fitted normal distributions. In some embodiments, it is preferable to empirically determine a dynamic intensity threshold by setting the threshold to a value which maximizes a quality metric.

Confidence intervals. In some embodiments of the methods disclosed herein, it is beneficial to define confidence intervals (see Dube, et al. (2008), PLoS ONE 3(8): e2876 for a more complete description) when specifying estimates of the absolute number of target molecules detected in a sample using the techniques described above. The 95% confidence interval of the estimation of *N* from stochastic labeling experiments can be derived from *k* for a single reaction employing a single set of ₘ distinct labels. The 95% confidence interval for N ranges from N_{low} to N_{high}, where ${N}_{low} = - m \times ln \left⌈1-\left(\frac{k}{m}-1.96\sqrt{\frac{\frac{k}{m} \left(1-\frac{k}{m}\right)}{m}}\right)\right⌉ ,$ and ${N}_{high} = - m \times ln \left⌈1-\left(\frac{k}{m}+1.96\sqrt{\frac{\frac{k}{m} \left(1-\frac{k}{m}\right)}{m}}\right)\right⌉$

Ratio of the number of copies of a target molecule in two samples. Frequently, researchers seek to compare the expression levels of genes in different samples, by calculating a ratio between gene expression levels in two or more samples. Using calculations such as those described above, it is possible to derive confidence intervals for such ratios where the number of target molecules in each sample are determined using the methods, systems, and platforms as discloded herein.

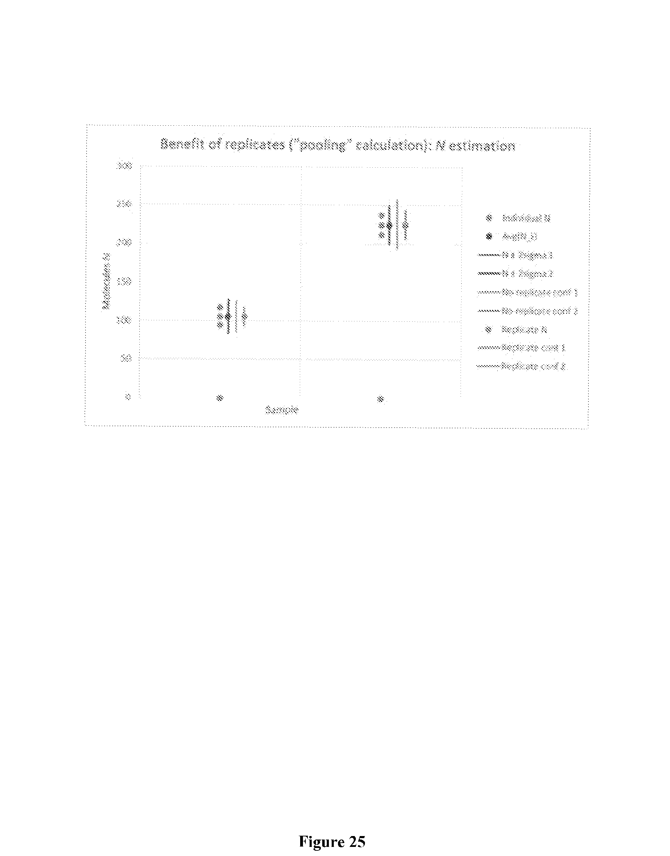

Replicate experiments. The benefit of performing replicate experiments, and the proper calculation of associated uncertainties, is illustrated in Figure 25. While results (blue points) from replicate experiments can simply be combined (blue error bars), calculating the uncertainty from Poisson statistics, wherein one considers the replicates as comprising a larger pool of labels, gives the smaller green error bars illustrated in the figure. The accuracy of this estimation will vary depending on the consistency between replicates, and there is a numerical simplification employed in considering the labels of replicate experiments to be a pool of diverse labels. Therefore, in some embodiments of the disclosed methods, different methods for calculating confidence intervals may be more appropriate at high ratios of *k*/*m.*

### User Interface

The methods, software, systems, and platforms disclosed herein may comprise a user interface, or use of the same. The user interface may provide one or more inputs from a user. The input from the user interface may comprise instructions for counting the one or more labeled features in a real time mode. The input from the user interface may comprise instructions for counting the one or more features from one or more images. The one or more images may be archived images. The one or more images may be live captured images.

Different platform operators may have their own preferences about the timing to analyze images. One platform operator may want to run the image analyses while live capturing images. Another platform operator may run the image analyses after all the images have been collected. Or, another platform operator may run the image analyses on a set of archived images. These options can be selected via inputs to the user interface.

### Digital Processing Device

The methods, software, systems, and platforms disclosed herein may comprise a digital processing device, or use of the same. The digital processing device may comprise one or more hardware central processing units (CPU) that carry out the device's functions. The digital processing device may comprise an operating system configured to perform executable instructions. The digital processing device may be connected to a computer network. The digital processing device may be connected to the Internet such that it accesses the World Wide Web. The digital processing device may be connected to a cloud computing infrastructure. The digital processing device may be connected to an intranet. The digital processing device may be connected to a data storage device.

Suitable digital processing devices may include, by way of non-limiting examples, server computers, desktop computers, laptop computers, notebook computers, sub-notebook computers, netbook computers, netpad computers, set-top computers, handheld computers, Internet appliances, mobile smartphones, tablet computers, personal digital assistants, video game consoles, and vehicles. In some instances, smartphones may be suitable for use in the system described herein. In some instances, select televisions, video players, and digital music players with optional computer network connectivity may be suitable for use in the system described herein. Suitable tablet computers may include those with booklet, slate, and convertible configurations, known to those of skill in the art.

The digital processing device may comprise an operating system configured to perform executable instructions. The operating system may be software, including programs and data, which manages the device's hardware and provides services for execution of applications. Suitable server operating systems may include, by way of non-limiting examples, FreeBSD, OpenBSD, NetBSD^{®}, Linux, Apple^{®} Mac OS X Server^{®}, Oracle^{®} Solaris^{®}, Windows Server^{®}, and Novell^{®} NetWare^{®}. Suitable personal computer operating systems may include, by way of non-limiting examples, Microsoft^{®} Windows^{®}, Apple^{®} Mac OS X^{®}, UNIX^{®}, and UNIX-like operating systems such as GNU/Linux^{®}. The operating system is provided by cloud computing. Suitable mobile smart phone operating systems may include, by way of non-limiting examples, Nokia^{®} Symbian^{®} OS, Apple^{®} iOS^{®}, Research In Motion^{®} BlackBerry OS^{®}, Google^{®} Android^{®}, Microsoft^{®} Windows Phone^{®} OS, Microsoft^{®} Windows Mobile^{®} OS, Linux^{®}, and Palm^{®} WebOS^{®}.

The digital processing device may comprise a storage and/or memory device. The storage and/or memory device may be one or more physical apparatuses used to store data or programs on a temporary or permanent basis. The digital processing device may be a volatile memory and may require power to maintain stored information. The digital processing device may be a non-volatile memory and may retain stored information when the digital processing device is not powered. The non-volatile memory may comprise flash memory. The non-volatile memory may comprise dynamic random-access memory (DRAM). The non-volatile memory may comprise ferroelectric random access memory (FRAM). The non-volatile memory may comprise phase-change random access memory (PRAM). The storage device may include, by way of non-limiting examples, CD-ROMs, DVDs, flash memory devices, magnetic disk drives, magnetic tapes drives, optical disk drives, and cloud computing based storage. The storage and/or memory device may be a combination of devices such as those disclosed herein.

The digital processing device may comprise a display. The display may be used to send visual information to a user. The display may be a cathode ray tube (CRT). The display may be a liquid crystal display (LCD). The display may be a thin film transistor liquid crystal display (TFT-LCD). The display may be an organic light emitting diode (OLED) display. The OLED display may be a passive-matrix OLED (PMOLED) or active-matrix OLED (AMOLED) display. The display may be a plasma display. The display may be a video projector. The display may be a combination of devices such as those disclosed herein.

The digital processing device may comprise an input device to receive information from a user. The input device may be a keyboard. The input device may be a pointing device including, by way of non-limiting examples, a mouse, trackball, track pad, joystick, game controller, or stylus. The input device may be a touch screen or a multi-touch screen. The input device may be a microphone to capture voice or other sound input. The input device may be a video camera to capture motion or visual input. The input device may be a combination of devices such as those disclosed herein.

### Non-Transitory Computer Readable Storage Medium

The methods, software, systems, and platforms disclosed herein may comprise one or more non-transitory computer readable storage media encoded with a program including instructions executable by the operating system of an optionally networked digital processing device. A computer readable storage medium may be a tangible component of a digital processing device. A computer readable storage medium may be optionally removable from a digital processing device. A computer readable storage medium may include, by way of non-limiting examples, CD-ROMs, DVDs, flash memory devices, solid state memory, magnetic disk drives, magnetic tape drives, optical disk drives, cloud computing systems and services, and the like. The program and instructions may be permanently, substantially permanently, semi-permanently, or non-transitorily encoded on the media.

### Computer Programs (General)

The methods, software, systems, and platforms disclosed herein may comprise at least one computer processor, or use of the same. The computer processor may comprise a computer program. A computer program may include a sequence of instructions, executable in the digital processing device's CPU, written to perform a specified task. Computer readable instructions may be implemented as program modules, such as functions, features, Application Programming Interfaces (APIs), data structures, and the like, that perform particular tasks or implement particular abstract data types. A computer program may be written in various versions of various languages.

The functionality of the computer readable instructions may be combined or distributed as desired in various environments. A computer program may comprise one sequence of instructions. A computer program may comprise a plurality of sequences of instructions. A computer program may be provided from one location. A computer program may be provided from a plurality of locations. A computer program may include one or more software modules. A computer program may include, in part or in whole, one or more web applications, one or more mobile applications, one or more standalone applications, one or more web browser plug-ins, extensions, add-ins, or add-ons, or combinations thereof.

### Web Applications

A computer program may include a web application. In light of the disclosure provided herein, those of skill in the art will recognize that a web application may utilize one or more software frameworks and one or more database systems. A web application may be created upon a software framework such as Microsoft^{®} .NET or Ruby on Rails (RoR). A web application may utilize one or more database systems including, by way of non-limiting examples, relational, non-relational, feature oriented, associative, and XML database systems. Suitable relational database systems may include, by way of non-limiting examples, Microsoft^{®} SQL Server, mySQL^{™}, and Oracle^{®}. Those of skill in the art will also recognize that a web application may be written in one or more versions of one or more languages. A web application may be written in one or more markup languages, presentation definition languages, client-side scripting languages, server-side coding languages, database query languages, or combinations thereof. A web application may be written to some extent in a markup language such as Hypertext Markup Language (HTML), Extensible Hypertext Markup Language (XHTML), or eXtensible Markup Language (XML). A web application may be written to some extent in a presentation definition language such as Cascading Style Sheets (CSS). A web application may be written to some extent in a client-side scripting language such as Asynchronous Javascript and XML (AJAX), Flash^{®} Actionscript, Javascript, or Silverlight^{®}. A web application may be written to some extent in a server-side coding language such as Active Server Pages (ASP), ColdFusion^{®}, Perl, Java^{™}, JavaServer Pages (JSP), Hypertext Preprocessor (PHP), Python^{™}, Ruby, Tcl, Smalltalk, WebDNA^{®}, or Groovy. A web application may be written to some extent in a database query language such as Structured Query Language (SQL). A web application may integrate enterprise server products such as IBM^{®} Lotus Domino^{®}. A web application may include a media player element. A media player element may utilize one or more of many suitable multimedia technologies including, by way of non-limiting examples, Adobe^{®} Flash^{®}, HTML 5, Apple^{®} QuickTime^{®}, Microsoft^{®} Silverlight^{®}, Java^{™}, and Unity^{®}.

### Mobile Applications

A computer program may include a mobile application provided to a mobile digital processing device. The mobile application may be provided to a mobile digital processing device at the time it is manufactured. The mobile application may be provided to a mobile digital processing device via the computer network described herein.

A mobile application may be created by techniques known to those of skill in the art using hardware, languages, and development environments known to the art. Those of skill in the art will recognize that mobile applications may be written in several languages. Suitable programming languages include, by way of non-limiting examples, C, C++, C#, Featureive-C, Java^{™}, Javascript, Pascal, Feature Pascal, Python^{™}, Ruby, VB.NET, WML, and XHTML/HTML with or without CSS, or combinations thereof.

Suitable mobile application development environments may be available from several sources. Commercially available development environments include, by way of non-limiting examples, AirplaySDK, alcheMo, Appcelerator^{®}, Celsius, Bedrock, Flash Lite, .NET Compact Framework, Rhomobile, and WorkLight Mobile Platform. Other development environments may be available without cost including, by way of non-limiting examples, Lazarus, MobiFlex, MoSync, and Phonegap. Also, mobile device manufacturers distribute software developer kits including, by way of non-limiting examples, iPhone and iPad (iOS) SDK, Android^{™} SDK, BlackBerry^{®} SDK, BREW SDK, Palm^{®} OS SDK, Symbian SDK, webOS SDK, and Windows^{®} Mobile SDK.

Those of skill in the art will recognize that several commercial forums may be available for distribution of mobile applications including, by way of non-limiting examples, Apple^{®} App Store, Android^{™} Market, BlackBerry^{®} App World, App Store for Palm devices, App Catalog for webOS, Windows^{®} Marketplace for Mobile, Ovi Store for Nokia^{®} devices, Samsung^{®} Apps, and Nintendo^{®} DSi Shop.

### Standalone Applications

A computer program may include a standalone application, which may be a program that may be run as an independent computer process, not an add-on to an existing process, e.g., not a plug-in. Those of skill in the art will recognize that standalone applications may be often compiled. A compiler may be a computer program(s) that transforms source code written in a programming language into binary feature code such as assembly language or machine code. Suitable compiled programming languages include, by way of non-limiting examples, C, C++, Featureive-C, COBOL, Delphi, Eiffel, Java^{™}, Lisp, Python^{™}, Visual Basic, and VB .NET, or combinations thereof. Compilation may be often performed, at least in part, to create an executable program. A computer program may include one or more executable complied applications.

### Web Browser Plug-ins

A computer program may include a web browser plug-in. In computing, a plug-in may be one or more software components that add specific functionality to a larger software application. Makers of software applications may support plug-ins to enable third-party developers to create abilities which extend an application, to support easily adding new features, and to reduce the size of an application. When supported, plug-ins may enable customizing the functionality of a software application. For example, plug-ins are commonly used in web browsers to play video, generate interactivity, scan for viruses, and display particular file types. Those of skill in the art will be familiar with several web browser plug-ins including, Adobe^{®} Flash^{®} Player, Microsoft^{®} Silverlight^{®}, and Apple^{®} QuickTime^{®}. The toolbar may comprise one or more web browser extensions, add-ins, or add-ons. The toolbar may comprise one or more explorer bars, tool bands, or desk bands.

In view of the disclosure provided herein, those of skill in the art will recognize that several plug-in frameworks may be available that enable development of plug-ins in various programming languages, including, by way of non-limiting examples, C++, Delphi, Java^{™}, PHP, Python^{™}, and VB .NET, or combinations thereof.

Web browsers (also called Internet browsers) may be software applications, designed for use with network-connected digital processing devices, for retrieving, presenting, and traversing information resources on the World Wide Web. Suitable web browsers include, by way of non-limiting examples, Microsoft^{®} Internet Explorer^{®}, Mozilla^{®} Firefox^{®}, Google^{®} Chrome, Apple^{®} Safari^{®}, Opera Software^{®} Opera^{®}, and KDE Konqueror. The web browser may be a mobile web browser. Mobile web browsers (also called mircrobrowsers, mini-browsers, and wireless browsers) may be designed for use on mobile digital processing devices including, by way of non-limiting examples, handheld computers, tablet computers, netbook computers, subnotebook computers, smartphones, music players, personal digital assistants (PDAs), and handheld video game systems. Suitable mobile web browsers include, by way of non-limiting examples, Google^{®} Android^{®} browser, RIM BlackBerry^{®} Browser, Apple^{®} Safari^{®}, Palm^{®} Blazer, Palm^{®} WebOS^{®} Browser, Mozilla^{®} Firefox^{®} for mobile, Microsoft^{®} Internet Explorer^{®} Mobile, Amazon^{®} Kindle^{®} Basic Web, Nokia^{®} Browser, Opera Software^{®} Opera^{®} Mobile, and Sony^{®} PSP^{™} browser.

### Software Modules (General)

The methods, software, systems, and platforms disclosed herein may comprise one or more softwares, servers, and database modules, or use of the same. In view of the disclosure provided herein, software modules may be created by techniques known to those of skill in the art using machines, software, and languages known to the art. The software modules disclosed herein may be implemented in a multitude of ways. A software module may comprise a file, a section of code, a programming feature, a programming structure, or combinations thereof. A software module may comprise a plurality of files, a plurality of sections of code, a plurality of programming features, a plurality of programming structures, or combinations thereof. The one or more software modules may comprise, by way of non-limiting examples, a web application, a mobile application, and a standalone application. Software modules may be in one computer program or application. Software modules may be in more than one computer program or application. Software modules may be hosted on one machine. Software modules may be hosted on more than one machine. Software modules may be hosted on cloud computing platforms. Software modules may be hosted on one or more machines in one location. Software modules may be hosted on one or more machines in more than one location.

### Databases

The methods, software, systems, and platforms disclosed herein may comprise one or more databases, or use of the same. In view of the disclosure provided herein, those of skill in the art will recognize that many databases may be suitable for storage and retrieval of imaging information. Suitable databases may include, by way of non-limiting examples, relational databases, non-relational databases, feature oriented databases, feature databases, entity-relationship model databases, associative databases, and XML databases. A database may be internet-based. A database may be web-based. A database may be cloud computing-based. A database may be based on one or more local computer storage devices.

### EXAMPLES

The following illustrative examples are representative of specific embodiments of the methods, systems, and platforms described herein, but are not meant to be limiting in any way.

### Example 1 - Optical Instrument

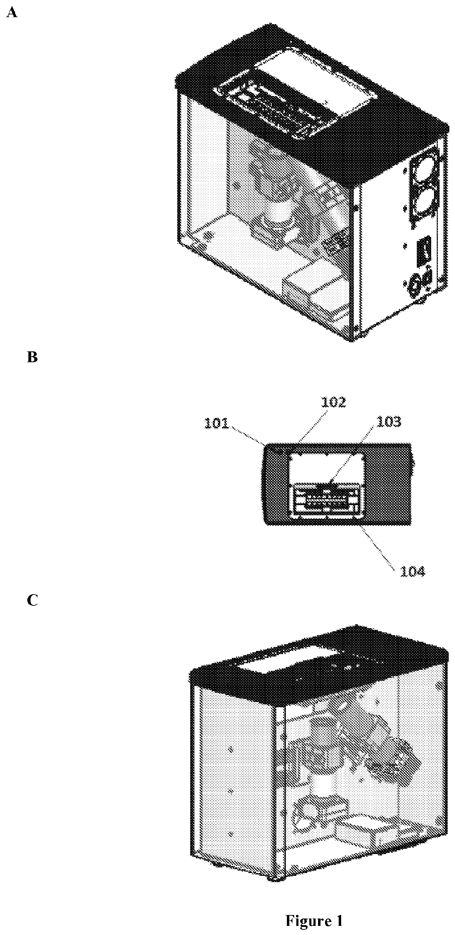

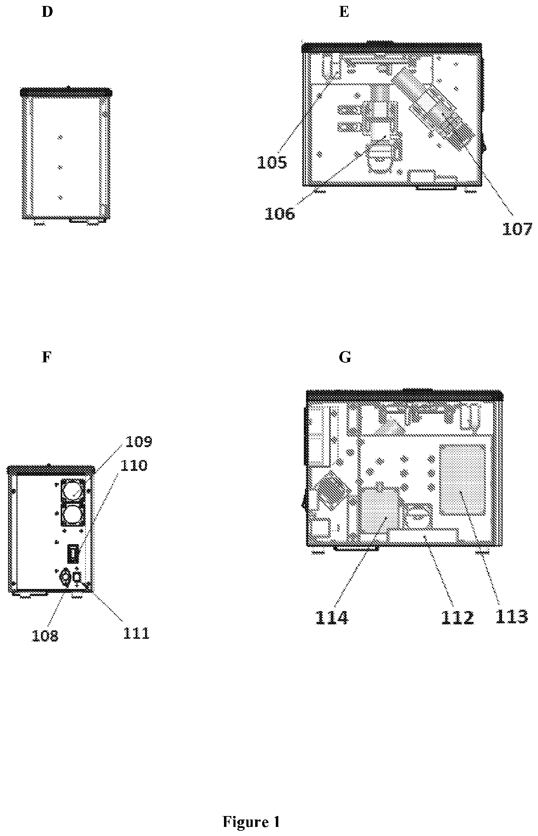

Figure 1 shows one embodiment of the optical instrument. This embodiment was used for simultaneously imaging 2 adjacent wells of a 16-well microscope slide. Each well contained 1024 (32×32) features, also called spots, which may be labeled with fluorescence. A spot diameter was approximately 80 microns. Center-to-center distance between adjacent spots was 161 microns. The purpose of the instrument was to determine the brightness of each spot. Figure 1E shows the translation stage system **105,** imaging system **106,** and illumination system **107.** The translation stage system contained a single-axis translation stage which was constructed from a Misumi model SSELBW9-170 recirculating ball slide driven by a Haydon Kerk 26000-series linear actuator. A holder for a 16-well microscope slide was mounted on the translation stage. The linear actuator was controlled by a Peter Norberg Consulting model BC2D20-0700 motion controller. Figure 1G shows a USB hub **112,** custom circuit board **113,** and a motion controller **114.** The motion controller and the CCD camera were USB devices. The USB hub allowed communication between a computer and the instrument to take place over a single USB cable. The custom circuit board contained a Luxdrive model 3021-D-E-1000 LED driver. The custom circuit board contained a logic chip to synchronize the LED with the CCD camera (turn the LED on when the CCD camera starts an exposure and off when the CCD camera finishes an exposure) and to prevent the LED from turning on when the instrument's door is open.

### Example 2 - Imaging System

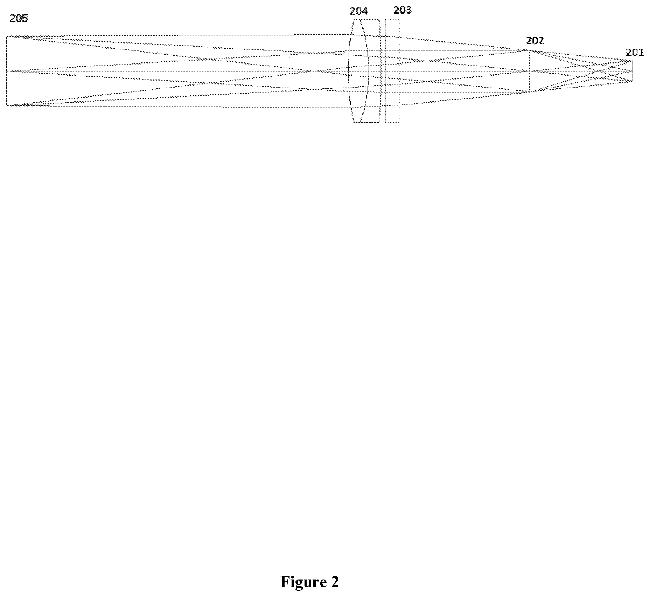

An embodiment of an imaging system is illustrated in Figure 2. Light emitted by dye molecules on a surface of the support **205** was collimated by an achromatic cemented doublet lens **204,** filtered by a bandpass filter **203,** and focused by a camera lens **202** onto the sensor **201** of a CCD camera. Lens **204** (Edmund Optics model 47640) had a focal length of 85 mm and a diameter of 25 mm. Filter **203** (Semrock model FF01-593/40-25) was an emission bandpass filter for use with cy3 or phycoerythrin dye. Lens **202** (Fujinon model HF25HA-1B) has a focal length of 25 mm. Lens **202** was a multi-element lens, but it is shown in Figure 2 as an infinitesimally thin single-element lens because the design details of the multi-element lens were proprietary to Fujinon. The adjustable aperture stop of lens **202** was set to 2.8. The CCD camera (Point Grey Research model CMLN-13S2M-CS) had 1296 × 964 pixels and a pixel size of 3.75 microns. In this embodiment only the central 1280 × 640 pixels were used. The camera's plastic housing was removed and the camera's circuit board was cooled by a small fan. Lenses **204** and **202** formed a finite-conjugate imaging system with a magnification of 0.3.

### Example 3 - Illumination System

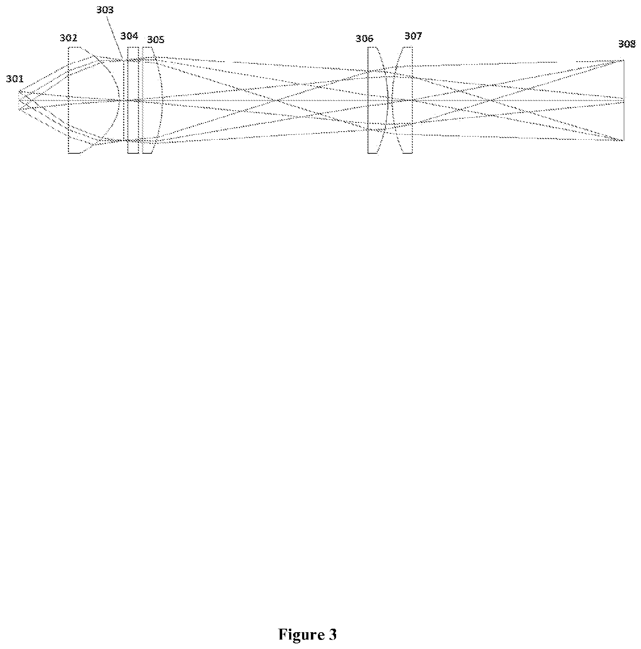

An embodiment of an illumination system is illustrated in Figure 3. Light emitted by light source **301** was collimated by lens **302** and then passed through aperture **303,** bandpass filter **304,** and lenses **305, 306,** and **307,** before reaching sample **308.** Light source **301** (LedEngin model LZ4-40G100) was an LED with a peak emission wavelength of approximately 525 nm. Lens **302** (Thorlabs model ACL2520-A) was an aspheric lens with a diameter of 25 mm and a focal length of 20 mm. Aperture **303** (Fotofab custom part) was a rectangular hole (19 mm × 7.5 mm) in a 25-mm-diameter steel disk. Filter **304** (Semrock model FF01-531/40-25) was an excitation bandpass filter for use with cy3 or phycoerythrin dye. Lenses **305, 306,** and **307** were plano-convex lenses with diameters of 25 mm and focal lengths of 60 mm. Lenses **301** and **302** formed a finite-conjugate imaging system with a magnification of 3 and imaged light source **301** onto the pupils of lenses **306** and **307.** Lenses **306** and **307** formed a finite-conjugate imaging system with a magnification of 1 and imaged aperture **303** onto sample **308.** The illumination system was tilted at 45 degrees with respect to sample **308.** The illuminated area was approximately 19 mm × 10.6 mm, where 10.6 mm (= 7.5 mm / cosine (45 degrees)).

### Example 4 - Reference Probe Preparation

The purpose of this experiment was to illustrate the use of an ad hoc method to count the number of hybridizations taking place on an array. This example used probes that the specific DNA sequences attached to an array. The 32 x 32 feature arrays used in this experiment contain 960 different measure spots along with 32 positive control probes and 32 negative control probes (see Figures 15 and 16). The 32 positive control probes were used to ensure actual binding can occur by using stock oligonucleotide, while the 32 negative control probes contained empty spots with no probes at all. In the image analysis step, we considered a probe to have intensity above the set intensity threshold, then we referred to the probe as a positive probe, while if the probe intensity was below the set intensity threshold, we referred to the probe as a negative feature. Positive probes were assumed to measure whether there was a significant amount of corresponding complementary oligonucleotide in the sample, while negative features represented absent oligonucleotides. The positive probes were otherwise referred to as labels, meaning we can count up to 960 unique labels or barcodes, to measure 960 copies of oligonucleotides in the sample, which can then be further generalized to predict the actual amount of oligonucleotides in the original sample. Depending on the experiment, out of the M total labels, or 960 total labels, we could calculate the total number of copies, N, of the oligonucleotides in the sample, by predicting N from the actual observed unique barcodes or number of positive probes, k.

### Example 5 - Threshold Computation

The purpose of this experiment was to demonostrate one method to compute a threshold for discriminating between labeled and non-labeled features on an array.
I. Set *I_{LL},* intensity lower limit, *I_{UL},* intensity upper limit, and w, window size.
II. Obtain a set of feasible threshold intensities, y = *{yᵢ* : *I_{LL} < Iᵢ < I_{UL}}*
III. Sort y in increasing order to obtain *y*.*
IV. Calculate d = {d₁, d₂, dᵢ, ..., dₘ} , where dᵢ = yᵢ₊₁ - yᵢ*.
V. Calculate a gap statistic for each of the observed intensities: ${x}_{j} = \frac{{\sum }_{i = j - w}^{j + w} {d}_{i}}{2 w + 1}$
VI. Identify the threshold c, such that *c* = *max(xⱼ)*
VII. Count the number of spots, *k,* above the threshold c, where $k = {\sum }_{i = 1}^{m} I \left[{y}_{i}>c\right]$*.*
VIII. Given a number of simulations desired, *nsim,* perform the following procedure *nsim* times: Randomly select *m* values with replacement from y = {*y*₁*, y*₂*,* ..., *yₘ*} to obtain yₛᵢₘ. Then repeat Step I-VII with yₛᵢₘ to obtain a final count.
IX. Calculate *σ̂ₖ* the standard deviation of the *nsim* simulated counts.
X. Calculate the 95% CI for the count as: $\left[k-1.96{\hat{σ}}_{k},k+1.96{\hat{σ}}_{k}\right]$ Note that in order to obtain the true estimate of the molecule count in the sample, we needed to transform by: $N = - m ∗ log \left(1-\frac{k}{m}\right)$ and similarly, for the 95% CI upper and lower values, where m is the total number of features on the array.

### Example 6 - Detection of kan genes

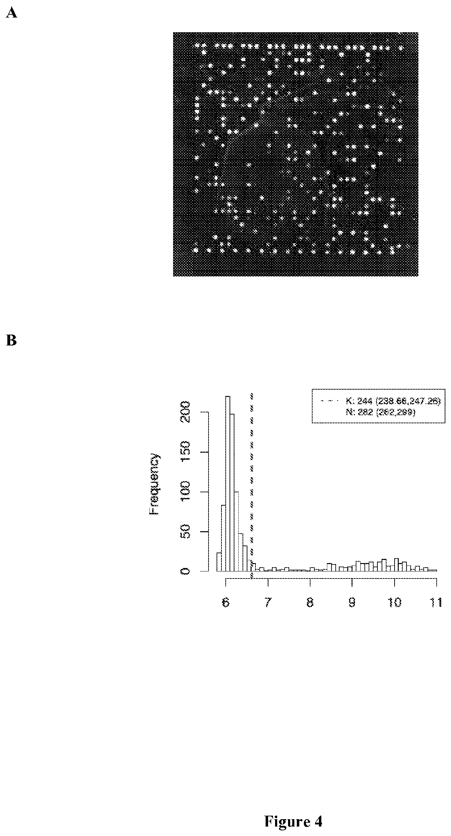

The purpose of this experiment was to determine the count of kan genes in a sample. The sample containing the kan genes was hybridized to an array. Figure 4A displays a region of the array acquired from the imaging system. The bright intensity at a spot was correlated with a higher probability of a gene being present at the spot. The image analysis software examined the statistics of the intensity distribution, such as deviance, skewness, kurtosis, and median. These statistics provided guidance for the software to automatically choose the best method to detect the presence of *kan* genes. In this example, a mixure model algorithm was used to determine the intensity threshold to be 6.6, which optimally divided the intensity distribution into "on" and "off" domains, as shown in Figure 4B.

### Example 7 - Titration Experiment

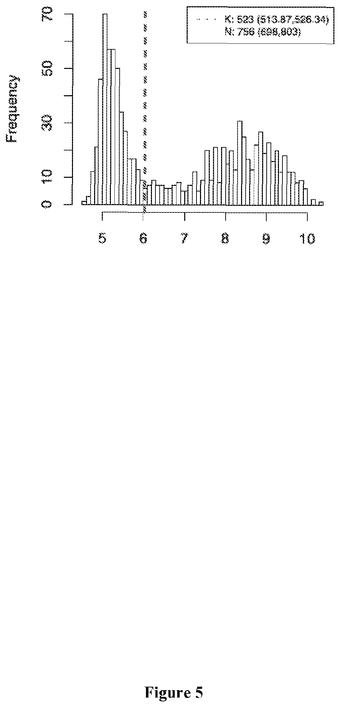

The purpose of this experiment was to detect the presence of molecular hybridization in a titration experiment. After obtaining the intensity measurements of a region, the intensity distribution was computed and is shown in Figure 5. A person with ordinary skill can identify two modes in the distribution; however, it was very difficult to determine the precise value of the threshold. The invented software automated the task of determining the signal intensity threshold, and determined that an intensity value of 6.02 provides the optimal threshold for distinguishing between labeled and non-labeled features.

### Example 8 - Background Adjustment

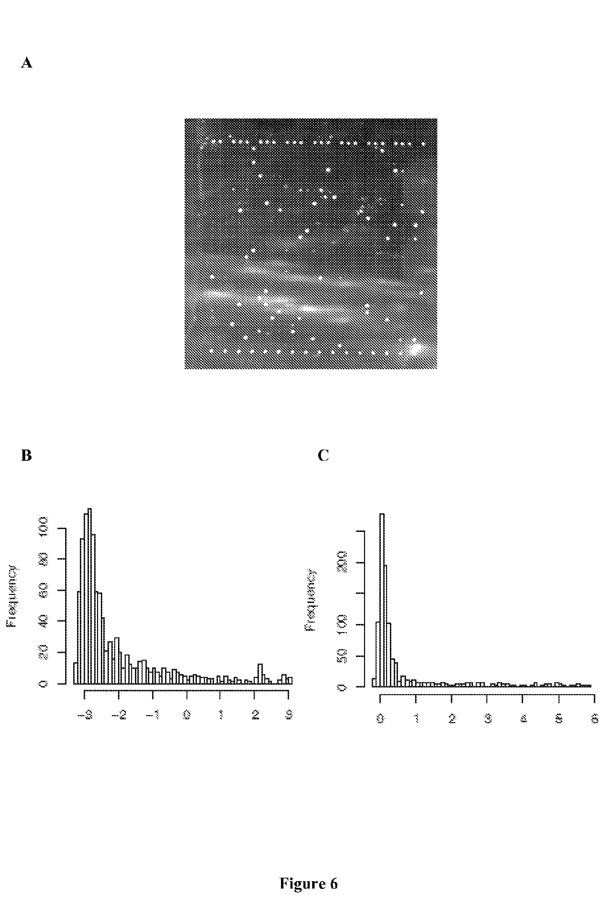

The purpose of this experiment was to demonstrate use of one background subtraction method to process images. Figure 6A shows an acquired image with pronounced artifacts. A systematic background subtraction was performed to reduce noise. We defined an analysis window centered on a spot. The software then calculated the mean spot intensity, *S̅*, spot standard deviation *σₛ,* number of spot pixels n_{S}, background mean *B̅,* background standard deviation *σ_{B},* and number of background pixels *n_{B}.* Then, the software calculated the log2 background subtracted intensity statistic for each spot: $I = \frac{{log}_{2} \left(16\overline{S}\right) - {log}_{2} \left(16 \overline{B}\right)}{\sqrt{\frac{{{τ}_{S}}^{2}}{{n}_{S}} + \frac{{{τ}_{B}}^{2}}{{n}_{B}}}}$ where ${τ}_{S} = lo {g}_{2} \left(16\left({σ}_{S}+\overline{S}\right)\right) - lo {g}_{2} \left(16{σ}_{S}\right)$ ${τ}_{B} = lo {g}_{2} \left(16\left({σ}_{B}+\overline{B}\right)\right) - lo {g}_{2} \left(16{σ}_{B}\right)$ Figures 6B and 6C show the intensity distributions before and after background adjustment, respectively, demonstrating that background correction enhances the ability of the software to correctly evaluate the presence of the labeled features on the array.

### Example 9 - Alternative Background Correction

The purpose of this experiment was an alternative way to adjust background. We defined an analysis window centered on a spot. The software then calculated the median spot intensity *S̃* and median local background intensity *B̃*. Then, the software calculated the log2 background subtracted intensity statistic for each spot: $I = {log}_{2} \left(16{S}^{˜}\right) - {log}_{2} \left(16{S}^{˜}\right) .$

### Example 10 -Pixel 16 Cartridge and Custom Microarray

This example illustrated one embodiment of an array for use with the disclosed methods, systems, and platforms in performing stochastic labeling experiment.

The Pixel16 cartridge consists of (i) an epoxysilane functionalized glass slide serving as an array substrate, (ii) 16 copies of the custom microarray described in Figures 14-16, printed on the functionalized surface of the slide, and (iii) a polymer well frame affixed to the printed side of the slide which serves to define 16 wells which are fluidically separate and in register with the array pattern. The well frame is affixed to the slide following array printing using a die-cut double-sided adhesive.

Custom DNA microarray layout. The microarray pattern consists of a 32 x 32 array of spots as shown in Figures 15 and 16. Fiducial spots in the top and bottom rows permit location of the array in the scanned images. Also, the fiducial spots are arranged in an asymmetric pattern whose orientation is readily identifiable: the top row has a distinctive pattern whose ends are distinct, and the bottom row is different from the top row. This permits easy manual and automatic identification of incorrect placement of the Pixel16, and also facilitates detection of imaging problems. The remaining 960 spots are each associated with one of the unique probe sequences listed in Table 1.

Oligonucleotide sequences and solution components. Oligonucleotide solutions are provided for preparation of printing solutions in 96- well microplates. Concentration as supplied is 100 µM in H2O. Dilution prior to printing is performed using the Tecan GenMate. Dilution is 880 µL of stock oligo + 1320 µL of buffer. The dilution buffer used is 250 mM sodium phosphate with 0.00833% sarcosyl. Buffer is filtered using a 0.2 µm filter. Three sets of plates are prepared in each probe preparation operation. Tips are discarded after each source plate. The final dispensed solution is 40 µM DNA in 150 mM sodium phosphate with 0.005% sarcosyl. The fiducial oligo is supplied at 500 µM in H2O. The fiducial oligonucleotide sequence is: 5'- /5AmMC6/TCC TGA ACG GTA GCATCT TGA CGA C - 3', 25 bases, 5' Amino Modifier C6, standard desalting; supplied at 500 µM in H₂O. The fiducial is diluted by mixing 176 µL of fiducial, 704 µL of water, and 1320 µL of buffer. The final fiducial mixture is 40 µM in 150 mM sodium phosphate with 0.005% sarcosyl.

Table of oligonucleotide sequences. The oligonucleotide sequences for the 960 probe sequences (i.e. the sequences that are complementary to the set of stochastic labeling sequences used in molecular counting experiments) are listed in Table 1.

**Table 1 - Oligonucleotide Probe Sequences for Custom Microarray**

| Plate Name | IDT Ref. # | Well Pos. | Seq Name | Sequence | IDT Mfg ID | Calc'd Molec. Weight | Tₘ |
|---|---|---|---|---|---|---|---|
| AJ_P1 | 85652789 | A01 | AJ_1 | | 106534039 | 8795 | 61.7 |
| AJ_P1 | 85652790 | A02 | AJ_2 | | 106534040 | 8727 | 59.7 |
| AJ_P1 | 85652791 | A03 | AJ_3 | | 106534041 | 8675 | 61.8 |
| | | | | | | | |
| AJ_P1 | 85652792 | A04 | AJ_4 | | 106534042 | 8672 | 60.3 |
| AJ_P1 | 85652793 | A05 | AJ_5 | | 106534043 | 8657 | 60.7 |
| AJ_P1 | 85652794 | A06 | AJ_6 | | 106534044 | 8755 | 62.3 |
| AJ_P1 | 85652795 | A07 | AJ_7 | | 106534045 | 8786 | 62.3 |
| AJ_P1 | 85652796 | A08 | AJ_8 | | 106534046 | 8712 | 60.4 |
| AJ_P1 | 85652797 | A09 | AJ_9 | | 106534047 | 8752 | 59.8 |
| AJ_P1 | 85652798 | A10 | AJ_10 | | 106534048 | 8745 | 58.4 |
| AJ_P1 | 85652799 | A11 | AJ_11 | | 106534049 | 8761 | 60 |
| AJ_P1 | 85652800 | A12 | AJ_12 | | 106534050 | 8697 | 61.4 |
| AJ_P1 | 85652801 | B01 | AJ_13 | | 106534051 | 8779 | 59.7 |
| AJ_P1 | 85652802 | B02 | AJ_14 | | 106534052 | 8699 | 60 |
| AJ_P1 | 85652803 | B03 | AJ_15 | | 106534053 | 8690 | 61.9 |
| AJ_P1 | 85652804 | B04 | AJ_16 | | 106534054 | 8666 | 61.3 |
| AJ_P1 | 85652805 | B05 | AJ_17 | | 106534055 | 8745 | 59.4 |
| AJ_P1 | 85652806 | B06 | AJ_18 | | 106534056 | 8737 | 62.3 |
| AJ_P1 | 85652807 | B07 | AJ_19 | | 106534057 | 8795 | 60.6 |
| AJ_P1 | 85652808 | B08 | AJ_20 | | 106534058 | 8687 | 58.9 |
| AJ_P1 | 85652809 | B09 | AJ_21 | | 106534059 | 8687 | 58.8 |
| | | | | | | | |
| AJ_P1 | 85652810 | B10 | AJ_22 | | 106534060 | 8672 | 58.6 |
| AJ_P1 | 85652811 | B11 | AJ_23 | | 106534061 | 8681 | 60.4 |
| AJ_P1 | 85652812 | B12 | AJ_24 | | 106534062 | 8672 | 60.3 |
| AJ_P1 | 85652813 | C01 | AJ_25 | | 106534063 | 8795 | 61.8 |
| AJ_P1 | 85652814 | C02 | AJ_26 | | 106534064 | 8657 | 62.4 |
| AJ_P1 | 85652815 | C03 | AJ_27 | | 106534065 | 8712 | 60.1 |
| AJ_P1 | 85652816 | C04 | AJ_28 | | 106534066 | 8681 | 59.4 |
| AJ_P1 | 85652817 | C05 | AJ_29 | | 106534067 | 8745 | 58.4 |
| AJ_P1 | 85652818 | C06 | AJ_30 | | 106534068 | 8763 | 59.3 |
| AJ_P1 | 85652819 | C07 | AJ_31 | | 106534069 | 8752 | 60.7 |
| AJ_P1 | 85652820 | C08 | AJ_32 | | 106534070 | 8672 | 60.5 |
| AJ_P1 | 85652821 | C09 | AJ_33 | | 106534071 | 8779 | 60.6 |
| AJ_P1 | 85652822 | C10 | AJ_34 | | 106534072 | 8705 | 59.8 |
| AJ_P1 | 85652823 | C11 | AJ_35 | | 106534073 | 8752 | 60.7 |
| AJ_P1 | 85652824 | C12 | AJ_36 | | 106534074 | 8672 | 61.9 |
| AJ_P1 | 85652825 | D01 | AJ_37 | | 106534075 | 8754 | 59.7 |
| AJ_P1 | 85652826 | D02 | AJ_38 | | 106534076 | 8723 | 59 |
| AJ_P1 | 85652827 | D03 | AJ_39 | | 106534077 | 8687 | 58.7 |
| | | | | | | | |
| AJ_P1 | 85652828 | D04 | AJ_40 | | 106534078 | 8786 | 61 |
| AJ_P1 | 85652829 | D05 | AJ_41 | | 106534079 | 8687 | 58.8 |
| AJ_P1 | 85652830 | D06 | AJ_42 | | 106534080 | 8705 | 59.5 |
| AJ_P1 | 85652831 | D07 | AJ_43 | | 106534081 | 8666 | 61.4 |
| AJ_P1 | 85652832 | D08 | AJ_44 | | 106534082 | 8752 | 60.5 |
| AJ_P1 | 85652833 | D09 | AJ_45 | | 106534083 | 8727 | 59.2 |
| AJ_P1 | 85652834 | D10 | AJ_46 | | 106534084 | 8730 | 61.5 |
| AJ_P1 | 85652835 | D11 | AJ_47 | | 106534085 | 8696 | 59.4 |
| AJ_P1 | 85652836 | D12 | AJ_48 | | 106534086 | 8681 | 59.7 |
| AJ_P1 | 85652837 | E01 | AJ_49 | | 106534087 | 8699 | 59.8 |
| AJ_P1 | 85652838 | E02 | AJ_50 | | 106534088 | 8690 | 60.6 |
| AJ_P1 | 85652839 | E03 | AJ_51 | | 106534089 | 8690 | 58.9 |
| AJ_P1 | 85652840 | E04 | AJ_52 | | 106534090 | 8779 | 60.9 |
| AJ_P1 | 85652841 | E05 | AJ_53 | | 106534091 | 8690 | 61.5 |
| AJ_P1 | 85652842 | E06 | AJ_54 | | 106534092 | 8672 | 61.3 |
| AJ_P1 | 85652843 | E07 | AJ_55 | | 106534093 | 8777 | 61.7 |
| AJ_P1 | 85652844 | E08 | AJ_56 | | 106534094 | 8696 | 59.7 |
| AJ_P1 | 85652845 | E09 | AJ_57 | | 106534095 | 8657 | 61.2 |
| | | | | | | | |
| AJ_P1 | 85652846 | E10 | AJ_58 | | 106534096 | 8779 | 60.1 |
| AJ_P1 | 85652847 | E11 | AJ_59 | | 106534097 | 8712 | 60.7 |
| AJ_P1 | 85652848 | E12 | AJ_60 | | 106534098 | 8721 | 60.5 |
| AJ_P1 | 85652849 | F01 | AJ_61 | | 106534099 | 8696 | 59 |
| AJ_P1 | 85652850 | F02 | AJ_62 | | 106534100 | 8705 | 58.8 |
| AJ_P1 | 85652851 | F03 | AJ_63 | | 106534101 | 8779 | 60 |
| AJ_P1 | 85652852 | F04 | AJ_64 | | 106534102 | 8696 | 60 |
| AJ_P1 | 85652853 | F05 | AJ_65 | | 106534103 | 8690 | 61.3 |
| AJ_P1 | 85652854 | F06 | AJ_66 | | 106534104 | 8687 | 58.4 |
| AJ_P1 | 85652855 | F07 | AJ_67 | | 106534105 | 8779 | 59.7 |
| AJ_P1 | 85652856 | F08 | AJ_68 | | 106534106 | 8770 | 58.5 |
| AJ_P1 | 85652857 | F09 | AJ_69 | | 106534107 | 8672 | 59.6 |
| AJ_P1 | 85652858 | F10 | AJ_70 | | 106534108 | 8770 | 60.7 |
| AJ_P1 | 85652859 | F11 | AJ_71 | | 106534109 | 8712 | 60.7 |
| AJ_P1 | 85652860 | F12 | AJ_72 | | 106534110 | 8690 | 59 |
| AJ_P1 | 85652861 | G01 | AJ_73 | | 106534111 | 8672 | 60.9 |
| AJ_P1 | 85652862 | G02 | AJ_74 | | 106534112 | 8721 | 60.6 |
| AJ_P1 | 85652863 | G03 | AJ_75 | | 106534113 | 8696 | 59.9 |
| | | | | | | | |
| AJ_P1 | 85652864 | G04 | AJ_76 | | 106534114 | 8761 | 59.7 |
| AJ_P1 | 85652865 | G05 | AJ_77 | | 106534115 | 8681 | 61.2 |
| AJ_P1 | 85652866 | G06 | AJ_78 | | 106534116 | 8699 | 61 |
| AJ_P1 | 85652867 | G07 | AJ_79 | | 106534117 | 8687 | 59.7 |
| AJ_P1 | 85652868 | G08 | AJ_80 | | 106534118 | 8690 | 60.7 |
| AJ_P1 | 85652869 | G09 | AJ_81 | | 106534119 | 8690 | 61.2 |
| AJ_P1 | 85652870 | G10 | AJ_82 | | 106534120 | 8739 | 60.5 |
| AJ_P1 | 85652871 | G11 | AJ_83 | | 106534121 | 8721 | 59.9 |
| AJ_P1 | 85652872 | G12 | AJ_84 | | 106534122 | 8696 | 58.9 |
| AJ_P1 | 85652873 | H01 | AJ_85 | | 106534123 | 8681 | 60.9 |
| AJ_P1 | 85652874 | H02 | AJ_86 | | 106534124 | 8699 | 60.7 |
| AJ_P1 | 85652875 | H03 | AJ_87 | | 106534125 | 8657 | 62.2 |
| AJ_P1 | 85652876 | H04 | AJ_88 | | 106534126 | 8770 | 61.2 |
| AJ_P1 | 85652877 | H05 | AJ_89 | | 106534127 | 8675 | 61.9 |
| AJ_P1 | 85652878 | H06 | AJ_90 | | 106534128 | 8723 | 59.2 |
| AJ_P1 | 85652879 | H07 | AJ_91 | | 106534129 | 8745 | 59.3 |
| AJ_P1 | 85652880 | H08 | AJ_92 | | 106534130 | 8727 | 59.3 |
| AJ_P1 | 85652881 | H09 | AJ_93 | | 106534131 | 8690 | 59.6 |
| | | | | | | | |
| AJ_P1 | 85652882 | H10 | AJ_94 | | 106534132 | 8763 | 58.2 |
| AJ_P1 | 85652883 | H11 | AJ_95 | | 106534133 | 8761 | 60.6 |
| AJ_P1 | 85652884 | H12 | AJ_96 | | 106534134 | 8657 | 61 |
| AJ_P2 | 85652886 | A01 | AJ_97 | | 106534135 | 8746 | 61.3 |
| AJ_P2 | 85652887 | A02 | AJ_98 | | 106534136 | 8752 | 60.2 |
| AJ_P2 | 85652888 | A03 | AJ_99 | | 106534137 | 8675 | 62.1 |
| AJ_P2 | 85652889 | A04 | AJ_100 | | 106534138 | 8736 | 59.8 |
| AJ_P2 | 85652890 | A05 | AJ_101 | | 106534139 | 8681 | 61.2 |
| AJ_P2 | 85652891 | A06 | AJ_102 | | 106534140 | 8705 | 59.4 |
| AJ_P2 | 85652892 | A07 | AJ_103 | | 106534141 | 8777 | 61.4 |
| AJ_P2 | 85652893 | A08 | AJ_104 | | 106534142 | 8739 | 60.1 |
| AJ_P2 | 85652894 | A09 | AJ_105 | | 106534143 | 8779 | 60.7 |
| AJ_P2 | 85652895 | A10 | AJ_106 | | 106534144 | 8687 | 58.9 |
| AJ_P2 | 85652896 | A11 | AJ_107 | | 106534145 | 8746 | 61.9 |
| AJ_P2 | 85652897 | A12 | AJ_108 | | 106534146 | 8675 | 60.7 |
| AJ_P2 | 85652898 | B01 | AJ_109 | | 106534147 | 8739 | 59.9 |
| AJ_P2 | 85652899 | B02 | AJ_110 | | 106534148 | 8736 | 59.3 |
| AJ_P2 | 85652900 | B03 | AJ_111 | | 106534149 | 8752 | 60.5 |
| | | | | | | | |
| AJ_P2 | 85652901 | B04 | AJ_112 | | 106534150 | 8727 | 58 |
| AJ_P2 | 85652902 | B05 | AJ_113 | | 106534151 | 8681 | 59.8 |
| AJ_P2 | 85652903 | B06 | AJ_114 | | 106534152 | 8672 | 60.7 |
| AJ_P2 | 85652904 | B07 | AJ_115 | | 106534153 | 8666 | 62.2 |
| AJ_P2 | 85652905 | B08 | AJ_116 | | 106534154 | 8763 | 59.3 |
| AJ_P2 | 85652906 | B09 | AJ_117 | | 106534155 | 8721 | 58.4 |
| AJ_P2 | 85652907 | B10 | AJ_118 | | 106534156 | 8779 | 60.3 |
| AJ_P2 | 85652908 | B11 | AJ_119 | | 106534157 | 8727 | 59.7 |
| AJ_P2 | 85652909 | B12 | AJ_120 | | 106534158 | 8752 | 60.8 |
| AJ_P2 | 85652910 | C01 | AJ_121 | | 106534159 | 8755 | 61.9 |
| AJ_P2 | 85652911 | C02 | AJ_122 | | 106534160 | 8723 | 58.7 |
| AJ_P2 | 85652912 | C03 | AJ_123 | | 106534161 | 8727 | 60.1 |
| AJ_P2 | 85652913 | C04 | AJ_124 | | 106534162 | 8675 | 60.9 |
| AJ_P2 | 85652914 | C05 | AJ_125 | | 106534163 | 8699 | 60.3 |
| AJ_P2 | 85652915 | C06 | AJ_126 | | 106534164 | 8736 | 59.7 |
| AJ_P2 | 85652916 | C07 | AJ_127 | | 106534165 | 8736 | 59.4 |
| AJ_P2 | 85652917 | C08 | AJ_128 | | 106534166 | 8723 | 59.3 |
| AJ_P2 | 85652918 | C09 | AJ_129 | | 106534167 | 8723 | 59.7 |
| | | | | | | | |
| AJ_P2 | 85652919 | C10 | AJ_130 | | 106534168 | 8657 | 61.9 |
| AJ_P2 | 85652920 | C11 | AJ_131 | | 106534169 | 8752 | 59.4 |
| AJ_P2 | 85652921 | C12 | AJ_132 | | 106534170 | 8697 | 61 |
| AJ_P2 | 85652922 | D01 | AJ_133 | | 106534171 | 8687 | 58.6 |
| AJ_P2 | 85652923 | D02 | AJ_134 | | 106534172 | 8755 | 61.9 |
| AJ_P2 | 85652924 | D03 | AJ_135 | | 106534173 | 8761 | 60.5 |
| AJ_P2 | 85652925 | D04 | AJ_136 | | 106534174 | 8746 | 62.3 |
| AJ_P2 | 85652926 | D05 | AJ_137 | | 106534175 | 8705 | 59.1 |
| AJ_P2 | 85652927 | D06 | AJ_138 | | 106534176 | 8752 | 60.3 |
| AJ_P2 | 85652928 | D07 | AJ_139 | | 106534177 | 8687 | 59.6 |
| AJ_P2 | 85652929 | D08 | AJ_140 | | 106534178 | 8690 | 60.4 |
| AJ_P2 | 85652930 | D09 | AJ_141 | | 106534179 | 8752 | 59.7 |
| AJ_P2 | 85652931 | D10 | AJ_142 | | 106534180 | 8672 | 60.5 |
| AJ_P2 | 85652932 | D11 | AJ_143 | | 106534181 | 8763 | 57.7 |
| AJ_P2 | 85652933 | D12 | AJ_144 | | 106534182 | 8755 | 60.7 |
| AJ_P2 | 85652934 | E01 | AJ_145 | | 106534183 | 8763 | 59.1 |
| AJ_P2 | 85652935 | E02 | AJ_146 | | 106534184 | 8672 | 60.3 |
| AJ_P2 | 85652936 | E03 | AJ_147 | | 106534185 | 8697 | 62.1 |
| | | | | | | | |
| AJ_P2 | 85652937 | E04 | AJ_148 | | 106534186 | 8681 | 59.3 |
| AJ_P2 | 85652938 | E05 | AJ_149 | | 106534187 | 8666 | 61.9 |
| AJ_P2 | 85652939 | E06 | AJ_150 | | 106534188 | 8672 | 60.7 |
| AJ_P2 | 85652940 | E07 | AJ_151 | | 106534189 | 8690 | 61.1 |
| AJ_P2 | 85652941 | E08 | AJ_152 | | 106534190 | 8752 | 60.1 |
| AJ_P2 | 85652942 | E09 | AJ_153 | | 106534191 | 8770 | 59.2 |
| AJ_P2 | 85652943 | E10 | AJ_154 | | 106534192 | 8752 | 60.3 |
| AJ_P2 | 85652944 | E11 | AJ_155 | | 106534193 | 8690 | 60.7 |
| AJ_P2 | 85652945 | E12 | AJ_156 | | 106534194 | 8777 | 61.6 |
| AJ_P2 | 85652946 | F01 | AJ_157 | | 106534195 | 8697 | 61.8 |
| AJ_P2 | 85652947 | F02 | AJ_158 | | 106534196 | 8687 | 59.8 |
| AJ_P2 | 85652948 | F03 | AJ_159 | | 106534197 | 8690 | 61.3 |
| AJ_P2 | 85652949 | F04 | AJ_160 | | 106534198 | 8770 | 60 |
| AJ_P2 | 85652950 | F05 | AJ_161 | | 106534199 | 8736 | 59.2 |
| AJ_P2 | 85652951 | F06 | AJ_162 | | 106534200 | 8727 | 58.3 |
| AJ_P2 | 85652952 | F07 | AJ_163 | | 106534201 | 8763 | 58 |
| AJ_P2 | 85652953 | F08 | AJ_164 | | 106534202 | 8779 | 59.8 |
| AJ_P2 | 85652954 | F09 | AJ_165 | | 106534203 | 8681 | 59.9 |
| | | | | | | | |
| AJ_P2 | 85652955 | F10 | AJ_166 | | 106534204 | 8672 | 59.5 |
| AJ_P2 | 85652956 | F11 | AJ_167 | | 106534205 | 8699 | 59.3 |
| AJ_P2 | 85652957 | F12 | AJ_168 | | 106534206 | 8723 | 58.9 |
| AJ_P2 | 85652958 | G01 | AJ_169 | | 106534207 | 8761 | 61 |
| AJ_P2 | 85652959 | G02 | AJ_170 | | 106534208 | 8696 | 59.9 |
| AJ_P2 | 85652960 | G03 | AJ_171 | | 106534209 | 8727 | 59.4 |
| AJ_P2 | 85652961 | G04 | AJ_172 | | 106534210 | 8699 | 60.5 |
| AJ_P2 | 85652962 | G05 | AJ_173 | | 106534211 | 8761 | 60.1 |
| AJ_P2 | 85652963 | G06 | AJ_174 | | 106534212 | 8666 | 61.6 |
| AJ_P2 | 85652964 | G07 | AJ_175 | | 106534213 | 8739 | 59.7 |
| AJ_P2 | 85652965 | G08 | AJ_176 | | 106534214 | 8723 | 60.1 |
| AJ_P2 | 85652966 | G09 | AJ_177 | | 106534215 | 8779 | 59.5 |
| AJ_P2 | 85652967 | G10 | AJ_178 | | 106534216 | 8723 | 58.8 |
| AJ_P2 | 85652968 | G11 | AJ_179 | | 106534217 | 8727 | 59.4 |
| AJ_P2 | 85652969 | G12 | AJ_180 | | 106534218 | 8752 | 59.7 |
| AJ_P2 | 85652970 | H01 | AJ_181 | | 106534219 | 8712 | 60.7 |
| AJ_P2 | 85652971 | H02 | AJ_182 | | 106534220 | 8777 | 61.9 |
| AJ_P2 | 85652972 | H03 | AJ_183 | | 106534221 | 8739 | 60.2 |
| | | | | | | | |
| AJ_P2 | 85652973 | H04 | AJ_184 | | 106534222 | 8777 | 61.9 |
| AJ_P2 | 85652974 | H05 | AJ_185 | | 106534223 | 8730 | 61 |
| AJ_P2 | 85652975 | H06 | AJ_186 | | 106534224 | 8763 | 58.8 |
| AJ_P2 | 85652976 | H07 | AJ_187 | | 106534225 | 8761 | 59.3 |
| AJ_P2 | 85652977 | H08 | AJ_188 | | 106534226 | 8736 | 59.7 |
| AJ_P2 | 85652978 | H09 | AJ_189 | | 106534227 | 8672 | 60.5 |
| AJ_P2 | 85652979 | H10 | AJ_190 | | 106534228 | 8666 | 61.7 |
| AJ_P2 | 85652980 | H11 | AJ_191 | | 106534229 | 8770 | 59.2 |
| AJ_P2 | 85652981 | H12 | AJ_192 | | 106534230 | 8712 | 60.1 |
| AJ_P3 | 85652983 | AOL | AJ_193 | | 106534231 | 8761 | 60.1 |
| AJ_P3 | 85652984 | A02 | AJ_194 | | 106534232 | 8705 | 59.7 |
| AJ_P3 | 85652985 | A03 | AJ_195 | | 106534233 | 8672 | 60.8 |
| AJ_P3 | 85652986 | A04 | AJ_196 | | 106534234 | 8779 | 59.4 |
| AJ_P3 | 85652987 | A05 | AJ_197 | | 106534235 | 8687 | 59.9 |
| AJ_P3 | 85652988 | A06 | AJ_198 | | 106534236 | 8770 | 59.5 |
| AJ_P3 | 85652989 | A07 | AJ_199 | | 106534237 | 8739 | 62.2 |
| AJ_P3 | 85652990 | A08 | AJ_200 | | 106534238 | 8755 | 62.1 |
| AJ_P3 | 85652991 | A09 | AJ 201 | | 106534239 | 8795 | 61.6 |
| | | | | | | | |
| AJ_P3 | 85652992 | A10 | AJ_202 | | 106534240 | 8712 | 60.4 |
| AJ_P3 | 85652993 | A11 | AJ_203 | | 106534241 | 8699 | 59.6 |
| AJ_P3 | 85652994 | A12 | AJ_204 | | 106534242 | 8715 | 61.5 |
| AJ_P3 | 85652995 | B01 | AJ_205 | | 106534243 | 8690 | 60.1 |
| AJ_P3 | 85652996 | B02 | AJ_206 | | 106534244 | 8706 | 61.8 |
| AJ_P3 | 85652997 | B03 | AJ_207 | | 106534245 | 8699 | 60.2 |
| AJ_P3 | 85652998 | B04 | AJ_208 | | 106534246 | 8761 | 60 |
| AJ_P3 | 85652999 | B05 | AJ_209 | | 106534247 | 8730 | 61.3 |
| AJ_P3 | 85653000 | B06 | AJ_210 | | 106534248 | 8745 | 59.7 |
| AJ_P3 | 85653001 | B07 | AJ_211 | | 106534249 | 8763 | 58.3 |
| AJ_P3 | 85653002 | B08 | AJ_212 | | 106534250 | 8779 | 60.1 |
| AJ_P3 | 85653003 | B09 | AJ_213 | | 106534251 | 8712 | 59.8 |
| AJ_P3 | 85653004 | B10 | AJ_214 | | 106534252 | 8727 | 59.6 |
| AJ_P3 | 85653005 | B11 | AJ_215 | | 106534253 | 8746 | 62.6 |
| AJ_P3 | 85653006 | B12 | AJ_216 | | 106534254 | 8779 | 60.5 |
| AJ_P3 | 85653007 | C01 | AJ_217 | | 106534255 | 8723 | 58.3 |
| AJ_P3 | 85653008 | C02 | AJ_218 | | 106534256 | 8727 | 59 |
| AJ_P3 | 85653009 | C03 | AJ_219 | | 106534257 | 8672 | 60.5 |
| | | | | | | | |
| AJ_P3 | 85653010 | C04 | AJ_220 | | 106534258 | 8745 | 59.1 |
| AJ_P3 | 85653011 | C05 | AJ_221 | | 106534259 | 8739 | 59.6 |
| AJ_P3 | 85653012 | C06 | AJ_222 | | 106534260 | 8712 | 59.8 |
| AJ_P3 | 85653013 | C07 | AJ_223 | | 106534261 | 8699 | 60.2 |
| AJ_P3 | 85653014 | C08 | AI_224 | | 106534262 | 8779 | 59.3 |
| AJ_P3 | 85653015 | C09 | AJ_225 | | 106534263 | 8730 | 61 |
| AJ_P3 | 85653016 | C10 | AJ_226 | | 106534264 | 8736 | 59 |
| AJ_P3 | 85653017 | C11 | AJ_227 | | 106534265 | 8779 | 59.2 |
| AJ_P3 | 85653018 | C12 | AJ_228 | | 106534266 | 8770 | 60.3 |
| AJ_P3 | 85653019 | D01 | AJ_229 | | 106534267 | 8687 | 59.3 |
| AJ_P3 | 85653020 | D02 | AJ_230 | | 106534268 | 8779 | 59.7 |
| AJ_P3 | 85653021 | D03 | AJ_231 | | 106534269 | 8777 | 61.6 |
| AJ_P3 | 85653022 | D04 | AJ_232 | | 106534270 | 8752 | 60.5 |
| AJ_P3 | 85653023 | D05 | AJ_233 | | 106534271 | 8763 | 58.6 |
| AJ_P3 | 85653024 | D06 | AJ_234 | | 106534272 | 8723 | 59 |
| AJ_P3 | 85653025 | D07 | AJ_235 | | 106534273 | 8736 | 58.1 |
| AJ_P3 | 85653026 | D08 | AJ_236 | | 106534274 | 8795 | 62.3 |
| AJ_P3 | 85653027 | D09 | AJ_237 | | 106534275 | 8752 | 61.9 |
| | | | | | | | |
| AJ_P3 | 85653028 | D10 | AJ_238 | | 106534276 | 8746 | 62 |
| AJ_P3 | 85653029 | D11 | AJ_239 | | 106534277 | 8687 | 59.7 |
| AJ_P3 | 85653030 | D12 | AJ_240 | | 106534278 | 8712 | 59.5 |
| AJ_P3 | 85653031 | E01 | AJ_241 | | 106534279 | 8712 | 60.3 |
| AJ_P3 | 85653032 | E02 | AJ_242 | | 106534280 | 8763 | 58.7 |
| AJ_P3 | 85653033 | E03 | AJ_243 | | 106534281 | 8779 | 59.6 |
| AJ_P3 | 85653034 | E04 | AJ_244 | | 106534282 | 8714 | 58.9 |
| AJ_P3 | 85653035 | E05 | AJ_245 | | 106534283 | 8699 | 60.5 |
| AJ_P3 | 85653036 | E06 | AJ_246 | | 106534284 | 8723 | 58.4 |
| AJ_P3 | 85653037 | E07 | AJ_247 | | 106534285 | 8763 | 59.1 |
| AJ_P3 | 85653038 | E08 | AJ_248 | | 106534286 | 8705 | 59.3 |
| AJ_P3 | 85653039 | E09 | AJ_249 | | 106534287 | 8770 | 60.7 |
| AJ_P3 | 85653040 | E10 | AJ_250 | | 106534288 | 8723 | 59.4 |
| AJ_P3 | 85653041 | E11 | AJ_251 | | 106534289 | 8690 | 60.1 |
| AJ_P3 | 85653042 | E12 | AJ_252 | | 106534290 | 8687 | 59.3 |
| AJ_P3 | 85653043 | F01 | AJ_253 | | 106534291 | 8755 | 61.6 |
| AJ_P3 | 85653044 | F02 | AJ_254 | | 106534292 | 8770 | 60 |
| AJ_P3 | 85653045 | F03 | AJ_255 | | 106534293 | 8666 | 61.5 |
| | | | | | | | |
| AJ_P3 | 85653046 | F04 | AJ_256 | | 106534294 | 8739 | 59.5 |
| AJ_P3 | 85653047 | F05 | AJ_257 | | 106534295 | 8714 | 59.1 |
| AJ_P3 | 85653048 | F06 | AJ_258 | | 106534296 | 8675 | 62.2 |
| AJ_P3 | 85653049 | F07 | AJ_259 | | 106534297 | 8690 | 60.7 |
| AJ_P3 | 85653050 | F08 | AJ_260 | | 106534298 | 8761 | 60.5 |
| AJ_P3 | 85653051 | F09 | AJ_261 | | 106534299 | 8721 | 60.8 |
| AJ_P3 | 85653052 | F10 | AJ_262 | | 106534300 | 8687 | 58.8 |
| AJ_P3 | 85653053 | F11 | AJ_263 | | 106534301 | 8739 | 59.8 |
| AJ_P3 | 85653054 | F12 | AJ_264 | | 106534302 | 8779 | 59.3 |
| AJ_P3 | 85653055 | G01 | AJ_265 | | 106534303 | 8795 | 61.7 |
| AJ_P3 | 85653056 | G02 | AJ_266 | | 106534304 | 8690 | 60.7 |
| AJ_P3 | 85653057 | G03 | AJ_267 | | 106534305 | 8739 | 60.2 |
| AJ_P3 | 85653058 | G04 | AJ_268 | | 106534306 | 8681 | 59.8 |
| AJ_P3 | 85653059 | G05 | AJ_269 | | 106534307 | 8690 | 60.3 |
| AJ_P3 | 85653060 | G06 | AJ_270 | | 106534308 | 8697 | 61.4 |
| AJ_P3 | 85653061 | G07 | AJ_271 | | 106534309 | 8736 | 59.8 |
| AJ_P3 | 85653062 | G08 | AJ_272 | | 106534310 | 8730 | 61.2 |
| AJ_P3 | 85653063 | G09 | AJ_273 | | 106534311 | 8727 | 59.1 |
| | | | | | | | |
| AJ_P3 | 85653064 | G10 | AJ_274 | | 106534312 | 8712 | 59.5 |
| AJ_P3 | 85653065 | G11 | AJ_275 | | 106534313 | 8690 | 60.2 |
| AJ_P3 | 85653066 | G12 | AJ_276 | | 106534314 | 8687 | 59.7 |
| AJ_P3 | 85653067 | H01 | AJ_277 | | 106534315 | 8672 | 60.7 |
| AJ_P3 | 85653068 | H02 | AJ_278 | | 106534316 | 8687 | 59.4 |
| AJ_P3 | 85653069 | H03 | AJ_279 | | 106534317 | 8770 | 61.4 |
| AJ_P3 | 85653070 | H04 | AJ_280 | | 106534318 | 8795 | 60.9 |
| AJ_P3 | 85653071 | H05 | AJ_281 | | 106534319 | 8672 | 59.1 |
| AJ_P3 | 85653072 | H06 | AJ_282 | | 106534320 | 8706 | 61 |
| AJ_P3 | 85653073 | H07 | AJ_283 | | 106534321 | 8672 | 60.3 |
| AJ_P3 | 85653074 | H08 | AJ_284 | | 106534322 | 8715 | 61.6 |
| AJ_P3 | 85653075 | H09 | AJ_285 | | 106534323 | 8795 | 62.2 |
| AJ_P3 | 85653076 | H10 | AJ_286 | | 106534324 | 8696 | 59.4 |
| AJ_P3 | 85653077 | H11 | AJ_287 | | 106534325 | 8777 | 61.4 |
| AJ_P3 | 85653078 | H12 | AJ_288 | | 106534326 | 8672 | 60.8 |
| AJ_P4 | 85653080 | A01 | AJ_289 | | 106534327 | 8712 | 60.5 |
| AJ_P4 | 85653081 | A02 | AJ_290 | | 106534328 | 8723 | 58.4 |
| AJ_P4 | 85653082 | A03 | AJ_291 | | 106534329 | 8675 | 61.8 |
| | | | | | | | |
| AJ_P4 | 85653083 | A04 | AJ_292 | | 106534330 | 8754 | 59.7 |
| AJ_P4 | 85653084 | A05 | AJ_293 | | 106534331 | 8690 | 61.2 |
| AJ_P4 | 85653085 | A06 | AJ_294 | | 106534332 | 8763 | 59.2 |
| AJ_P4 | 85653086 | A07 | AJ_295 | | 106534333 | 8763 | 59.1 |
| AJ_P4 | 85653087 | A08 | AJ_296 | | 106534334 | 8761 | 60.4 |
| AJ_P4 | 85653088 | A09 | AJ_297 | | 106534335 | 8779 | 60.3 |
| AJ_P4 | 85653089 | A10 | AJ_298 | | 106534336 | 8690 | 59.4 |
| AJ_P4 | 85653090 | A11 | AJ_299 | | 106534337 | 8706 | 61.7 |
| AJ_P4 | 85653091 | A12 | AJ_300 | | 106534338 | 8706 | 62.4 |
| AJ_P4 | 85653092 | B01 | AJ_301 | | 106534339 | 8672 | 60.1 |
| AJ_P4 | 85653093 | B02 | AJ_302 | | 106534340 | 8699 | 60.7 |
| AJ_P4 | 85653094 | B03 | AJ_303 | | 106534341 | 8770 | 59.9 |
| AJ_P4 | 85653095 | B04 | AJ_304 | | 106534342 | 8763 | 58.4 |
| AJ_P4 | 85653096 | B05 | AJ_305 | | 106534343 | 8779 | 60.5 |
| AJ_P4 | 85653097 | B06 | AJ_306 | | 106534344 | 8721 | 60.2 |
| AJ_P4 | 85653098 | B07 | AJ_307 | | 106534345 | 8752 | 59.6 |
| AJ_P4 | 85653099 | B08 | AJ_308 | | 106534346 | 8770 | 59.8 |
| AJ_P4 | 85653100 | B09 | AJ_309 | | 106534347 | 8696 | 59.3 |
| | | | | | | | |
| AJ_P4 | 85653101 | B10 | AJ_310 | | 106534348 | 8770 | 60 |
| AJ_P4 | 85653102 | B11 | AJ_311 | | 106534349 | 8795 | 60.9 |
| AJ_P4 | 85653103 | B12 | AJ_312 | | 106534350 | 8723 | 59.2 |
| AJ_P4 | 85653104 | C01 | AJ_313 | | 106534351 | 8699 | 59.6 |
| AJ_P4 | 85653105 | C02 | AJ_314 | | 106534352 | 8675 | 62.6 |
| AJ_P4 | 85653106 | C03 | AJ_315 | | 106534353 | 8770 | 59.5 |
| AJ_P4 | 85653107 | C04 | AJ_316 | | 106534354 | 8690 | 59.1 |
| AJ_P4 | 85653108 | C05 | AJ_317 | | 106534355 | 8690 | 60.1 |
| AJ_P4 | 85653109 | C06 | AJ_318 | | 106534356 | 8690 | 59.8 |
| AJ_P4 | 85653110 | C07 | AJ_319 | | 106534357 | 8779 | 60.4 |
| AJ_P4 | 85653111 | C08 | AJ_320 | | 106534358 | 8777 | 61.2 |
| AJ_P4 | 85653112 | C09 | AJ_321 | | 106534359 | 8715 | 61.7 |
| AJ_P4 | 85653113 | C10 | AJ_322 | | 106534360 | 8681 | 60.7 |
| AJ_P4 | 85653114 | C11 | AJ_323 | | 106534361 | 8675 | 61.5 |
| AJ_P4 | 85653115 | C12 | AJ_324 | | 106586457 | 8657 | 61.5 |
| AJ_P4 | 85653116 | D01 | AJ_325 | | 106534363 | 8795 | 62.1 |
| AJ_P4 | 85653117 | D02 | AJ_326 | | 106534364 | 8761 | 60 |
| AJ_P4 | 85653118 | D03 | AJ_327 | | 106534365 | 8723 | 58.6 |
| | | | | | | | |
| AJ_P4 | 85653119 | D04 | AJ_328 | | 106534366 | 8697 | 61.1 |
| AJ_P4 | 85653120 | D05 | AJ_329 | | 106534367 | 8666 | 61.6 |
| AJ_P4 | 85653121 | D06 | AJ_330 | | 106534368 | 8739 | 60.9 |
| AJ_P4 | 85653122 | D07 | AJ_331 | | 106534369 | 8779 | 59.5 |
| AJ_P4 | 85653123 | D08 | AJ_332 | | 106534370 | 8690 | 60 |
| AJ_P4 | 85653124 | D09 | AJ_333 | | 106534371 | 8690 | 60.8 |
| AJ_P4 | 85653125 | D10 | AJ_334 | | 106534372 | 8699 | 60.4 |
| AJ_P4 | 85653126 | D11 | AJ_335 | | 106534373 | 8715 | 61.9 |
| AJ_P4 | 85653127 | D12 | AJ_336 | | 106534374 | 8752 | 61 |
| AJ_P4 | 85653128 | E01 | AJ_337 | | 106534375 | 8666 | 61.7 |
| AJ_P4 | 85653129 | E02 | AJ_338 | | 106534376 | 8699 | 60 |
| AJ_P4 | 85653130 | E03 | AJ_339 | | 106534377 | 8697 | 60.5 |
| AJ_P4 | 85653131 | E04 | AJ_340 | | 106534378 | 8687 | 58.9 |
| AJ_P4 | 85653132 | E05 | AJ_341 | | 106534379 | 8770 | 59.5 |
| AJ_P4 | 85653133 | E06 | AJ_342 | | 106534380 | 8697 | 62.3 |
| AJ_P4 | 85653134 | E07 | AJ_343 | | 106534381 | 8672 | 61 |
| AJ_P4 | 85653135 | E08 | AJ_344 | | 106534382 | 8730 | 61.3 |
| AJ_P4 | 85653136 | E09 | AJ_345 | | 106534383 | 8681 | 60.8 |
| | | | | | | | |
| AJ_P4 | 85653137 | E10 | AJ_346 | | 106534384 | 8715 | 62.3 |
| AJ_P4 | 85653138 | E11 | AJ_347 | | 106534385 | 8697 | 62.2 |
| AJ_P4 | 85653139 | E12 | AJ_348 | | 106534386 | 8672 | 60.1 |
| AJ_P4 | 85653140 | F01 | AJ_349 | | 106534387 | 8681 | 59.4 |
| AJ_J4 | 85653141 | F02 | AJ_350 | | 106534388 | 8714 | 59 |
| AJ_P4 | 85653142 | F03 | AJ_351 | | 106534389 | 8777 | 61.4 |
| AJ_P4 | 85653143 | F04 | AJ_352 | | 106534390 | 8687 | 59.4 |
| AJ_P4 | 85653144 | F05 | AJ_353 | | 106534391 | 8754 | 59 |
| AJ_P4 | 85653145 | F06 | AJ_354 | | 106534392 | 8754 | 59.4 |
| AJ_P4 | 85653146 | F07 | AJ_355 | | 106534393 | 8779 | 58.9 |
| AJ_P4 | 85653147 | F08 | AJ_356 | | 106534394 | 8761 | 60.7 |
| AJ_P4 | 85653148 | F09 | AJ_357 | | 106534395 | 8697 | 61.2 |
| AJ_P4 | 85653149 | F10 | AJ_358 | | 106534396 | 8723 | 59.2 |
| AJ_P4 | 85653150 | F11 | AJ_359 | | 106534397 | 8690 | 60.2 |
| AJ_P4 | 85653151 | F12 | AJ_360 | | 106534398 | 8739 | 59 |
| AJ_P4 | 85653152 | G01 | AJ_361 | | 106534399 | 8706 | 61.2 |
| AJ_P4 | 85653153 | G02 | AJ_362 | | 106534400 | 8687 | 59 |
| AJ_P4 | 85653154 | G03 | AJ_363 | | 106534401 | 8736 | 59 |
| | | | | | | | |
| AJ_P4 | 85653155 | G04 | AJ_364 | | 106534402 | 8699 | 60.8 |
| AJ_P4 | 85653156 | G05 | AJ_365 | | 106534403 | 8675 | 61.9 |
| AJ_P4 | 85653157 | G06 | AJ_366 | | 106534404 | 8666 | 61.7 |
| AJ_P4 | 85653158 | G07 | AJ_367 | | 106534405 | 8681 | 60.4 |
| AJ-P4 | 85653159 | G08 | AJ_368 | | 106534406 | 8727 | 59 |
| AJ_P4 | 85653160 | G09 | AJ_369 | | 106534407 | 8763 | 59 |
| AJ_P4 | 85653161 | G10 | AJ_370 | | 106534408 | 8739 | 59 |
| AJ_P4 | 85653162 | G11 | AJ_371 | | 106534409 | 8739 | 60.5 |
| AJ_P4 | 85653163 | G12 | AJ_372 | | 106534410 | 8672 | 60.3 |
| AJ_P4 | 85653164 | H01 | AJ_373 | | 106534411 | 8672 | 60.1 |
| AJ_P4 | 85653165 | H02 | AJ_374 | | 106534412 | 8657 | 61.4 |
| AJ_P4 | 85653166 | H03 | AJ_375 | | 106534413 | 8779 | 59.9 |
| AJ_P4 | 85653167 | H04 | AJ_376 | | 106534414 | 8739 | 60.9 |
| AJ_P4 | 85653168 | H05 | AJ_377 | | 106534415 | 8672 | 60.7 |
| AJ_P4 | 85653169 | H06 | AJ_378 | | 106534416 | 8730 | 60.1 |
| AJ_P4 | 85653170 | H07 | AJ_379 | | 106534417 | 8745 | 58.4 |
| AJ_P4 | 85653171 | H08 | AJ_380 | | 106534418 | 8690 | 60.1 |
| AJ_P4 | 85653172 | H09 | AJ_381 | | 106534419 | 8723 | 59.8 |
| | | | | | | | |
| AJ_P4 | 85653173 | H10 | AJ_382 | | 106534420 | 8763 | 58.9 |
| AJ_P4 | 85653174 | H11 | AJ_383 | | 106534421 | 8705 | 58.8 |
| AJ_P4 | 85653175 | H12 | AJ_384 | | 106534422 | 8712 | 60.3 |
| AJ_P5 | 85653177 | A01 | AJ_385 | | 106534423 | 8687 | 59 |
| AJ_P5 | 85653178 | A02 | AJ_386 | | 106534424 | 8770 | 59.9 |
| AJ_P5 | 85653179 | A03 | AJ_387 | | 106534425 | 8666 | 61.5 |
| AJ_P5 | 85653180 | A04 | AJ_388 | | 106534426 | 8739 | 60.8 |
| AJ_P5 | 85653181 | A05 | AJ_389 | | 106534427 | 8730 | 60.5 |
| AJ_P5 | 85653182 | A06 | AJ_390 | | 106534428 | 8681 | 61.6 |
| AJ_P5 | 85653183 | A07 | AJ_391 | | 106534429 | 8657 | 61.9 |
| AJ_P5 | 85653184 | A08 | AJ_392 | | 106534430 | 8681 | 60.4 |
| AJ_P5 | 85653185 | A09 | AJ_393 | | 106534431 | 8727 | 60.1 |
| AJ_P5 | 85653186 | A10 | AJ_394 | | 106534432 | 8779 | 59.4 |
| AJ_P5 | 85653187 | A11 | AJ_395 | | 106534433 | 8777 | 62.2 |
| AJ_P5 | 85653188 | A12 | AJ_396 | | 106534434 | 8761 | 59.7 |
| AJ_P5 | 85653189 | B01 | AJ_397 | | 106534435 | 8754 | 59.3 |
| AJ_P5 | 85653190 | B02 | AJ_398 | | 106534436 | 8739 | 60 |
| AJ_P5 | 85653191 | B03 | AJ_399 | | 106534437 | 8754 | 58 |
| | | | | | | | |
| AJ_P5 | 85653192 | B04 | AJ_400 | | 106534438 | 8745 | 59.4 |
| AJ_P5 | 85653193 | B05 | AJ_401 | | 106534439 | 8754 | 58.6 |
| AJ_P5 | 85653194 | B06 | AJ_402 | | 106534440 | 8752 | 60.5 |
| AJ_P5 | 85653195 | B07 | AJ_403 | | 106534441 | 8699 | 60.8 |
| AJ_P5 | 85653196 | B08 | AJ_404 | | 106534442 | 8754 | 58.8 |
| AJ_P5 | 85653197 | B09 | AJ_405 | | 106534443 | 8675 | 62 |
| AJ_P5 | 85653198 | B10 | AJ_406 | | 106534444 | 8706 | 61.7 |
| AJ_P5 | 85653199 | B11 | AJ_407 | | 106534445 | 8777 | 61 |
| AJ_P5 | 85653200 | B12 | AJ_408 | | 106534446 | 8690 | 60.6 |
| AJ_P5 | 85653201 | C01 | AJ_409 | | 106534447 | 8727 | 59.3 |
| AJ_P5 | 85653202 | C02 | AJ_410 | | 106534448 | 8681 | 59.8 |
| AJ_P5 | 85653203 | C03 | AJ_411 | | 106534445 | 8770 | 60 |
| AJ_P5 | 85653204 | C04 | AJ_412 | | 106534450 | 8795 | 61.4 |
| AJ_P5 | 85653205 | C05 | AJ_413 | | 106534451 | 8763 | 59.2 |
| AJ_P5 | 85653206 | C06 | AJ_414 | | 106534452 | 8795 | 62.6 |
| AJ_P5 | 85653207 | C07 | AJ_415 | | 106534453 | 8770 | 60.6 |
| AJ_P5 | 85653208 | C08 | AJ_416 | | 106534454 | 8727 | 59.1 |
| AJ_P5 | 85653209 | C09 | AJ_417 | | 106534455 | 8696 | 60.1 |
| | | | | | | | |
| AJ_P5 | 85653210 | C10 | AJ_418 | | 106534456 | 8755 | 62.3 |
| AJ_P5 | 85653211 | C11 | AJ_419 | | 106534457 | 8699 | 59.3 |
| AJ_P5 | 85653212 | C12 | AJ_420 | | 106534458 | 8752 | 60.5 |
| AJ_P5 | 85653213 | D01 | AJ_421 | | 106534459 | 8697 | 61.4 |
| AJ_P5 | 85653214 | D02 | AJ_422 | | 106534460 | 8675 | 62.3 |
| AJ_P5 | 85653215 | D03 | AJ_423 | | 106534461 | 8779 | 60.1 |
| AJ_P5 | 85653216 | D04 | AJ_424 | | 106534462 | 8752 | 60.9 |
| AJ_P5 | 85653217 | D05 | AJ_425 | | 106534463 | 8737 | 61 |
| AJ_P5 | 85653218 | D06 | AJ_426 | | 106534464 | 8715 | 61.6 |
| AJ_P5 | 85653219 | D07 | AJ_427 | | 106534465 | 8745 | 59.2 |
| AJ_P5 | 85653220 | D08 | AJ_428 | | 106534466 | 8752 | 60.6 |
| AJ_P5 | 85653221 | D09 | AJ_429 | | 106534467 | 8754 | 59.4 |
| AJ_P5 | 85653222 | D10 | AJ_430 | | 106534468 | 8736 | 59.9 |
| AJ_P5 | 85653223 | D11 | AJ_431 | | 106534469 | 8712 | 60.2 |
| AJ_P5 | 85653224 | D12 | AJ_432 | | 106534470 | 8779 | 60 |
| AJ_P5 | 85653225 | E01 | AJ_433 | | 106534471 | 8746 | 62.3 |
| AJ_P5 | 85653226 | E02 | AJ_434 | | 106534472 | 8795 | 62.2 |
| AJ_P5 | 85653227 | E03 | AJ_435 | | 106534473 | 8657 | 62 |
| | | | | | | | |
| AJ_P5 | 85653228 | E04 | AJ_436 | | 106534474 | 8687 | 59.3 |
| AJ_P5 | 85653229 | E05 | AJ_437 | | 106534475 | 8763 | 59 |
| AJ_P5 | 85653230 | E06 | AJ_ 438 | | 106534476 | 8779 | 59.8 |
| AJ_P5 | 85653231 | E07 | AJ_439 | | 106534477 | 8672 | 59.4 |
| AJ_P5 | 85653232 | E08 | AJ_440 | | 106534478 | 8699 | 60.9 |
| AJ_P5 | 85653233 | E09 | AJ_441 | | 106534479 | 8739 | 61.2 |
| AJ_P5 | 85653234 | E10 | AJ_442 | | 106534480 | 8666 | 61 |
| AJ_P5 | 85653235 | E11 | AJ_443 | | 106534481 | 8657 | 61 |
| AJ_P5 | 85653236 | E12 | AJ_444 | | 106534482 | 8752 | 60.1 |
| AJ_P5 | 85653237 | F01 | AJ_445 | | 106534483 | 8739 | 60.1 |
| AJ_P5 | 85653238 | F02 | AJ_446 | | 106534484 | 8672 | 60.5 |
| AJ_P5 | 85653239 | F03 | AJ_447 | | 106534485 | 8657 | 61.8 |
| AJ_P5 | 85653240 | F04 | AJ_448 | | 106534486 | 8681 | 61.5 |
| AJ_P5 | 85653241 | F05 | AJ_449 | | 106534487 | 8752 | 61.2 |
| AJ_P5 | 85653242 | F06 | AJ_450 | | 106534488 | 8739 | 60.4 |
| AJ_P5 | 85653243 | F07 | AJ_451 | | 106534489 | 8752 | 61.1 |
| AJ_P5 | 85653244 | F08 | AJ_452 | | 106534490 | 8657 | 62.2 |
| AJ_P5 | 85653245 | F09 | AJ_453 | | 106534491 | 8777 | 62.7 |
| | | | | | | | |
| AJ_P5 | 85653246 | F10 | AJ_454 | | 106534492 | 8715 | 62.5 |
| AJ_P5 | 85653247 | F11 | AJ_455 | | 106534493 | 8786 | 61.8 |
| AJ_P5 | 85653248 | F12 | AJ_456 | | 106534494 | 8739 | 60.9 |
| AJ_P5 | 85653249 | G01 | AJ_457 | | 106534495 | 8779 | 60.1 |
| AJ_P5 | 85653250 | G02 | AJ_458 | | 106534496 | 8763 | 59.1 |
| AJ_P5 | 85653251 | G03 | AJ_459 | | 106534497 | 8770 | 60.3 |
| AJ_P5 | 85653252 | G04 | AJ_460 | | 106534498 | 8721 | 61.6 |
| AJ_P5 | 85653253 | G05 | AJ_461 | | 106534499 | 8675 | 62.5 |
| AJ_P5 | 85653254 | G06 | AJ_462 | | 106534500 | 8739 | 60.3 |
| AJ_P5 | 85653255 | G07 | AJ_463 | | 106534501 | 8795 | 60.6 |
| AJ_P5 | 85653256 | G08 | AJ_464 | | 106534502 | 8706 | 61 |
| AJ_P5 | 85653257 | G09 | AJ_465 | | 106534503 | 8739 | 59.5 |
| AJ_P5 | 85653258 | G10 | AJ_466 | | 106534504 | 8666 | 62.3 |
| AJ_P5 | 85653259 | G11 | AJ_467 | | 106534505 | 8761 | 61.5 |
| AJ_P5 | 85653260 | G12 | AJ_468 | | 106534506 | 8795 | 62.3 |
| AJ_P5 | 85653261 | H01 | AJ_469 | | 106534507 | 8779 | 59.8 |
| AJ_P5 | 85653262 | H02 | AJ_470 | | 106534508 | 8779 | 60.2 |
| AJ_P5 | 85653263 | H03 | AJ_471 | | 106534509 | 8777 | 62.1 |
| | | | | | | | |
| AJ_P5 | 85653264 | H04 | AJ_472 | | 106534510 | 8755 | 61.9 |
| AJ_P5 | 85653265 | H05 | AJ_473 | | 106534511 | 8687 | 58.8 |
| AJ_P5 | 85653266 | H06 | AJ_474 | | 106534512 | 8672 | 60.3 |
| AJ_P5 | 85653267 | H07 | AJ_475 | | 106534513 | 8696 | 59.2 |
| AJ_P5 | 85653268 | H08 | AJ_476 | | 106534514 | 8737 | 61.9 |
| AJ_P5 | 85653269 | H09 | AJ_477 | | 106534515 | 8666 | 62.8 |
| AJ_P5 | 85653270 | H10 | AJ_478 | | 106534516 | 8786 | 61.5 |
| AJ_P5 | 85653271 | H11 | AJ_479 | | 106534517 | 8746 | 61.9 |
| AJ_P5 | 85653272 | H12 | AJ_480 | | 106534518 | 8779 | 60.3 |
| AJ_P6 | 85653274 | A01 | AJ_481 | | 106534519 | 8721 | 60.2 |
| AJ_P6 | 85653275 | A02 | AJ_482 | | 106534520 | 8675 | 60.8 |
| AJ_P6 | 85653276 | A03 | AJ_483 | | 106534521 | 8699 | 60.4 |
| AJ_P6 | 85653277 | A04 | AJ_484 | | 106534522 | 8687 | 58.3 |
| AJ_P6 | 85653278 | A05 | AJ_485 | | 106534523 | 8699 | 60.2 |
| AJ_P6 | 85653279 | A06 | AJ_486 | | 106534524 | 8752 | 60.8 |
| AJ_P6 | 85653280 | A07 | AJ_487 | | 106534525 | 8752 | 60.8 |
| AJ_P6 | 85653281 | A08 | AJ_488 | | 106534526 | 8672 | 59.8 |
| AJ_P6 | 85653282 | A09 | AJ_489 | | 106534527 | 8763 | 59.3 |
| | | | | | | | |
| AJ_P6 | 85653283 | A10 | AJ_490 | | 106534528 | 8723 | 59.8 |
| AJ_P6 | 85653284 | A11 | AJ_491 | | 106534529 | 8699 | 61 |
| AJ_P6 | 85653285 | A12 | AJ_492 | | 106534530 | 8730 | 59.4 |
| AJ_P6 | 85653286 | B01 | AJ_493 | | 106534531 | 8721 | 60.6 |
| AJ_P6 | 85653287 | B02 | AJ_494 | | 106534532 | 8786 | 61.4 |
| AJ_P6 | 85653288 | B03 | AJ_495 | | 106534533 | 8699 | 61.1 |
| AJ_P6 | 85653289 | B04 | AJ_496 | | 106534534 | 8690 | 60.1 |
| AJ_P6 | 85653290 | B05 | AJ_497 | | 106534535 | 8666 | 62.1 |
| AJ_P6 | 85653291 | B06 | AJ_498 | | 106534536 | 8657 | 61.7 |
| AJ_P6 | 85653292 | B07 | AJ_499 | | 106534537 | 8687 | 59.3 |
| AJ_P6 | 85653293 | B08 | AJ_500 | | 106534538 | 8672 | 60.9 |
| AJ_P6 | 85653294 | B09 | AJ_501 | | 106534539 | 8727 | 59.8 |
| AJ_P6 | 85653295 | B10 | AJ_502 | | 106586458 | 8672 | 60.7 |
| AJ_P6 | 85653296 | B11 | AJ_503 | | 106534541 | 8697 | 62 |
| AJ_P6 | 85653297 | B12 | AJ_504 | | 106534542 | 8675 | 63 |
| AJ_P6 | 85653298 | C01 | AJ_505 | | 106534543 | 8675 | 61.7 |
| AJ_P6 | 85653299 | C02 | AJ_506 | | 106577185 | 8672 | 60.1 |
| AJ_P6 | 85653300 | C03 | AJ_507 | | 106577186 | 8657 | 62.6 |
| | | | | | | | |
| AJ_P6 | 85653301 | C04 | AJ_508 | | 106586459 | 8681 | 60.1 |
| AJ_P6 | 85653302 | C05 | AJ_509 | | 106577187 | 8712 | 60.6 |
| AJ_P6 | 85653303 | C06 | AJ_510 | | 106577188 | 8736 | 58.6 |
| AJ_P6 | 85653304 | C07 | AJ_511 | | 106534549 | 8723 | 59.9 |
| AJ_P6 | 85653305 | C08 | AJ_512 | | 106577189 | 8736 | 58.5 |
| AJ_P6 | 85653306 | C09 | AJ_513 | | 106534551 | 8723 | 59.1 |
| AJ_P6 | 85653307 | C10 | AJ_514 | | 106586460 | 8727 | 58.3 |
| AJ_P6 | 85653308 | C11 | AJ_515 | | 106534553 | 8739 | 60.2 |
| AJ_P6 | 85653309 | C12 | AJ_516 | | 106586461 | 8752 | 60 |
| AJ_P6 | 85653310 | D01 | AJ_517 | | 106534555 | 8752 | 60.3 |
| AJ_P6 | 85653311 | D02 | AJ_518 | | 106534556 | 8672 | 60.6 |
| AJ_P6 | 85653312 | D03 | AJ_519 | | 106534557 | 8727 | 59.3 |
| AJ_P6 | 85653313 | D04 | AJ_520 | | 106534558 | 8745 | 59.9 |
| AJ_P6 | 85653314 | D05 | AJ_521 | | 106534559 | 8696 | 59.1 |
| AJ_P6 | 85653315 | D06 | AJ_522 | | 106534560 | 8721 | 60.4 |
| AJ_P6 | 85653316 | D07 | AJ_523 | | 106534561 | 8657 | 61.6 |
| AJ_P6 | 85653317 | D08 | AJ_524 | | 106534562 | 8721 | 60.7 |
| AJ_P6 | 85653318 | D09 | AJ_525 | | 106534563 | 8712 | 60.5 |
| | | | | | | | |
| AJ_P6 | 85653319 | D10 | AJ_526 | | 106534564 | 8712 | 60.5 |
| AJ_P6 | 85653320 | D11 | AJ_527 | | 106534565 | 8672 | 60.5 |
| AJ_P6 | 85653321 | D12 | AJ_528 | | 106534566 | 8681 | 60.9 |
| AJ_P6 | 85653322 | E01 | AJ_529 | | 106534567 | 8672 | 60.2 |
| AJ_P6 | 85653323 | E02 | AJ_530 | | 106534568 | 8712 | 60.2 |
| AJ_P6 | 85653324 | E03 | AJ_531 | | 106534569 | 8714 | 58.6 |
| AJ_P6 | 85653325 | E04 | AJ_532 | | 106534570 | 8770 | 59.4 |
| AJ_P6 | 85653326 | E05 | AJ_533 | | 106534571 | 8755 | 61 |
| AJ_P6 | 85653327 | E06 | AJ_534 | | 106534572 | 8696 | 59.6 |
| AJ_P6 | 85653328 | E07 | AJ_535 | | 106534573 | 8745 | 59.1 |
| AJ_P6 | 85653329 | E08 | AJ_536 | | 106534574 | 8705 | 58.9 |
| AJ_P6 | 85653330 | E09 | AJ_537 | | 106534575 | 8723 | 58.9 |
| AJ_P6 | 85653331 | E10 | AJ_538 | | 106534576 | 8739 | 60.4 |
| AJ_P6 | 85653332 | E11 | AJ_539 | | 106534577 | 8687 | 59.5 |
| AJ_P6 | 85653333 | E12 | AJ_540 | | 106534578 | 8672 | 61.1 |
| AJ_P6 | 85653334 | F01 | AJ_541 | | 106534579 | 8739 | 59.9 |
| AJ_P6 | 85653335 | F02 | AJ_542 | | 106534580 | 8712 | 60.2 |
| AJ_P6 | 85653336 | F03 | AJ_543 | | 106534581 | 8745 | 59.3 |
| | | | | | | | |
| AJ_P6 | 85653337 | F04 | AJ_544 | | 106534582 | 8672 | 61.3 |
| AJ_P6 | 85653338 | F05 | AJ_545 | | 106534583 | 8786 | 61.7 |
| AJ_P6 | 85653339 | F06 | AJ_546 | | 106534584 | 8721 | 61.4 |
| AJ_P6 | 85653340 | F07 | AJ_547 | | 106534585 | 8657 | 61 |
| AJ_P6 | 85653341 | F08 | AJ_548 | | 106534586 | 8712 | 59.7 |
| AJ_P6 | 85653342 | F09 | AJ_549 | | 106534587 | 8690 | 60.2 |
| AJ_P6 | 85653343 | F10 | AJ_550 | | 106534588 | 8672 | 60.6 |
| AJ_P6 | 85653344 | F11 | AJ_551 | | 106534589 | 8712 | 60.6 |
| AJ_P6 | 85653345 | F12 | AJ_552 | | 106534590 | 8737 | 61.6 |
| AJ_P6 | 85653346 | G01 | AJ_553 | | 106534591 | | 60.9 |
| AJ_P6 | 85653347 | G02 | AJ_554 | | 106534592 | 8666 | 61.7 |
| AJ_P6 | 85653348 | G03 | AJ_555 | | 106534593 | 8727 | 60.1 |
| AJ_P6 | 85653349 | G04 | AJ_556 | | 106534594 | 8687 | 59.4 |
| AJ_P6 | 85653350 | G05 | AJ_557 | | 106534595 | 8712 | 61.5 |
| AJ_P6 | 85653351 | G06 | AJ_558 | | 106534596 | 8687 | 60.1 |
| AJ_P6 | 85653352 | G07 | AJ_559 | | 106534597 | 8672 | 59.8 |
| AJ_P6 | 85653353 | G08 | AJ_560 | | 106534598 | 8657 | 61.9 |
| AJ_P6 | 85653354 | G09 | AJ_561 | | 106534599 | 8763 | 58 |
| | | | | | | | |
| AJ_P6 | 85653355 | G10 | AJ_562 | | 106534600 | 8699 | 60.4 |
| AJ_P6 | 85653356 | G11 | AJ_563 | | 106534601 | 8754 | 59.1 |
| AJ_P6 | 85653357 | G12 | AJ_564 | | 602 | 8754 | 59.1 |
| AJ_P6 | 85653358 | H01 | AJ_565 | | 106534603 | 8727 | 58.6 |
| AJ_P6 | 85653359 | H02 | AJ_566 | | 106534604 | 8699 | 60.5 |
| AJ_P6 | 85653360 | H03 | AJ_567 | | 106534605 | 8675 | 62.4 |
| AJ_P6 | 85653361 | H04 | AJ_568 | | 106534606 | 8730 | 60 |
| AJ_P6 | 85653362 | H05 | AJ_569 | | 106534607 | 8696 | 58.8 |
| AJ_P6 | 85653363 | H06 | AJ_570 | | 106534608 | 8752 | 59.5 |
| AJ_P6 | 85653364 | H07 | AJ_571 | | 106534609 | 8770 | 60.3 |
| AJ_P6 | 85653365 | H08 | AJ_572 | | 106534610 | 8672 | 59.9 |
| AJ_P6 | 85653366 | H09 | AJ_573 | | 106534611 | 8657 | 61.7 |
| AJ_P6 | 85653367 | H10 | AJ_574 | | 106534612 | 8697 | 62.2 |
| AJ_P6 | 85653368 | H11 | AJ_575 | | 106534613 | 8737 | 61.3 |
| AJ_P6 | 85653369 | H12 | AJ_576 | | 106534614 | 8706 | 62.8 |
| AJ_P7 | 85653371 | A01 | AJ_577 | | 106534711 | 8761 | 61 |
| AJ_P7 | 85653372 | A02 | AJ_578 | | 106534712 | 8763 | 57.8 |
| AJ_P7 | 85653373 | A03 | AJ_579 | | 106534713 | 8755 | 61 |
| | | | | | | | |
| AJ_P7 | 85653374 | A04 | AJ_580 | | 106534714 | 8763 | 58.4 |
| AJ_P7 | 85653375 | A05 | AJ_581 | | 106534715 | 8779 | 59.6 |
| AJ_P7 | 85653376 | A06 | AJ_582 | | 106534716 | 8681 | 59.5 |
| AJ_P7 | 85653377 | A07 | AJ_583 | | 106534717 | 8730 | 60.3 |
| AJ_P7 | 85653378 | A08 | AJ_584 | | 106534718 | 8714 | 58.4 |
| AJ_P7 | 85653379 | A09 | AJ_585 | | 106534719 | 8763 | 57.3 |
| AJ_P7 | 85653380 | A10 | AJ_586 | | 106534720 | 8730 | 60 |
| AJ_P7 | 85653381 | A11 | AJ_587 | | 106534721 | 8739 | 59.5 |
| AJ_P7 | 85653382 | A12 | AJ_588 | | 106534722 | 8672 | 59.7 |
| AJ_P7 | 85653383 | B01 | AJ_589 | | 106534723 | 8746 | 61.5 |
| AJ_P7 | 85653384 | B02 | AJ_590 | | 106534724 | 8723 | 58.8 |
| AJ_P7 | 85653385 | B03 | AJ_591 | | 106534725 | 8690 | 61.1 |
| AJ_P7 | 85653386 | B04 | AJ_592 | | 106534726 | 8657 | 61.1 |
| AJ_P7 | 85653387 | B05 | AJ_593 | | 106534727 | 8687 | 58.6 |
| AJ-P7 | 85653388 | B06 | AJ_594 | | 106534728 | 8752 | 60.6 |
| AJ_P7 | 85653389 | B07 | AJ_595 | | 106534729 | 8712 | 60.9 |
| AJ_P7 | 85653390 | B08 | AJ_596 | | 106534730 | 8739 | 59.8 |
| AJ_P7 | 85653391 | B09 | AJ_597 | | 106534731 | 8727 | 60.1 |
| | | | | | | | |
| AJ_P7 | 85653392 | B10 | AJ_598 | | 106534732 | 8736 | 59.8 |
| AJ_P7 | 85653393 | B11 | AJ_599 | | 106534733 | 8672 | - 61 |
| AJ_P7 | 85653394 | B12 | AJ_600 | | 106534734 | 8672 | 60.8 |
| AJ_P7 | 85653395 | C01 | AJ_601 | | 106534735 | 8672 | 60.8 |
| AJ_P7 | 85653396 | C02 | AJ_602 | | 106534736 | 8657 | 61.7 |
| AJ_P7 | 85653397 | C03 | AJ_603 | | 106534737 | 8761 | 60.8 |
| AJ_P7 | 85653398 | C04 | AJ_604 | | 106534738 | 8754 | 58.6 |
| AJ_P7 | 85653399 | C05 | AJ_605 | | 106534739 | 8770 | 60.1 |
| AJ_P7 | 85653400 | C06 | AJ_606 | | 106534740 | 8761 | 61.2 |
| AJ_P7 | 85653401 | C07 | AJ_607 | | 106534741 | 8755 | 61.6 |
| AJ_P7 | 85653402 | C08 | AJ_608 | | 106534742 | 8699 | 61.1 |
| AJ_P7 | 85653403 | C09 | AJ_609 | | 106534743 | 8761 | 60.4 |
| AJ_P7 | 85653404 | C10 | AJ_610 | | 106534744 | 8786 | 62.4 |
| AJ_P7 | 85653405 | C11 | AJ_611 | | 106534745 | 8777 | 61.3 |
| AJ_P7 | 85653406 | C12 | AJ_612 | | 106534746 | 8672 | 59.8 |
| AJ_P7 | 85653407 | D01 | AJ_613 | | 106534747 | 8706 | 60.9 |
| AJ_P7 | 85653408 | D02 | AJ_614 | | 106534748 | 8699 | 60.1 |
| AJ_P7 | 85653409 | D03 | AJ_615 | | 106534749 | 8739 | 59.8 |
| | | | | | | | |
| AJ_P7 | 85653410 | D04 | AJ_616 | | 106534750 | 8699 | 61 |
| AJ_P7 | 85653411 | D05 | AJ_617 | | 106534751 | 8699 | 60.8 |
| AJ_P7 | 85653412 | D06 | AJ_618 | | 106534752 | 8696 | 58.2 |
| AJ_P7 | 85653413 | D07 | AJ_619 | | 106534753 | 8681 | 61.2 |
| AJ_P7 | 85653414 | D08 | AJ_625 | | 106534754 | 8712 | 60.2 |
| AJ_P7 | 85653415 | D09 | AJ_621 | | 106534755 | 8687 | 58.4 |
| AJ_P7 | 85653416 | D10 | AJ_622 | | 106534756 | 8672 | 60.9 |
| AJ_P7 | 85653417 | D11 | AJ_623 | | 106534757 | 8697 | 61.9 |
| AJ_P7 | 85653418 | D12 | AJ_624 | | 106534758 | 8752 | 59.6 |
| AJ_P7 | 85653419 | E01 | AJ_625 | | 106534759 | 8712 | 60.2 |
| AJ_P7 | 85653420 | E02 | AJ_626 | | 106534760 | 8690 | 60.8 |
| AJ_P7 | 85653421 | E03 | AJ_627 | | 106534761 | 8697 | 60.9 |
| AJ_P7 | 85653422 | E04 | AJ_625 | | 106534762 | 8675 | 61.2 |
| AJ_P7 | 85653423 | E05 | AJ_629 | | 106534763 | 8705 | 59.7 |
| AJ_P7 | 85653424 | E06 | AJ_630 | | 106534764 | 8699 | 59.8 |
| AJ_P7 | 85653425 | E07 | AJ_631 | | 106534765 | 8745 | 59.8 |
| AJ_P7 | 85653426 | E08 | AJ_632 | | 106534766 | 8699 | 60.4 |
| AJ_P7 | 85653427 | E09 | AJ_633 | | 106534767 | 8681 | 59.8 |
| | | | | | | | |
| AJ_P7 | 85653428 | E10 | AJ_634 | | 106534768 | 8681 | 60.7 |
| AJ_P7 | 85653429 | E11 | AJ_635 | | 106534769 | 8699 | 60.5 |
| AJ_P7 | 85653430 | E12 | AJ_636 | | 106534770 | 8699 | 60.4 |
| AJ_P7 | 85653431 | F01 | AJ_637 | | 106534771 | 8739 | 61 |
| AJ_P7 | 85653432 | F02 | AJ_638 | | 106534772 | 8727 | 58.8 |
| AJ_P7 | 85653433 | F03 | AJ_639 | | 106534773 | 8745 | 59.3 |
| AJ_P7 | 85653434 | F04 | AJ_640 | | 106534774 | 8723 | 59 |
| AJ_P7 | 85653435 | F05 | AJ_641 | | 106534775 | 8699 | 60 |
| AJ_P7 | 85653436 | F06 | AJ_642 | | 106534776 | 8770 | 60.2 |
| AJ_P7 | 85653437 | F07 | AJ_643 | | 106534777 | 8690 | 59.9 |
| AJ_P7 | 85653438 | F08 | AJ_644 | | 106534778 | 8696 | 59.6 |
| AJ_P7 | 85653439 | F09 | AJ_645 | | 106534779 | 8672 | 60 |
| AJ_P7 | 85653440 | F10 | AJ_646 | | 106534780 | 8675 | 62.3 |
| AJ_P7 | 85653441 | F11 | AJ_647 | | 106534781 | 8715 | 61.5 |
| AJ_P7 | 85653442 | F12 | AJ_648 | | 106534782 | 8795 | 62 |
| AJ_P7 | 85653443 | G01 | AJ_649 | | 106534783 | 8770 | 59.3 |
| AJ_P7 | 85653444 | G02 | AJ_650 | | 106534784 | 8754 | 59.1 |
| AJ_P7 | 85653445 | G03 | AJ_651 | | 106534785 | 8779 | 60.5 |
| | | | | | | | |
| AJ_P7 | 85653446 | G04 | AJ_652 | | 106534786 | 8755 | 61.8 |
| AJ_P7 | 85653447 | G05 | AJ_653 | | 106534787 | 8690 | 60.8 |
| AJ_P7 | 85653448 | G06 | AJ_654 | | 106534788 | 8666 | 60.9 |
| AJ_P7 | 85653449 | G07 | AJ_655 | | 106534789 | 8736 | 59.1 |
| AJ_P7 | 85653450 | G08 | AJ_656 | | 106534790 | 8763 | 59.8 |
| AJ_P7 | 85653451 | G09 | AJ_657 | | 106534791 | 8657 | 61.7 |
| AJ_P7 | 85653452 | G10 | AJ_658 | | 106534792 | 8687 | 59.8 |
| AJ_P7 | 85653453 | G11 | AJ_659 | | 106534793 | 8752 | 60.8 |
| AJ_P7 | 85653454 | G12 | AJ_660 | | 106534794 | 8723 | 59 |
| AJ_P7 | 85653455 | H01 | AJ_661 | | 106534795 | 8763 | 59.4 |
| AJ_P7 | 85653456 | H02 | AJ_662 | | 106534796 | 8739 | 61.3 |
| AJ_P7 | 85653457 | H03 | AJ_663 | | 106534797 | 8737 | 61.8 |
| AJ_P7 | 85653458 | H04 | AJ_664 | | 106534798 | 8721 | 59.5 |
| AJ_P7 | 85653459 | H05 | AJ_665 | | 106534799 | 8779 | 59.8 |
| AJ_P7 | 85653460 | H06 | AJ_666 | | 106534800 | 8770 | 60.4 |
| AJ_P7 | 85653461 | H07 | AJ_667 | | 106534801 | 8779 | 61.1 |
| AJ_P7 | 85653462 | H08 | AJ_668 | | 106534802 | 8779 | 61 |
| AJ_P7 | 85653463 | H09 | AJ_669 | | 106534803 | 8763 | 59.8 |
| | | | | | | | |
| AJ_P7 | 85653464 | H10 | AJ_670 | | 106534804 | 8675 | 61.4 |
| AJ_P7 | 85653465 | H11 | AJ_671 | | 106534805 | 8681 | 60.8 |
| AJ_P7 | 85653466 | H12 | AJ_672 | | 106534806 | 8730 | 59.9 |
| AJ_P8 | 85653468 | A01 | AJ_673 | | 106534807 | 8681 | 60 |
| AJ_P8 | 85653469 | A02 | AJ_674 | | 106534808 | 8779 | 61.1 |
| AJ_P8 | 85653470 | A03 | AJ_675 | | 106534809 | 8721 | 60 |
| A1_P8 | 85653471 | A04 | AJ_676 | | 106534810 | 8779 | 59.6 |
| AJ_P8 | 85653472 | A05 | AJ_677 | | 106534811 | 8666 | 60.9 |
| AJ_P8 | 85653473 | A06 | AJ_678 | | 106534812 | 8699 | 60.5 |
| AJ_P8 | 85653474 | A07 | AJ_679 | | 106534813 | 8675 | 61.5 |
| AJ_P8 | 85653475 | A08 | AJ_680 | | 106534814 | 8699 | 60.2 |
| AJ_P8 | 85653476 | A09 | AJ_681 | | 106534815 | 8699 | 60.8 |
| AJ_P8 | 85653477 | A10 | AJ_682 | | 106534816 | 8699 | 60.2 |
| AJ_P8 | 85653478 | A11 | AJ_683 | | 106534817 | 8690 | 60.8 |
| AJ_P8 | 85653479 | A12 | AJ_684 | | 106534818 | 8675 | 60.7 |
| AJ_P8 | 85653480 | B01 | AJ_685 | | 106534819 | 8712 | 59.3 |
| AJ_P8 | 85653481 | B02 | AJ_686 | | 106534820 | 8714 | 60.4 |
| AJ_P8 | 85653482 | B03 | AJ_687 | | 106534821 | 8752 | 60.2 |
| | | | | | | | |
| AJ_P8 | 85653483 | B04 | AJ_688 | | 106534822 | 8672 | 60.2 |
| AJ_P8 | 85653484 | B05 | AJ_689 | | 106534823 | 8736 | 58.6 |
| AJ_P8 | 85653485 | B06 | AJ_690 | | 106534824 | 8672 | 59.6 |
| AJ_P8 | 85653486 | B07 | AJ_691 | | 106534825 | 8730 | 60.6 |
| AJ_P8 | 85653487 | B08 | AJ_692 | | 106534826 | 8761 | 59.8 |
| AJ_P8 | 85653488 | B09 | AJ_693 | | 106534827 | 8746 | 61.2 |
| AJ_P8 | 85653489 | B10 | AJ_694 | | 106534828 | 8723 | 59.6 |
| AJ_P8 | 85653490 | B11 | AJ_695 | | 106534829 | 8730 | 60.8 |
| AJ_P8 | 85653491 | B12 | AJ_696 | | 106534830 | 8746 | 61.2 |
| AJ_P8 | 85653492 | C01 | AJ_697 | | 106534831 | 8795 | 62 |
| AJ_P8 | 85653493 | C02 | AJ_698 | | 106534832 | 8739 | 60 |
| AJ_P8 | 85653494 | C03 | AJ_699 | | 106534833 | 8687 | 59.2 |
| AJ_P8 | 85653495 | C04 | AJ_700 | | 106534834 | 8687 | 59.7 |
| AJ_P8 | 85653496 | C05 | AJ_701 | | 106534835 | 8657 | 62.1 |
| AJ_P8 | 85653497 | C06 | AJ_702 | | 106534836 | 8761 | 61.1 |
| AJ_P8 | 85653498 | C07 | AJ_703 | | 106534837 | 8786 | 61.9 |
| AJ_P8 | 85653499 | C08 | AJ_704 | | 106534838 | 8699 | 60 |
| AJ_P8 | 85653500 | C09 | AJ_705 | | 106534839 | 8675 | 61.7 |
| | | | | | | | |
| AJ_P8 | 85653501 | C10 | AJ_706 | | 106534840 | 8763 | 59.1 |
| AJ_P8 | 85653502 | C11 | AJ_707 | | 106534841 | 8699 | 59.9 |
| AJ_P8 | 85653503 | C12 | AJ_708 | | 106534842 | 8723 | 59 |
| AJ_P8 | 85653504 | D01 | AJ_709 | | 106534843 | 8705 | 59.3 |
| AJ_P8 | 85653505 | D02 | AJ_710 | | 106534844 | 8699 | 60.8 |
| AJ_P8 | 85653506 | D03 | AJ_711 | | 106534845 | 8690 | 60.5 |
| AJ_P8 | 85653507 | D04 | AJ_712 | | 106534846 | 8672 | 59.8 |
| AJ_P8 | 85653508 | D05 | AJ_713 | | 106534847 | 8739 | 60 |
| AJ_P8 | 85653509 | D06 | AJ_714 | | 106534848 | 8675 | 62 |
| AJ_P8 | 85653510 | D07 | AJ_715 | | 106534849 | 8690 | 59.9 |
| AJ_P8 | 85653511 | D08 | AJ_716 | | 106534850 | 8699 | 60 |
| AJ_P8 | 85653512 | D09 | AJ_717 | | 106534851 | 8672 | 60 |
| AJ_P8 | 85653513 | D10 | AJ_718 | | 106534852 | 8723 | 59.2 |
| AJ_P8 | 85653514 | D11 | AJ_719 | | 106534853 | 8779 | 60 |
| AJ_P8 | 85653515 | D12 | AJ_720 | | 106534854 | 8675 | 61.4 |
| AJ_P8 | 85653516 | E01 | AJ_721 | | 106534855 | 8723 | 59.4 |
| AJ_P8 | 85653517 | E02 | AJ_722 | | 106534856 | 8779 | 60.6 |
| AJ_P8 | 85653518 | E03 | AJ_723 | | 106534857 | 8690 | 60.2 |
| | | | | | | | |
| AJ_P8 | 85653519 | E04 | AJ 724 | | 106534858 | 8770 | 60.2 |
| AJ_P8 | 85653520 | E05 | AJ_725 | | 106534859 | 8699 | 61.3 |
| AJ_P8 | 85653521 | E06 | AJ_726 | | 106534860 | 8739 | 59.7 |
| AJ_P8 | 85653522 | E07 | AJ_727 | | 106534861 | 8712 | 60.6 |
| AJ_P8 | 85653523 | E08 | AJ_728 | | 106534862 | 8675 | 62.3 |
| AJ_P8 | 85653524 | E09 | AJ_729 | | 106534863 | 8681 | 59.4 |
| AJ_P8 | 85653525 | E10 | AJ_730 | | 106534864 | 8699 | 60.5 |
| AJ_P8 | 85653526 | E11 | AJ_731 | | 106534865 | 8779 | 60.2 |
| AJ_P8 | 85653527 | E12 | AJ_732 | | 106534866 | 8730 | 58.8 |
| AJ_P8 | 85653528 | F01 | AJ_733 | | 106534867 | 8761 | 61.1 |
| AJ_P8 | 85653529 | F02 | AJ_734 | | 106534868 | 8745 | 58.2 |
| AJ_P8 | 85653530 | F03 | AJ_735 | | 106534869 | 8672 | 60 |
| AJ_P8 | 85653531 | F04 | AJ_736 | | 106534870 | 8730 | 60.9 |
| AJ_P8 | 85653532 | F05 | AJ_737 | | 106534871 | 8687 | 59.1 |
| AJ_P8 | 85653533 | F06 | AJ_738 | | 106534872 | 8761 | 60.9 |
| AJ_P8 | 85653534 | F07 | AJ_739 | | 106534873 | 8730 | 60.5 |
| AJ_P8 | 85653535 | F08 | AJ_740 | | 106534874 | 8779 | 60.3 |
| AJ_P8 | 85653536 | F09 | AJ_741 | | 106534875 | 8727 | 58.6 |
| | | | | | | | |
| AJ_P8 | 85653537 | F10 | AJ_742 | | 106534876 | 8761 | 60.4 |
| AJ_P8 | 85653538 | F11 | AJ_743 | | 106534877 | 8727 | 59.6 |
| AJ_P8 | 85653539 | F12 | AJ_744 | | 106534878 | 8739 | 60.8 |
| AJ_P8 | 85653540 | G01 | AJ_745 | | 106534879 | 8786 | 61.9 |
| AJ_P8 | 85653541 | G02 | AJ_746 | | 106534880 | 8752 | 60.4 |
| AJ_P8 | 85653542 | G03 | AJ_747 | | 106534881 | 8687 | 58.3 |
| AJ_P8 | 85653543 | G04 | AJ_748 | | 106534882 | 8681 | 60.1 |
| AJ_P8 | 85653544 | G05 | AJ_749 | | 106534883 | 8681 | 60.2 |
| AJ_P8 | 85653545 | G06 | AJ_750 | | 106534884 | 8715 | 61.9 |
| AJ_P8 | 85653546 | G07 | AJ_751 | | 106534885 | 8714 | 59.4 |
| AJ_P8 | 85653547 | G08 | AJ_752 | | 106534886 | 8755 | 61.7 |
| AJ_P8 | 85653548 | G09 | AJ_753 | | 106534887 | 8672 | 61.2 |
| AJ_P8 | 85653549 | G10 | AJ_754 | | 106534888 | 8690 | 60.3 |
| AJ_P8 | 85653550 | G11 | AJ_755 | | 106534889 | 8672 | 61.3 |
| AJ_P8 | 85653551 | G12 | AJ_756 | | 106534890 | 8739 | 60.7 |
| AJ_P8 | 85653552 | H01 | AJ_757 | | 106534891 | 8754 | 59.1 |
| AJ_P8 | 85653553 | H02 | AJ_758 | | 106534892 | 8727 | 58.7 |
| AJ_P8 | 85653554 | H03 | AJ_759 | | 106534893 | 8705 | 58.5 |
| | | | | | | | |
| AJ_P8 | 85653555 | H04 | AJ_760 | | 106534894 | 8672 | 60.1 |
| AJ_P8 | 85653556 | H05 | AJ_761 | | 106534895 | 8737 | 62 |
| AJ_P8 | 85653557 | H06 | AJ_762 | | 106534896 | 8672 | 60.6 |
| AJ_P8 | 85653558 | H07 | AJ_763 | | 106534897 | 8712 | 61 |
| AJ_P8 | 85653559 | H08 | AJ_764 | | 106534898 | 8672 | 60.5 |
| AJ_P8 | 85653560 | H09 | AJ_765 | | 106534899 | 8657 | 62.2 |
| AJ_P8 | 85653561 | H10 | AJ_766 | | 106534900 | 8779 | 60.1 |
| AJ_P8 | 85653562 | H11 | AJ_767 | | 106534901 | 8761 | 60.3 |
| AJ_P8 | 85653563 | H12 | AJ_768 | | 106586462 | 8795 | 61.7 |
| A J_P9 | 85653565 | A01 | AJ_769 | | 106534903 | 8672 | 60.6 |
| AJ_P9 | 85653566 | A02 | AJ_770 | | 106534904 | 8770 | 60.6 |
| AJ_P9 | 85653567 | A03 | AJ_771 | | 106534905 | 8699 | 60.1 |
| AJ_P9 | 85653568 | A04 | AJ_772 | | 106534906 | 8696 | 59.3 |
| AJ_P9 | 85653569 | A05 | AJ_773 | | 106534907 | 8690 | 59.4 |
| AJ_P9 | 85653570 | A06 | AJ_774 | | 106534908 | 8687 | 59.4 |
| AJ_P9 | 85653571 | A07 | AJ_775 | | 106534909 | 8739 | 61 |
| AJ_P9 | 85653572 | A08 | AJ_776 | | 106534910 | 8657 | 60.9 |
| AJ_P9 | 85653573 | A09 | AJ_777 | | 106534911 | 8672 | 60.1 |
| | | | | | | | |
| AJ_P9 | 85653574 | A10 | AJ_778 | | 106534912 | 8681 | 60.7 |
| AJ_P9 | 85653575 | A11 | AJ_779 | | 106534913 | 8712 | 60.7 |
| AJ_P9 | 85653576 | A12 | AJ_780 | | 106534914 | 8714 | 59.8 |
| AJ_P9 | 85653577 | B01 | AJ_781 | | 106534915 | 8699 | 60.4 |
| AJ_P9 | 85653578 | B02 | AJ_782 | | 106534916 | 8672 | 59.7 |
| AJ_P9 | 85653579 | B03 | AJ_783 | | 106534917 | 8672 | 61.2 |
| AJ_P9 | 85653580 | B04 | AJ_784 | | 106534918 | 8730 | 60 |
| AJ_P9 | 85653581 | B05 | AJ_785 | | 106534919 | 8739 | 60 |
| AJ_P9 | 85653582 | B06 | AJ_786 | | 106534920 | 8715 | 61.9 |
| AJ_P9 | 85653583 | B07 | AJ_787 | | 106534921 | 8736 | 59.3 |
| AJ_P9 | 85653584 | B08 | AJ_788 | | 106534922 | 8706 | 61.3 |
| AJ_P9 | 85653585 | B09 | AJ_789 | | 106534923 | 8723 | 59.2 |
| AJ_P9 | 85653586 | B10 | AJ_790 | | 106534924 | 8687 | 58.6 |
| AJ_P9 | 85653587 | B11 | AJ_791 | | 106534925 | 8736 | 59.7 |
| AJ_P9 | 85653588 | B12 | AJ_792 | | 106534926 | 8761 | 58.8 |
| AJ_P9 | 85653589 | C01 | AJ_793 | | 106534927 | 8715 | 61.8 |
| AJ_P9 | 85653590 | C02 | AJ_794 | | 106534928 | 8675 | 62 |
| AJ_P9 | 85653591 | C03 | AJ_795 | | 106534929 | 8770 | 60.8 |
| | | | | | | | |
| AJ_P9 | 85653592 | C04 | AJ_796 | | 106534930 | 8675 | 62.1 |
| AJ_P9 | 85653593 | C05 | AJ_797 | | 106534931 | 8675 | 61.7 |
| AJ_P9 | 85655594 | C06 | AJ_798 | | 106534932 | 8690 | 60.6 |
| AJ_P9 | 85653595 | C07 | AJ_799 | | 106534933 | 8763 | 58.6 |
| AJ_P9 | 85653596 | C08 | AJ_800 | | 106534934 | 8795 | 61.3 |
| AJ_P9 | 85653597 | C09 | AJ_801 | | 106534935 | 8715 | 61.5 |
| AJ_P9 | 85653598 | C10 | AJ_802 | | 106534936 | 8666 | 62.1 |
| AJ_P9 | 85653599 | C11 | AJ_803 | | 106534937 | 8672 | 59.9 |
| AJ_P9 | 85653600 | C12 | AJ_804 | | 106534938 | 8721 | 60.4 |
| AJ_P9 | 85653601 | D01 | AJ_805 | | 106534939 | 8681 | 60.1 |
| AJ_P9 | 85653602 | D02 | AJ_806 | | 106534940 | 8687 | 59.4 |
| AJ_P9 | 85653603 | D03 | AJ_807 | | 106534941 | 8687 | 59.1 |
| AJ_P9 | 85653604 | D04 | AJ_808 | | 106534942 | 8739 | 60.8 |
| AJ_P9 | 85653605 | D05 | AJ_809 | | 106534943 | 8723 | 58.4 |
| AJ_P9 | 85653606 | D06 | AJ_810 | | 106534944 | 8786 | 62.5 |
| AJ_P9 | 85653607 | D07 | AJ_811 | | 106534945 | 8657 | 62 |
| AJ_P9 | 85653608 | D08 | AJ_812 | | 106534946 | 8779 | 61.3 |
| AJ_P9 | 85653609 | D09 | AJ_813 | | 106534947 | 8761 | 60.1 |
| | | | | | | | |
| AJ_P9 | 85653610 | D10 | AJ_814 | | 106534948 | 8675 | 61.9 |
| AJ_P9 | 85653611 | D11 | AJ_815 | | 106534949 | 8723 | 58.4 |
| AJ_P9 | 85653612 | D12 | AJ_816 | | 106534950 | 8754 | 58.3 |
| AJ_P9 | 85653613 | E01 | AJ_817 | | 106534951 | 8699 | 59.8 |
| AJ_P9 | 85653614 | E02 | AJ_818 | | 106534952 | 8730 | 60 |
| AJ_P9 | 85653615 | E03 | AJ_819 | | 106534953 | 8687 | 59.9 |
| AJ_P9 | 85653616 | E04 | AJ_820 | | 106534954 | 8752 | 60.5 |
| AJ_P9 | 85653617 | E05 | AJ_821 | | 106534955 | 8666 | 61.6 |
| AJ_P9 | 85653618 | E06 | AJ_822 | | 106534956 | 8690 | 61 |
| AJ_P9 | 85653619 | E07 | AJ_823 | | 106534957 | 8763 | 58.8 |
| AJ_P9 | 85653620 | E08 | AJ_824 | | 106534958 | 8770 | 61.2 |
| AJ_P9 | 85653621 | E09 | AJ_825 | | 106534959 | 8697 | 61.2 |
| AJ_P9 | 85653622 | E10 | AJ_826 | | 106534960 | 8657 | 60.7 |
| AJ_P9 | 85653623 | E11 | AJ_827 | | 106534961 | 8699 | 60.2 |
| AJ_P9 | 85653624 | E12 | AJ_828 | | 106534962 | 8755 | 61 |
| AJ_P9 | 85653625 | F01 | AJ_829 | | 106534963 | 8779 | 59.8 |
| AJ_P9 | 85653626 | F02 | AJ_830 | | 106534964 | 8739 | 60.4 |
| AJ_P9 | 85653627 | F03 | AJ_831 | | 106534965 | 8795 | 62.1 |
| | | | | | | | |
| AJ_P9 | 85653628 | F04 | AJ_832 | | 106534966 | 8763 | 59.3 |
| AJ_P9 | 85653629 | F05 | AJ_833 | | 106534967 | 8696 | 59.5 |
| AJ_P9 | 85653630 | F06 | AJ_834 | | 106534968 | 8761 | 60 |
| AJ_P9 | 85653631 | F07 | AJ_835 | | 106534969 | 8672 | 60.6 |
| AJ_P9 | 85653632 | F08 | AJ_836 | | 106534970 | 8761 | 61.3 |
| AJ_P9 | 85653633 | F09 | AJ_837 | | 106534971 | 8736 | 59.7 |
| AJ_P9 | 85653634 | F10 | AJ_838 | | 106534972 | 8672 | 60.5 |
| AJ_P9 | 85653635 | F11 | AJ_839 | | 106534973 | 8752 | 59.4 |
| AJ_P9 | 85653636 | F12 | AJ_840 | | 106534974 | 8706 | 61.3 |
| AJ_P9 | 85653637 | G01 | AJ_841 | | 106534975 | 8699 | 59.8 |
| AJ_P9 | 85653638 | G02 | AJ_842 | | 106534976 | 8699 | 60.8 |
| AJ_P9 | 85653639 | G03 | AJ_843 | | 106534977 | 8721 | 61.2 |
| AJ_P9 | 85653640 | G04 | AJ_844 | | 106534978 | 8699 | 60.4 |
| AJ_P9 | 85653641 | G05 | AJ_845 | | 106534979 | 8672 | 61.5 |
| AJ_P9 | 85653642 | G06 | AJ_846 | | 106534980 | 8687 | 60 |
| AJ_P9 | 85653643 | G07 | AJ_847 | | 106534981 | 8672 | 60.5 |
| AJ_P9 | 85653644 | G08 | AJ_848 | | 106534982 | 8755 | 61.9 |
| AJ_P9 | 85653645 | G09 | AJ_849 | | 106534983 | 8779 | 60.4 |
| | | | | | | | |
| AJ_P9 | 85653646 | G10 | AJ_850 | | 106534984 | 8714 | 58.6 |
| AJ_P9 | 85653647 | G11 | AJ_851 | | 106534985 | 8737 | 62.1 |
| AJ_P9 | 85653648 | G12 | AJ_852 | | 106534986 | 8672 | 60.6 |
| AJ_P9 | 85653649 | H01 | AJ_853 | | 106534987 | 8712 | 60.6 |
| AJ_P9 | 85653650 | H02 | AJ_854 | | 106534988 | 8681 | 60.8 |
| AJ_P9 | 85653651 | H03 | AJ_855 | | 106534989 | 8761 | 60.2 |
| AJ_P9 | 85653652 | H04 | AJ_856 | | 106534990 | 8705 | 60.1 |
| AJ_P9 | 85653653 | H05 | AJ_857 | | 106534991 | 8699 | 60.9 |
| AJ_P9 | 85653654 | H06 | AJ_858 | | 106534992 | 8739 | 60.2 |
| AJ_P9 | 85653655 | H07 | AJ_859 | | 106534993 | 8699 | 59.7 |
| AJ_P9 | 85653656 | H08 | AJ_860 | | 106534994 | 8699 | 59.7 |
| AJ_P9 | 85653657 | H09 | AJ_861 | | 106534995 | 8739 | 60.9 |
| AJ_P9 | 85653658 | H10 | AJ_862 | | 106534996 | 8755 | 61.9 |
| AJ_P9 | 85653659 | H11 | AJ_863 | | 106534997 | 8672 | 60.4 |
| AJ_P9 | 85653660 | H12 | AJ_864 | | 106534998 | 8687 | 60.1 |
| AJ_P10 | 85653662 | A01 | AJ_865 | | 106534999 | 8754 | 58.7 |
| AJ_P10 | 85653663 | A02 | AJ_866 | | 106535000 | 8687 | 59.1 |
| AJ_P10 | 85653664 | A03 | AJ_867 | | 106535001 | 8745 | 59 |
| | | | | | | | |
| AJ_P10 | 85653665 | A04 | AJ_868 | | 106535002 | 8681 | 60 |
| AJ_P10 | 85653666 | A05 | AJ_869 | | 106535003 | 8712 | 60.4 |
| AJ_P10 | 85653667 | A06 | AJ_870 | | 106535004 | 8712 | 61.1 |
| AJ_P10 | 85653668 | A07 | AJ_871 | | 106535005 | 8657 | 61.2 |
| AJ_P10 | 85653669 | A08 | AJ_872 | | 106535006 | 8712 | 59.9 |
| AJ_P10 | 85653670 | A09 | AJ_873 | | 106535007 | 8699 | 60.1 |
| AJ_P10 | 85653671 | A10 | AJ_874 | | 106535008 | 8779 | 60.1 |
| AJ_P10 | 85653672 | A11 | AJ_875 | | 106535009 | 8675 | 62 |
| AJ_P10 | 85653673 | A12 | AJ_876 | | 106535010 | 8714 | 59 |
| AJ_P10 | 85653674 | B01 | AJ_877 | | 106535011 | 8687 | 59 |
| AJ_P10 | 85653675 | B02 | AJ_878 | | 106535012 | 8681 | 60.3 |
| AJ_P10 | 85653676 | B03 | AJ_879 | | 106535013 | 8736 | 59.3 |
| AJ_P10 | 85653677 | B04 | AJ_880 | | 106535014 | 8770 | 60.4 |
| AJ_P10 | 85653678 | B05 | AJ_881 | | 106535015 | 8696 | 59.3 |
| AJ_P10 | 85653679 | B06 | AJ_882 | | 106535016 | 8687 | 59.4 |
| AJ_P10 | 85653680 | B07 | AJ_883 | | 106535017 | 8739 | 58.9 |
| AJ_P10 | 85653681 | B08 | AJ_884 | | 106535018 | 8714 | 59.4 |
| AJ_P10 | 85653682 | B09 | AJ_885 | | 106535019 | 8779 | 60.4 |
| | | | | | | | |
| AJ_P10 | 85653683 | B10 | AJ_886 | | 106535020 | 8795 | 62.2 |
| AJ_P10 | 85653684 | B11 | AJ_887 | | 106535021 | 8714 | 58.8 |
| AJ_P10 | 85653685 | B12 | AJ_888 | | 106535022 | 8712 | 60.1 |
| AJ_P10 | 85653686 | C01 | AJ_889 | | 106535023 | 8723 | 58.5 |
| AJ_P10 | 85653687 | C02 | AJ_890 | | 106535024 | 8721 | 60 |
| AJ_P10 | 85653688 | C03 | AJ_891 | | 106535025 | 8681 | 60.2 |
| AJ_P10 | 85653689 | C04 | AJ_892 | | 106535026 | 8672 | 60 |
| AJ_P10 | 85653690 | C05 | AJ_893 | | 106577190 | 8699 | 60.3 |
| AJ_P10 | 85653691 | C06 | AJ_894 | | 106535028 | 8687 | 60 |
| AJ_P10 | 85653692 | C07 | AJ_895 | | 106535029 | 8723 | 59.3 |
| AJ_P10 | 85653693 | C08 | AJ_896 | | 106535030 | 8736 | 59.9 |
| AJ_P10 | 85653694 | C09 | AJ_897 | | 106535031 | 8761 | 60.8 |
| AJ_P10 | 85653695 | C10 | AJ_898 | | 106535032 | 8761 | 60.2 |
| AJ_P10 | 85653696 | C11 | AJ_899 | | 106535033 | 8736 | 57.8 |
| AJ_P10 | 85653697 | C12 | AJ_900 | | 106535034 | 8727 | 59.5 |
| AJ_P10 | 85653698 | D01 | AJ_901 | | 106535035 | 8657 | 60.2 |
| AJ_P10 | 85653699 | D02 | AJ_902 | | 106535036 | 8666 | 61.9 |
| AJ_P10 | 85653700 | D03 | AJ_903 | | 106535037 | 8675 | 62.6 |
| | | | | | | | |
| AJ_P10 | 85653701 | D04 | AJ_904 | | 106535038 | 8721 | 60.6 |
| AJ_P10 | 85653702 | D05 | AJ_905 | | 106535039 | 8770 | 59.7 |
| AJ_P10 | 85653703 | D06 | AJ_906 | | 106535040 | 8714 | 58.8 |
| AJ_P10 | 85653704 | D07 | AJ_907 | | 106535041 | 8675 | 61.6 |
| AJ_P10 | 85653705 | D08 | AJ_908 | | 106535042 | 8672 | 60.4 |
| AJ_P10 | 85653706 | D09 | AJ_909 | | 106535043 | 8699 | 61.2 |
| AJ_P10 | 85653707 | D10 | AJ_910 | | 106535044 | 8699 | 61.4 |
| AJ_P10 | 85653708 | D11 | AJ_911 | | 106535045 | 8739 | 60.9 |
| AJ_P10 | 85653709 | D12 | AJ_912 | | 106535046 | 8706 | 60.1 |
| AJ_P10 | 85653710 | E01 | AJ_913 | | 106535047 | 8752 | 59.8 |
| AJ_P10 | 85653711 | E02 | AJ_914 | | 106535048 | 8657 | 61.1 |
| AJ_P10 | 85653712 | E03 | AJ_915 | | 106535049 | 8714 | 59.9 |
| AJ_P10 | 85653713 | E04 | AJ_916 | | 106535050 | 8687 | 59.6 |
| AJ_P10 | 85653714 | E05 | AJ_917 | | 106535051 | 8777 | 61.7 |
| AJ_P10 | 85653715 | E06 | AJ_918 | | 106535052 | 8681 | 60.1 |
| AJ_P10 | 85653716 | E07 | AJ_919 | | 106535053 | 8714 | 59.6 |
| AJ_P10 | 85653717 | E08 | AJ_920 | | 106535054 | 8696 | 59.4 |
| AJ_P10 | 85653718 | E09 | AJ_921 | | 106535055 | 8657 | 59.8 |
| | | | | | | | |
| AJ_P10 | 85653719 | E10 | AJ_922 | | 106535056 | 8690 | 59.8 |
| AJ_P10 | 85653720 | E11 | AJ_923 | | 106535057 | 8699 | 60.3 |
| AJ_P10 | 85653721 | E12 | AJ_924 | | 106535058 | 8761 | 60.1 |
| AJ_P10 | 85653722 | F01 | AJ_925 | | 106535059 | 8714 | 59 |
| AJ_P10 | 85653723 | F02 | AJ_926 | | 106535060 | 8675 | 61.6 |
| AJ_P10 | 85653724 | F03 | AJ_927 | | 106535061 | 8752 | 60.3 |
| AJ_P10 | 85653725 | F04 | AJ_928 | | 106535062 | 8697 | 62 |
| AJ_P10 | 85653726 | F05 | AJ_929 | | 106535063 | 8723 | 60.3 |
| AJ_P10 | 85653727 | F06 | AJ_930 | | 106535064 | 8712 | 59.5 |
| AJ_P10 | 85653728 | F07 | AJ_931 | | 106535065 | 8730 | 60.2 |
| AJ_P10 | 85653729 | F08 | AJ_932 | | 106535066 | 8690 | 60.4 |
| AJ_P10 | 85653730 | F09 | AJ_933 | | 106535067 | 8754 | 59 |
| AJ_P10 | 85653731 | F10 | AJ_934 | | 106535068 | 8699 | 60.1 |
| AJ_P10 | 85653732 | F11 | AJ_935 | | 106535069 | 8675 | 62.4 |
| AJ_P10 | 85653733 | F12 | AJ_936 | | 106535070 | 8739 | 60.5 |
| AJ_P10 | 85653734 | G01 | AJ_937 | | 106535071 | 8666 | 61.9 |
| AJ_P10 | 85653735 | G02 | AJ_938 | | 106535072 | 8705 | 59.6 |
| AJ_P10 | 85653736 | G03 | AJ_939 | | 106535073 | 8681 | 58.9 |
| | | | | | | | |
| AJ_P10 | 85653737 | G04 | AJ_940 | | 106535074 | 8681 | 59.9 |
| AJ_P10 | 85653738 | G05 | AJ_941 | | 106535075 | 8699 | 60 |
| AJ_P10 | 85653739 | G06 | AJ_942 | | 106535076 | 8681 | 59.1 |
| AJ_P10 | 85653740 | G07 | AJ_943 | | 106535077 | 8681 | 60.5 |
| AJ_P10 | 85653741 | G08 | AJ_944 | | 106535078 | 8690 | 61 |
| AJ_P10 | 85653742 | G09 | AJ_945 | | 106535079 | 8763 | 58.1 |
| AJ_P10 | 85653743 | G10 | AJ_946 | | 106535080 | 8672 | 59.5 |
| AJ_P10 | 85653744 | G11 | AJ_947 | | 106535081 | 8675 | 61.3 |
| AJ_P10 | 85653745 | G12 | AJ_948 | | 106535082 | 8666 | 62.3 |
| AJ_P10 | 85653746 | H01 | AJ_949 | | 106535083 | 8681 | 61 |
| AJ_P10 | 85653747 | H02 | AJ_950 | | 106535084 | 8690 | 60.7 |
| AJ_P10 | 85653748 | H03 | AJ_951 | | 106535085 | 8730 | 60 |
| AJ_P10 | 85653749 | H04 | AJ_952 | | 106535086 | 8763 | 58.8 |
| AJ_P10 | 85653750 | H05 | AJ_953 | | 106535087 | 8739 | 61.4 |
| AJ_P10 | 85653751 | H06 | AJ_954 | | 106535088 | 8681 | 61.5 |
| AJ_P10 | 85653752 | H07 | AJ_955 | | 106535089 | 8681 | 61 |
| AJ_P10 | 85653753 | H08 | AJ_956 | | 106535090 | 8721 | 60.2 |
| AJ_P10 | 85653754 | H09 | AJ_957 | | 106535091 | 8752 | 61.1 |
| | | | | | | | |
| AJ_P10 | 85653755 | H10 | AJ_958 | | 106535092 | 8752 | 60.6 |
| AJ_P10 | 85653756 | H11 | AJ_959 | | 106535093 | 8699 | 61 |
| AJ_P10 | 85653757 | H12 | AJ_960 | | 106535094 | 8761 | 61.9 |

### Example 11 - Titration or Dilution Series

The ability to perform multiple experiments in parallel enables straightforward exploration of the counting results from samples with a range of starting concentrations or amounts of target, sometimes known as a titration experiment or a dilution series.

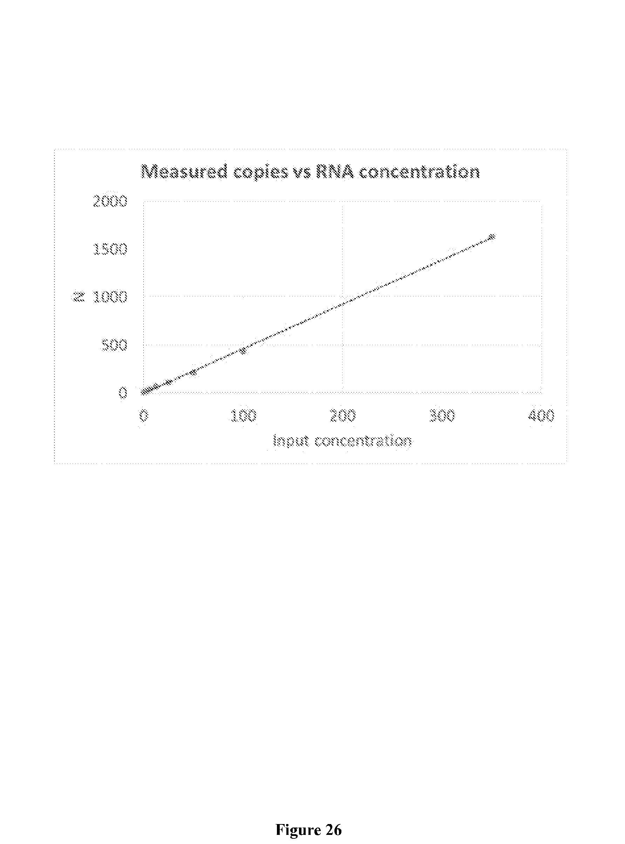

An example of dilution series data for a labeled RPLPO gene sequence is shown in Figure 26. Plotted in the figure is the counting result N for each array where the nominal starting concentration of mRNA in the reaction is shown on the X axis.

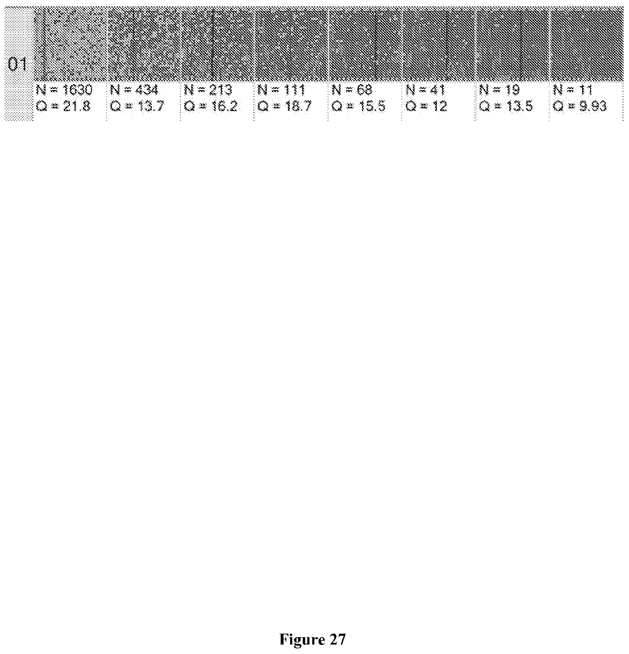

Some of the graphical output from the analysis software for the same experiment is shown in Figure 27. For each array, there is a compound display with the following elements: (i) an intensity histogram (green) for the index spots, (ii) a blue line registered with the histogram, showing the dynamic threshold for spot counting, (iii) a 32x32 grid which is a digital representation of each array. A white site in the grid denotes a spot whose intensity was above the dynamic threshold, and a black site denotes that the intensity was below the dynamic threshold, and (iv) the result N and the quality score Q is reported for each array as text.

While preferred embodiments of the present invention have been shown and described herein, it will be obvious to those skilled in the art that such embodiments may be provided by way of example only. Numerous variations, changes, and substitutions will now occur to those skilled in the art without departing from the invention. It should be understood that various alternatives to the embodiments of the invention described herein may be employed in practicing the invention.
The invention further provides the following numbered embodiments:
1. An array reader system comprising an output unit for calculating an absolute number of target molecules in a sample, wherein the array reader system is configured to read an array comprising a plurality of labeled and non-labeled features.
2. The array reader system of embodiment 1, further comprising an optical imaging system.
3. The array reader system of embodiment 2, wherein the calculation is based on transforming optical image data produced by the optical imaging system into a count of the number of labeled and non-labeled features.
4. The array reader system of embodiment 1, wherein the output unit comprises a digital processor and executable software.
5. The array reader of embodiment 4, wherein the executable software comprises computer code for transforming optical image data into a count of the number of labeled and non-labeled features.
6. The array reader system of embodiment 1, wherein the array comprises a microarray, microscope slide, or microwell plate.
7. The array reader system of embodiment 2, wherein the optical imaging system has a magnification of less than 1, equal to 1, or greater than 1.
8. The array reader system of embodiment 2, wherein the optical imaging system comprises a fluorescence imaging system.
9. The array reader system of embodiment 2, wherein the optical imaging system comprises a phosphorescence imaging system.
10. The array reader system of embodiment 2, wherein the optical imaging system comprises an imaging system that operates in a transmitted light, reflected light, or scattered light imaging mode, or combinations thereof.
11. The array reader system of embodiments 8, 9, or 10, wherein the optical imaging system comprises one or more image sensors.
12. The array reader system of embodiment 11, wherein the one or more image sensors have a resolution of at least 320 x 240 pixels.
13. The array reader system of embodiment 11, wherein the one or more image sensors are CCD image sensors.
14. The array reader system of embodiment 11, wherein the one or more image sensors are CMOS image sensors.
15. The array reader system of embodiment 11, wherein the one or more image sensors comprise one or more circuit boards.
16. The array reader system of embodiments 8, 9, or 10, wherein the optical imaging system further comprises one or more components selected from the group including, but not limited to, a microscope objective, a camera lens, a finite-conjugate lens, an infinite-conjugate lens, a plano-convex lens, a double convex lens, a plano-concave lens, a double concave lens, an achromatic cemented doublet, or a bandpass filter.
17. The array reader system of embodiment 8, wherein the fluorescence imaging system is designed for use with fluorescein, Cy3, Cy5, or phycoerythrin fluorophores .
18. The array reader system of embodiment 2, wherein the optical imaging system further comprises an illumination system including at least one light source.
19. The array reader system of embodiment 18, wherein the at least one light source is an LED or LED assembly.
20. The array reader system of embodiment 18, wherein the at least one light source is electronically synchronized with the image sensor, the at least one light source being turned on when the image sensor is acquiring an image and turned off when the image sensor is not acquiring an image.
21. The array reader system of embodiment 18, wherein the illumination system is an off-axis illumination system.
22. The array reader system of embodiment 21, wherein the off-axis illumination system satisfies the Scheimpflug condition.
23. The array reader system of embodiment 21, wherein the off-axis illumination system does not satisfy the Scheimpflug condition.
24. The array reader system of embodiment 21, wherein the off-axis illumination subsystem is a Kohler illumination system.
25. The array reader system of embodiment 21, wherein the off-axis illumination system is an Abbe illumination system.
26. The array reader system of embodiment 18, wherein the illumination system is an epi-illumination system.
27. The array reader system of embodiment 26, wherein the epi-illumination system is a Kohler illumination system.
28. The array reader system of embodiment 26, wherein the epi-illumination system is an Abbe illumination system.
29. The array reader system of embodiment 18, wherein the illumination system is a trans-illumination system.
30. The array reader system of embodiment 29, wherein the trans-illumination system is a Kohler illumination system.
31. The array reader system of embodiment 29, wherein the trans-illumination system is an Abbe illumination system.
32. The array reader system of embodiment 2, wherein the optical imaging system further comprises a translation stage.
33. The array reader system of embodiment 32, wherein the translation stage is a single-axis translation stage.
34. The array reader system of embodiment 32, wherein the translation stage is a dual-axis translation stage.
35. The array reader system of embodiment 32, wherein the translation stage is a multi-axis translation stage.
36. The array reader system of embodiment 4, wherein the executable software automatically locates features of the array within the acquired image.
37. The array reader system of embodiment 36, wherein the executable software also performs local background correction by (i) centering a predefined analysis window on each array feature within an image, (ii) calculating an intensity value statistic for signal and background pixels according to a predefined pattern of pixels within the feature, and (iii) utilizing the signal and background intensity value statistics to calculate a background corrected signal intensity value for each feature.
38. The array reader system of embodiment 37, wherein the executable software also performs a k-means clustering analysis of the background corrected signal intensity values for the complete set of array features, thereby determining a dynamic signal intensity threshold for discrimination between labeled and non-labeled features of the array.
39. The array reader system of embodiment 37, wherein the executable software also performs a k-medoids clustering analysis of the background corrected signal intensity values for the complete set of array features, thereby determining a dynamic signal intensity threshold for discrimination between labeled and non-labeled features of the array.
40. The array reader system of embodiment 37, wherein the executable software also performs a mixture model statistical analysis of the background corrected signal intensity values for the complete set of array features, thereby determining a dynamic signal intensity threshold for discrimination between labeled and non-labeled features of the array.
41. The array reader system of embodiment 37, wherein the executable software also performs an empirical analysis based on sorting of background corrected signal intensity values for the complete set of array features, thereby determining a dynamic signal intensity threshold for discrimination between labeled and non-labeled features of the array.
42. The array reader system of embodiment 37, wherein the executable software also performs an empirical analysis based on sorting of pairwise differences in background corrected signal intensity values for the complete set of array features, thereby determining a dynamic signal intensity threshold for discrimination between labeled and non-labeled features of the array.
43. The array reader system of embodiment 37, wherein the executable software also performs one or more statistical analyses of the background corrected signal intensity values for the complete set of array features, thereby determining a dynamic signal intensity threshold for discrimination between labeled and non-labeled features of the array, and wherein the one or more statistical analyses are selected from the list including, but not limited to, k-means clustering, k-medoids clustering, mixture model statistical analysis, or an empirical analysis.
44. The array reader system of embodiment 5, 38, 39, 40, 41, 42, or 43, wherein the executable software also calculates the absolute number of target molecules in a sample based on the number of labeled and non-labeled features detected and the predictions of the Poisson distribution.
45. The array reader system of embodiment 44, wherein the executable software also calculates a confidence interval for the number of target molecules.
46. The array reader system of embodiment 2, wherein the optical imaging system and output unit are combined within a single, stand-alone instrument.
47. The array reader system of embodiment 2, wherein the optical imaging system and output unit are configured as separate instrument modules.
48. The array reader system of embodiment 3 or 5, wherein the absolute number of target molecules in a sample is calculated from the number of labeled and non-labeled features detected and the predictions of the Poisson distribution.
49. The array reader system of embodiment 37, wherein the executable software also performs an analysis of local background corrected signal intensities for the complete set of array features to determine a dynamic signal intensity threshold, and wherein the analysis comprises fitting a model function to the intensity data by varying model parameters.
50. The array reader system of embodiment 37, wherein the executable software also performs an analysis of local background corrected signal intensities for the complete set of array features to determine a dynamic signal intensity threshold, and wherein the analysis comprises maximizing a quality metric relating to a statistical difference between feature intensities above the threshold and feature intensities below the threshold.

## Claims

1. A computer implemented method for performing local background correction of array signal intensity data, the method comprising:
(a) centering a predefined data analysis window on a feature within a digital image of an array;
(b) calculating an intensity value statistic for signal and background pixels according to a predefined pattern of pixels within or around the array feature; and
(c) utilizing the signal and background intensity value statistics to calculate a background corrected signal intensity for the array feature.

2. The computer implemented method of claim 1, further comprising automatically locating the array feature, optionally using a predefined set of fiducial features on the array.

3. The computer implemented method of claim 1 or 2, wherein the intensity value statistic used for calculation of a background corrected signal intensity is selected from the mean, the median, or the ratio of signal to background intensities.

4. The computer implemented method of claim 3, further comprising subtracting the mean or median background intensity from the mean or median signal intensity to determine a background corrected signal intensity value for each array feature.

5. The computer implemented method of any one of claims 1 to 4, comprising: receiving input image data of one or more regions of the array; and calculating the intensity value statistic for the signal and background pixels based on the acquired image data.

6. The computer implemented method of claim 5, comprising acquiring the image data of the one or more regions of the array from an optical imaging system, wherein the optical imaging system is a fluorescence imaging system or a phosphorescence imaging system, and wherein the optical imaging system operates in a transmitted light, reflected light, or scattered light imaging mode, or any combination thereof.

7. The computer implemented method of any one of claims 1 to 6, wherein the array is selected from a microtiter plate, microwell plate, 16-well microscope slide, a spotted microarray, or a microarray fabricated by in situ solid-phase synthesis.

8. The computer implemented method of any one of claims 1 to 7, wherein the array comprises a plurality of features having immobilized probes thereon that are complementary to a set of labels designed for use in stochastic labeling experiments, and wherein there is at least one feature on the array for every label in the label set.

9. The computer implemented method of any one of claims 1 to 8, wherein the array comprises a set of oligonucleotide probes comprising 25-mers.

10. The computer implemented method of claim 9, wherein the set of oligonucleotide probes includes 10%, 20%, 30%, 40%, 50%, 60%, 70%, 80%, or 90% or more of the sequences listed in Table 1.

11. The computer implemented method of claim 9 or 10, wherein the oligonucleotide probes comprise a fluorescein dye, a Cy3 dye, a Cy5 dye, or a phycoerythrin fluorophore.

12. The computer implemented method of any one of claims 1 to 11, wherein the array feature is labeled by stochastic labelling techniques.

13. A system for digital counting of labeled features on an array, comprising:
(i) an array comprising a plurality of features further comprising a plurality of probes optionally wherein one or more regions of an array comprises one or more sub-arrays, and wherein the arrays or sub-arrays are designed for use with sets of stochastic labels;
(ii) an optical instrument configured to form images of one or more regions of the array; and
(iii) a computer implemented method for:
locating array features within array images, and correcting the signal intensity values associated with each feature for local background intensity values in accordance with the computer implemented method of any one of claims 1 to 12;
determining dynamic signal intensity thresholds for the one or more array regions by performing statistical analyses of the corrected signal intensity data for the plurality of features;
counting the number of labeled and non-labeled features on the one or more regions of the array by comparing corrected signal intensity data for the features to signal intensity thresholds; and
calculating the number of target molecules in a sample, for one or more target molecule species, from the number of labeled and non-labeled features detected on the one or more regions of the array.

14. The system of claim 13, wherein the computer implemented method comprises performing one or more statistical analyses of the background corrected signal image intensity data for the complete set of array features to determine a dynamic signal intensity threshold for discriminating between the labeled and non-labeled features of the array.

15. The system of claim 14, wherein determining the dynamic signal intensity threshold for distinguishing the labeled and non-labeled features of the array comprises:
(a) performing, a k-means clustering analysis, a k-medoids clustering analysis, a mixture model statistical analysis, an empirical analysis based on sorting of the background corrected signal intensity for the labeled and non-labeled features, or an empirical analysis based on sorting of pairwise differences in background corrected signal intensity values for the labeled and non-labeled features; or
(b) maximizing a quality metric relating to a statistical difference between feature intensities above the dynamic signal intensity threshold and feature intensities below the dynamic signal intensity threshold.
